(19) Europäisches Patentamt
European Patent Office
Office européen des brevets

(11) **EP 3 955 028 A1**

(12) **EUROPEAN PATENT APPLICATION**
published in accordance with Art. 153(4) EPC

(43) Date of publication:
**16.02.2022  Bulletin 2022/07**

(21) Application number: **20787733.3**

(22) Date of filing: **27.01.2020**

(51) International Patent Classification (IPC):
**G01S 17/95** $^{(2006.01)}$

(52) Cooperative Patent Classification (CPC):
**G01S 17/95;** Y02A 90/10

(86) International application number:
**PCT/JP2020/002798**

(87) International publication number:
**WO 2020/208896 (15.10.2020 Gazette 2020/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **08.04.2019   JP 2019073742**

(71) Applicant: **MITSUBISHI ELECTRIC
CORPORATION
Chiyoda-ku
Tokyo 100-8310 (JP)**

(72) Inventors:
• **KAMEYAMA, Shumpei**
  **Tokyo 100-8310 (JP)**
• **KOTAKE, Nobuki**
  **Tokyo 100-8310 (JP)**
• **KAJIYAMA, Yutaka**
  **Tokyo 100-8310 (JP)**
• **SAKIMURA, Takeshi**
  **Tokyo 100-8310 (JP)**
• **TAKABAYASHI, Mikio**
  **Tokyo 100-8310 (JP)**

(74) Representative: **Plasseraud IP
66, rue de la Chaussée d'Antin
75440 Paris Cedex 09 (FR)**

(54) **WIND MEASUREMENT LIDAR DEVICE**

(57)     The measurement accuracy of the wind speed at a long distance is improved without lowering a wind speed measurement rate at a short distance. A wind measurement lidar device 1 includes: a beam switching unit 8 to switch to another beam direction when beam selection time elapses in one beam direction, the beam selection time being time in which pulses of greater than or equal to a predetermined minimum number of pulses are generated; an integrated spectrum storage unit 12d to store an integrated spectrum obtained by integrating spectra for each of wind speed measurement sections being a combination of a beam direction and a time interval; spectrum integrating units 12c, 12e to generate an integrated spectrum by integrating, for each of the wind speed measurement sections, a plurality of spectra obtained from a plurality of the pulses transmitted in succession in a beam direction and an integrated spectrum being stored in the integrated spectrum storage unit; a wind speed calculating unit 12h to calculate the wind speed when the SN ratio of the integrated spectrum is greater than or equal to a first threshold value; and a stored integrated spectrum correcting unit 12j to store an integrated spectrum integrated for one of the wind speed measurement sections, for which no wind speed is cal-culated, into the integrated spectrum storage unit 12d.

FIG. 1

EP 3 955 028 A1

**Description**

TECHNICAL FIELD

The present disclosure relates to a wind measurement lidar device to measure the wind speed in the atmosphere.

BACKGROUND ART

In the prior art, wind measurement light detection and ranging (lidar) devices to measure the wind are known (see, for example, Patent Literatures 1 and 2 and Non-Patent Literature 1). The wind measurement lidar device transmits laser light to the atmosphere and generates a reception signal by detecting coherently reception light being the laser light scattered by aerosol in the atmosphere, returned and received. The spectrum of the reception signal is analyzed to determine the Doppler frequency shift between the transmission light and the reception light. The Doppler frequency shift represents a Doppler wind speed (wind speed in a line-of-sight direction) which is a component (component in the line-of-sight direction) of the moving speed (wind speed) of aerosol in the transmission direction of the laser light. The wind measurement lidar device measures the Doppler wind speed in this manner.

In the wind measurement lidar device, a measurable distance increases or decreases depending on a change in atmospheric conditions. For example, when the amount of aerosol in the atmosphere is small, the power of light scattered and received by the lidar device is reduced, and the SN ratio (signal-to-noise ratio) of a reception signal is reduced. As the SN ratio of the reception signal decreases, the measurable distance of the lidar device decreases. In Patent Literature 1, a reception signal is analyzed, and a wind measurement lidar device is controlled based on the analysis result. In Patent Literature 1, the number of times of spectrum integration of the reception signal is able to be changed, and the number of times of spectrum integration of the reception signal increases or decreases depending on the SN ratio of the reception signal.

In a wind measurement lidar device mounted on a nacelle of a wind turbine and measures the speed of the wind coming to the wind turbine, there is a period in which transmission light or reception light is blocked by blades of the wind turbine and no valid spectrum is obtained. There is proposed a wind measurement lidar device that determines whether or not there is blocking by blades, from a waveform of a reception signal and does not integrate spectrums when there is blocking (see, for example, Patent Literature 3).

CITATION LIST

PATENT LITERATURES

    Patent Literature 1: EP 2884306 B1
    Patent Literature 2: EP 1589678 B1
    Patent Literature 3: WO 2017/130315 A

NON-PATENT LITERATURES

    Non-Patent Literature 1: T. Ando et al., "All-fiber coherent Doppler technologies at Mitsubishi Electric Corporation," IOP Conference Series: Earth and Environmental Science, Volume 1, 2008.
    Non-Patent Literature 2: D. Schlipf et al., "Field Testing of Feedforward Collective Pitch Control on the CART2 Using a Nacelle-Based Lidar Scanner," Journal of Physics Science Series 555, 012090, 2014.
    Non-Patent Literature 3: IEC 61400-12-1, Edition 2.0, 2017.

SUMMARY OF INVENTION

TECHNICAL PROBLEM

The control method disclosed in Patent Literature 1 has a problem when wind speeds of a plurality of distances are measured in a plurality of directions. In order to measure the wind speed of a long distance, it is necessary to increase the number of times of integration of the spectrum of a reception signal, and the measurement rate of the wind speed at a short distance decreases. Switching the direction of measuring the wind speed at the time when an SN ratio necessary for measurement is obtained at a short distance results in integration of a spectrum in a different direction at the long distance, thereby decreasing the measurement accuracy of the wind speed at the long distance.

An object of the present disclosure is to calculate the wind speed at a long distance in a plurality of beam directions with higher accuracy than in the prior art without decreasing the measurement rate of the wind speed at a short distance.

SOLUTION TO PROBLEM

A wind measurement lidar device according to the present disclosure includes: a light source to output laser light being a continuous wave; an optical divider to divide the laser light outputted from the light source into transmission light and local light; a pulse modulator to pulse-modulate the transmission light; a transmission and reception optical system to transmit the transmission light being pulse-modulated into atmosphere in a plurality of beam directions and to receive reflection light from the plurality of beam directions, the reflection light being the transmission light reflected by particles moving together with the atmosphere, each of the plurality of beam directions being different from each other; a beam switching unit to switch to another one of the plurality of beam directions when beam selection time elapses in one of the plurality of beam directions the beam selection time being time in which a plurality of pulses of greater than or equal to a predetermined minimum number of pulses are generated; a reception detection unit to detect the reflection light by combining the reflection light and the local light and to perform photoelectric conversion to generate a reception signal, the reflection light being obtained for each of the plurality of pulses; a reception signal dividing unit to divide the reception signal into a plurality of time intervals divided in accordance with a distance from the transmission and reception optical system to generate a plurality of divided reception signals; a spectrum calculating unit to calculate a spectrum by performing a Fourier transform on each of the plurality of divided reception signals to calculate a spectrum; an integrated spectrum storage unit to store an integrated spectrum obtained by integrating the spectra of the plurality of divided reception signals for each of wind speed measurement sections, each of wind speed measurement sections being a combination of one of the plurality of beam directions and one of the time intervals; a spectrum integrating unit to generate a first integrated spectrum being the integrated spectrum obtained by integrating, for each of the wind speed measurement sections, a plurality of the spectra each calculated from a plurality of divided reception signals obtained by dividing each of a plurality of the reception signals obtained from the plurality of pulses transmitted in succession in one of the plurality of beam directions and a second integrated spectrum being the integrated spectrum obtained by integrating, for each of the wind speed measurement sections, a plurality of the spectra each calculated from a plurality of divided reception signals obtained by dividing each of a plurality of the reception signals obtained from the plurality of pulses transmitted in succession in one of the plurality of beam directions and a stored integrated spectrum being the integrated spectrum stored in the integrated spectrum storage unit or generating the second integrated spectrum; a spectrum SN ratio calculating unit to calculate an SN ratio of the integrated spectrum for each of the wind speed measurement sections; a wind speed calculating unit to calculate a wind speed in the wind speed measurement section from the integrated spectrum having an SN ratio greater than or equal to a first threshold value; and a stored integrated spectrum correcting unit to initialize the integrated spectrum stored in the integrated spectrum storage unit for the wind speed measurement section for which the wind speed is calculated.

ADVANTAGEOUS EFFECTS OF INVENTION

According to the present disclosure, it is possible to calculate the wind speed at a long distance in a plurality of beam directions with higher accuracy than in the related art without decreasing the measurement rate of the wind speed at a short distance.

BRIEF DESCRIPTION OF DRAWINGS

FIG. 1 is a schematic diagram illustrating the configuration of a wind measurement lidar device according to a first embodiment.
FIG. 2 is a schematic diagram when the wind measurement lidar device is mounted on a wind turbine and beams of laser light are transmitted and received in a plurality of beam directions to measure the wind speed at a front position of the wind turbine.
FIG. 3 is a flowchart illustrating the operation of the wind measurement lidar device according to the first embodiment.
FIG. 4 is a flowchart illustrating the optical transmission and reception operation of the wind measurement lidar device according to the first embodiment.
FIG. 5 is a schematic diagram illustrating the configuration of a modification of the wind measurement lidar device according to the first embodiment.

FIG. 6 is a schematic diagram illustrating the configuration of a wind measurement lidar device according to a second embodiment.

FIG. 7 is a schematic diagram illustrating the configuration of a wind measurement lidar device according to a third embodiment.

FIG. 8 is a schematic diagram illustrating the distance for measuring the wind speed in a wind measurement lidar device according to a fourth embodiment.

FIG. 9 is a schematic diagram illustrating the configuration of the wind measurement lidar device according to the fourth embodiment.

FIG. 10 is a schematic diagram illustrating the configuration of a wind measurement lidar device according to a fifth embodiment.

FIG. 11 is a flowchart illustrating the operation of the wind measurement lidar device according to the fifth embodiment.

FIG. 12 is a graph illustrating changes in a parameter used to evaluate the operation of the wind measurement lidar device against the integration time Tc of the first integrated spectrum.

FIG. 13 includes graphs each illustrating probability distribution functions and a cumulative distribution function against non-blocking rates $x_2$, $x_3$, and $x_4$ used to evaluate the operation of the wind measurement lidar device according to the fifth embodiment.

FIG. 14 includes graphs illustrating the change in the probability related to the number of times of generating the first integrated spectrum against the number of times of generating the first integrated spectrum in the wind measurement lidar device according to the fifth embodiment.

FIG. 15 is a graph illustrating changes in the probability related to the number of times of generating the first integrated spectrum against the integration time Tc of the first integrated spectrum in the wind measurement lidar device according to the fifth embodiment.

FIG. 16 is a graph illustrating changes in the probability that the wind speed cannot be calculated against the number of times of generating the first integrated spectrum in the wind measurement lidar devices according to the fifth embodiment and the first embodiment.

FIG. 17 is a schematic diagram illustrating the configuration of a wind measurement lidar device according to a sixth embodiment.

FIG. 18 is a flowchart illustrating the operation of the wind measurement lidar device according to the sixth embodiment.

FIG. 19 includes graphs illustrating the change in the probability related to the number of times of generating the first integrated spectrum against the number of times of generating the first integrated spectrum in the wind measurement lidar device according to the sixth embodiment.

FIG. 20 is a graph illustrating changes in the probability related to the number of times of generating the first integrated spectrum against the integration time Tc of the first integrated spectrum in the wind measurement lidar device according to the sixth embodiment.

FIG. 21 is a graph illustrating changes in the probability related to the number of times of generating the first integrated spectrum against the integration time Tc of the first integrated spectrum in the wind measurement lidar devices according to the sixth embodiment and the fifth the embodiment.

FIG. 22 is a graph illustrating changes in the probability that the wind speed cannot be calculated against the number of times of generating the first integrated spectrum in the wind measurement lidar devices according to the sixth embodiment and the second modification of the first embodiment.

FIG. 23 is a graph illustrating changes in the unfinished calculation probability against the integration time Tc of the first integrated spectrum in the wind measurement lidar devices according to the sixth, the fifth, and the first embodiments and the second modification of the first embodiment.

FIG. 24 is a schematic diagram illustrating the configuration of a wind measurement lidar device according to a seventh embodiment.

FIG. 25 is a flowchart illustrating the operation of the wind measurement lidar device according to the seventh embodiment.

FIG. 26 is a schematic diagram illustrating the configuration of a wind measurement lidar device according to an eighth embodiment.

FIG. 27 is a flowchart illustrating the operation of the wind measurement lidar device according to the eighth embodiment.

FIG. 28 is a schematic diagram illustrating the configuration of a wind measurement lidar device according to a ninth embodiment.

FIG. 29 is a flowchart illustrating the operation of the wind measurement lidar device according to the ninth embodiment.

FIG. 30 is a schematic diagram illustrating the configuration of a wind measurement lidar device according to a tenth embodiment.

FIG. 31 is a flowchart illustrating the operation of the wind measurement lidar device according to the tenth embodiment.

FIG. 32 is a graph illustrating changes in the probability of improvement of the SN ratio of an integrated spectrum used for calculation of the wind speed and the probability related to the number of times of generating the first integrated spectrum against the number of times of generating the first integrated spectrum in the wind measurement lidar device according to the tenth embodiment.

FIG. 33 is a graph illustrating changes in the probability of improvement of the SN ratio of an integrated spectrum used for calculation of the wind speed and the probability related to the number of times of generating the first integrated spectrum against the integration time Tc of the first integrated spectrum in the wind measurement lidar device according to the tenth embodiment.

FIG. 34 is a schematic diagram illustrating the configuration of a wind measurement lidar device according to an eleventh embodiment.

FIG. 35 is a flowchart illustrating the operation of the wind measurement lidar device according to the eleventh embodiment.

DESCRIPTION OF EMBODIMENTS

First Embodiment

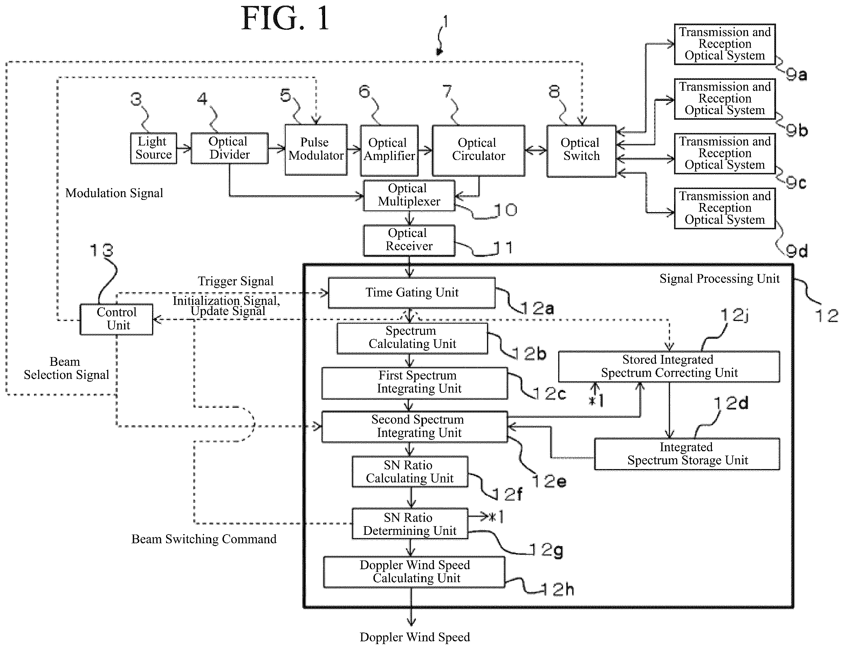

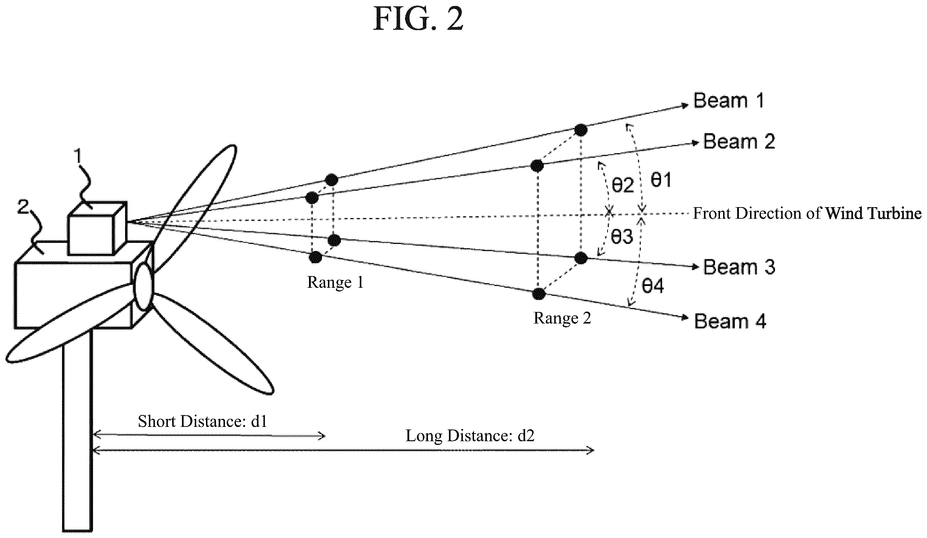

The configuration of a wind measurement lidar device according to a first embodiment is described. FIG. 1 is a schematic diagram illustrating the configuration of the wind measurement lidar device according to the first embodiment. A wind measurement lidar device 1 measures the wind speed of the wind at a front position of and in a front direction of a wind turbine 2 (illustrated in FIG. 2). The wind measurement lidar device 1 mainly includes a light source 3, an optical divider 4, a pulse modulator 5, an optical amplifier 6, an optical circulator 7, an optical switch 8, transmission and reception optical systems 9a, 9b, 9c, and 9d, an optical multiplexer 10, an optical receiver 11, a signal processing unit 12, and a control unit 13.

The wind measurement lidar device 1 includes the four transmission and reception optical systems 9a, 9b, 9c, and 9d. Each of the transmission and reception optical systems 9a, 9b, 9c, and 9d transmits and receives in a beam direction determined with respect to the front direction of the wind turbine 2 for each of the transmission and reception optical systems 9a, 9b, 9c, and 9d. Each of the transmission and reception optical systems 9a, 9b, 9c, and 9d emits transmission light, which is pulse-modulated, into the atmosphere in a predetermined beam direction, and receives reflection light reflected by aerosol in the atmosphere in the beam direction. The aerosol is particles that move together with the atmosphere. The number of transmission and reception optical systems may be two, three, or five or more. Each of the transmission and reception optical systems 9a, 9b, 9c, and 9d transmits and receives a beam of laser light in different beam directions.

The light source 3 oscillates and outputs laser light that is a continuous wave having a single frequency. The optical divider 4 divides the laser light outputted from the light source 3 into two: transmission light and local light. The pulse modulator 5 performs modulation (pulse modulation) on the transmission light inputted from the optical divider 4 and applies a predetermined frequency shift. The pulse modulator 5 generates laser light having an intermediate frequency in coherent detection described later. Examples of the pulse modulator 5 having such a function include acousto-optic frequency shifters. The optical amplifier 6 amplifies the transmission light that is pulse-modulated. The optical circulator 7 outputs the laser light inputted from the optical amplifier 6 to the optical switch 8, and outputs laser light inputted from the optical switch 8 to the optical multiplexer 10. The optical amplifier 6 is necessary for measuring the wind speed at a point farther than a distance at which the wind speed can be measured when the amplification is not performed. When measurement can be performed for a distance to be measured without amplifying the transmission light by the optical amplifier 6, the wind measurement lidar device 1 may not include the optical amplifier 6.

The optical switch 8 selects any one of the four transmission and reception optical systems 9a, 9b, 9c, and 9d and outputs the transmission light by switching the transmission light. The optical switch 8 switches reflection light received by the transmission and reception optical systems 9a, 9b, 9c, and 9d and outputs the reflection light to the optical circulator 7. For example, by selecting the transmission and reception optical systems 9a, 9b, 9c, and 9d in this order, the optical switch 8 transmits and receives laser light in beam directions of, for example, Beam 1 -> Beam 2 -> Beam 3 -> Beam 4 as illustrated in FIG. 2. The order of transmitting and receiving laser light in respective beam directions may not always be the same.

The optical multiplexer 10 combines the local light and reception light (reflection light). The optical receiver 11 detects coherently the laser light combined by the optical multiplexer 10. A signal detected and converted photoelectrically by the optical receiver 11 is sent to the signal processing unit 12 as a reception signal. The signal processing unit 12 calculates the Doppler wind speed for each of the distances from the reception signal. The control unit 13 controls each of the components.

The optical multiplexer 10 and the optical receiver 11 constitute a reception detection unit that detects reflection light obtained for each pulse by combining the reflection light and the local light and performs photoelectric conversion to generate a reception signal.

The signal processing unit 12 includes a time gating unit 12a, a spectrum calculating unit 12b, a first spectrum integrating unit 12c, an integrated spectrum storage unit 12d, a second spectrum integrating unit 12e, an SN ratio calculating unit 12f, an SN ratio determining unit 12g, a Doppler wind speed calculating unit 12h, and a stored integrated spectrum correcting unit 12j.

The time gating unit 12a divides the reception signal inputted from the optical receiver 11 into reception signals that are divided by a time gate. A time gate is a dividing point in time at which a reception signal is divided. The time gating unit 12a determines the timing of a time gate in accordance with a trigger signal inputted from the control unit 13. The trigger signal is generated at timing at which a reference event, such as timing at which transmission of transmission light starts, occurs. A time gate divides a reception signal by the time elapsed from transmission of transmission light. Therefore, the reception signal divided by a time gate is divided depending on the distance from the wind measurement lidar device 1. An interval of time divided by the time gate is referred to as a time interval. Time intervals are divided so that a distance from the wind measurement lidar device 1 (strictly speaking, a transmission and reception optical system) can be divided as intended. Each of the divided distance ranges is referred to as a measurement distance range. A reception signal is divided into a plurality of time intervals, which is referred to as divided reception signals. One divided reception signal corresponds to one measurement distance range. The time gating unit 12a corresponds to a reception signal dividing unit that generates the divided reception signal.

The spectrum calculating unit 12b performs Fourier transform on each of the reception signals (divided reception signals) divided by the time gate and calculates a spectrum of the divided reception signal at each distance. The first spectrum integrating unit 12c integrates spectra calculated by the spectrum calculating unit 12b for each reception signal that is obtained by transmitting pulses of the transmission light and for each time interval. The spectrum integrated by the first spectrum integrating unit 12c is referred to as a first integrated spectrum.

The integrated spectrum storage unit 12d stores a spectrum integrated by repeating transmission of a plurality of times of pulses in the same beam direction zero times or more. The integrated spectrum storage unit 12d has a function of storing spectrum data regarding each beam direction and each distance (A x B pieces of spectrum data when the number of measurement distance ranges is A and the number of beams is B). That is, the integrated spectrum storage unit 12d stores only one piece of spectrum data for each beam direction and each distance. Spectrum data stored in the integrated spectrum storage unit 12d is data of integrated spectra, each of which obtained by integrating a plurality of spectra.

The integrated spectrum storage unit 12d stores an integrated spectrum, obtained by integrating spectra of a plurality of divided reception signals, for each wind speed measurement section. A wind speed measurement section is a combination of a beam direction and a time interval. Meanwhile, the first spectrum integrating unit 12c generates the first integrated spectrum by integrating a plurality of spectra for each wind speed measurement section. The first integrated spectrum is an integrated spectrum obtained by integrating a plurality of spectra for each wind speed measurement section. Each of the plurality of spectra is obtained by performing a Fourier transform on each of a plurality of the divided reception signals having a beam direction and a time interval that are determined by the wind speed measurement section. Each of the plurality of divided reception signals is a divided reception signal generated by dividing a plurality of reception signals, and is obtained from each of a plurality of pulses transmitted in succession in that beam direction.

The second spectrum integrating unit 12e integrates spectra, including a spectrum stored in the integrated spectrum storage unit 12d. The second spectrum integrating unit 12e integrates the first integrated spectrum and an integrated spectrum stored in the integrated spectrum storage unit 12d. The integrated spectrum stored in the integrated spectrum storage unit 12d is referred to as a stored integrated spectrum. A spectrum integrated by the second spectrum integrating unit 12e is referred to as the second integrated spectrum. The second integrated spectrum is an integrated spectrum obtained by integrating a plurality of spectra for each wind speed measurement section. The second integrated spectrum is an integrated spectrum obtained by integrating the stored integrated spectrum and the first integrated spectrum.

The SN ratio calculating unit 12f calculates the SN ratio of the second integrated spectrum integrated by the second spectrum integrating unit 12e. The SN ratio determining unit 12g determines whether or not the SN ratio of the second integrated spectrum is greater than or equal to a first threshold value. The Doppler wind speed calculating unit 12h is a wind speed calculating unit that calculates a Doppler frequency shift and a Doppler wind speed (abbreviated as wind speed) from the integrated spectrum when the SN ratio of the integrated spectrum is greater than or equal to the first threshold value.

In FIG. 1, optical devices are connected by an optical fiber. Each connection is made by an optical fiber between the light source 3 and the optical divider 4, between the optical divider 4 and each of the pulse modulator 5 and the optical multiplexer 9, between the pulse modulator 5 and the optical amplifier 6, between the optical amplifier 6 and the optical circulator 7, between the optical circulator 7 and the optical switch 8, between the optical switch 8 and each of the four transmission and reception optical systems 9a, 9b, 9c, and 9d, between the optical circulator 7 and the optical multiplexer 10, and between the optical multiplexer 10 and the optical receiver 11. The wind measurement lidar device illustrated in FIG. 1 is a wind measurement lidar device having a so-called optical fiber type circuit configuration; however, it is not particularly necessary to have this configuration.

In FIG. 1, an electrical signal line is provided between devices. Each connection is made by an electrical signal line between the optical receiver 11 and the time gating unit 12a, between the control unit 13 and the pulse modulator 5, between the control unit 13 and the optical switch 8, between the control unit 13 and the time gating unit 12a, between the control unit 13 and the integrated spectrum storage unit 12d, between the control unit 13 and the SN ratio determining unit 12f, and between the control unit 13 and the stored integrated spectrum correcting unit 12j. The optical switch 8 outputs transmission light to any one of the transmission and reception optical systems 9a, 9b, 9c, and 9d based on a beam selection signal from the control unit 13. The optical switch 8 also receives reflection light from any one of the transmission and reception optical systems 9a, 9b, 9c, and 9d based on the beam selection signal from the control unit 13.

The control unit 13 sends the beam selection signal to the optical switch 8. The beam selection signal is a signal for switching the beam direction to another beam direction. When beam selection time, which is time in which pulses of greater than or equal to a predetermined minimum number of pulses are generated in one beam direction, elapses, a beam selection signal is sent to the optical switch 8. The optical switch 8, the transmission and reception optical systems 9a, 9b, 9c, and 9d, and the control unit 13 constitute a beam switching unit that switches the beam direction.

The wind measurement lidar device 1 illustrated in FIG. 1 measures the wind speed by employing a principle, that is, a so-called coherent system. A wind measurement lidar device of a coherent system is disclosed in Non-Patent Literature 1.

The operation of the wind measurement lidar device 1 is described. Here, a case where the wind measurement lidar device 1 is mounted on a nacelle of a wind turbine 2 as illustrated in FIG. 2 is described as an example. The wind measurement lidar device 1 is mounted on a nacelle of the wind turbine 2. The wind measurement lidar device 1 measures the wind speed at a front position in the front direction of the wind turbine 2 and predicts an incoming wind speed (inflow wind speed). The incoming wind is wind that arrives at the wind turbine 2 from the front position in the front direction thereof and rotates the wind turbine 2. The incoming wind speed is a wind speed of the incoming wind. Based on the predicted incoming wind speed, the wind turbine 2 is controlled so as to maximize the power generation amount of the wind turbine 2 or minimize the load on the wind turbine 2. In the example illustrated in FIG. 2, the number of beams of laser light transmitted to and received from the wind measurement lidar device 1 is four including Beam 1, Beam 2, Beam 3, and Beam 4. Each of the beams forms an angle of $\theta 1$, $\theta 2$, $\theta 3$, and $\theta 4$ with respect to the front direction of the wind turbine. These beams are transmitted and received in different directions separated from each other. Furthermore, transmission and reception are performed in a switched manner in time-series, for example, in the order of Beam 1, Beam 2, Beam 3, and Beam 4, and wind speeds are measured in a plurality of beam directions and a plurality of distances. The incoming wind speed to the wind turbine 2 is predicted based on the wind speeds in the four directions measured in this manner. Here, it is assumed that the laser light transmitted and received from the transmission and reception optical systems 9a, 9b, 9c, and 9d are Beam 1, Beam 2, Beam 3, and Beam 4 illustrated in FIG. 2, respectively. In each of the beams, the wind speed is measured at two points of a short distance d1 and a long distance d2.

When pulsed transmission light is transmitted into the atmosphere, the transmission light is reflected by aerosol present at different distances from the wind measurement lidar device 1 (strictly speaking, an optical transmission and reception optical system 9) to become reflection light. The reflection light is temporally longer than the transmission light. Reflection light reflected at the short distance d1 is received by an optical transmission and reception optical system 9 earlier than reflection light reflected at the long distance d2. That is, time elapses from transmission of transmission light to reception of reflection light by an optical transmission and reception optical system 9 is proportional to the distance from the optical transmission and reception optical system 9 to the position of the reflection. Dividing a reception signal generated from the reflection light by time means to divide the reception signal depending on a distance from the optical transmission and reception optical system 9 to the position of the reflection.

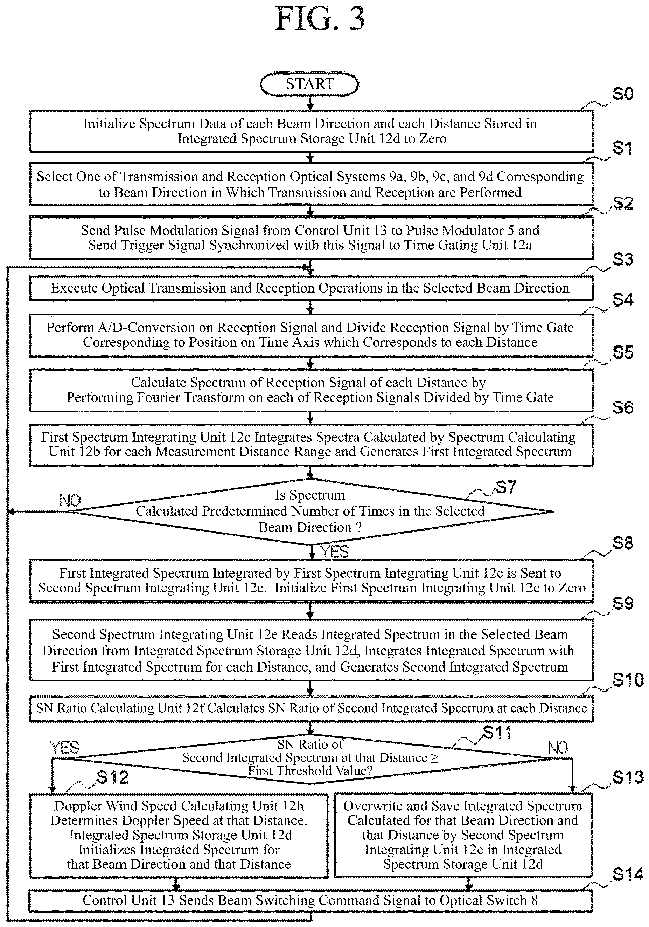

The operation of the wind measurement lidar device 1 is described by referring to FIG. 3. FIG. 3 is a flowchart illustrating the operation of the wind measurement lidar device. First, the control unit 13 sends an initialization signal to the stored integrated spectrum correcting unit 12j. The stored integrated spectrum correcting unit 12j initializes spectrum data regarding each beam direction and each distance stored in the integrated spectrum storage unit 12d to zero (step S0).

Next, the control unit 13 sends a beam selection signal to the optical switch 8 and the second spectrum integrating unit 10e. The optical switch 8 selects one of the transmission and reception optical systems 9a, 9b, 9c, and 9d that corresponds to the beam direction in which a beam of laser light is transmitted and received (step S1).

Next, the control unit 13 sends a pulse modulation signal to the pulse modulator 5 and sends a trigger signal synchronized with this signal to the time gating unit 12a (step S2).

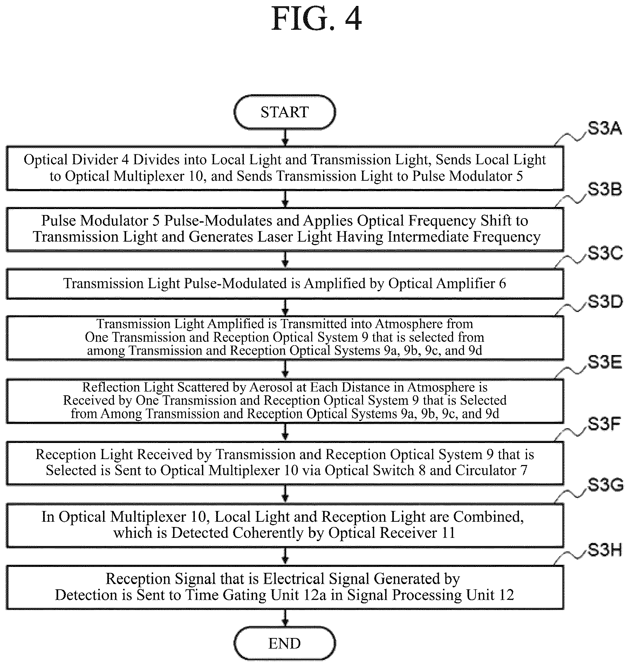

In a state where such an operation is performed, the following optical transmission and reception operation (step S3) is executed. A reception signal generated by the optical transmission and reception operation is sent to the time gating unit 12a of the signal processing unit 12. The optical transmission and reception operation is described by referring to FIG. 4. FIG. 4 is a flowchart illustrating the optical transmission and reception operation of the wind measurement lidar device.

First, laser light which is a continuous wave from the light source 3 is divided into local light and transmission light by the optical divider 4. The local light is sent to the optical multiplexer 10, and the transmission light is sent to the pulse modulator 5 (step S3A). The pulse modulator 5 pulse-modulates and applies a frequency shift to the transmission light and generates laser light having an intermediate frequency in coherent detection (step S3B). The transmission light that is pulse-modulated is amplified by the optical amplifier 6 (step S3C). The transmission light that is amplified is transmitted into the atmosphere from one transmission and reception optical system 9 that is selected, from among the transmission and reception optical systems 9a, 9b, 9c, and 9d, by the optical switch 8 in accordance with the control signal from the control unit 13 (step S3D). The transmission light is transmitted into the atmosphere through a route via the light source 3, the optical divider 4, the pulse modulator 5, the optical amplifier 6, the optical circulator 7, the optical switch 8, and a transmission and reception optical system 9.

The transmission light is scattered (reflected) by the aerosol at each distance in the atmosphere while being subjected to a Doppler frequency shift corresponding to the wind speed. The scattered (reflected) laser light is received by one transmission and reception optical system 9 that is selected from among the transmission and reception optical systems 9a, 9b, 9c, and 9d (step S3E). Reception light (reflection light) received by the selected transmission and reception optical system 9 is sent to the optical multiplexer 10 via the optical switch 8 and the optical circulator 7 (step S3F). In the optical multiplexer 10, the local light and the reception light (reflection light) are combined. The combined reflection light is detected coherently by the optical receiver 11 (step S3G). The reception signal that is an electrical signal generated by detection is sent to the time gating unit 12a in the signal processing unit 12 (step S3H).

The signal processing unit 12 performs A/D conversion in synchronization with a trigger signal from the control unit 13 to the time gating unit 12a to convert the reception signal into a digital signal. The time gating unit 12a divides the reception signal that is a digital signal by a time gate corresponding to a position on the time axis which corresponds to each distance (measurement distance range) (step S4). A measurement distance range corresponds to a time interval. The measurement distance range is also referred to as a distance range.

Next, the spectrum calculating unit 12b calculates the spectrum of a divided reception signal corresponding to each distance by performing Fourier transform on each of the plurality of divided reception signals which is respective reception signals divided by the time gate (step S5).

The first spectrum integrating unit 12c integrates the spectra calculated by the spectrum calculating unit 12b for each measurement distance range (step S6).

Whether or not the spectrum is calculated a predetermined number of times in the selected beam direction is checked (step S7). If the spectrum is not calculated the predetermined number of times (NO in S7), the process returns to S3.

If the spectrum is calculated the predetermined number of times (YES in S7), the first integrated spectrum integrated by the first spectrum integrating unit 12c is sent to the second spectrum integrating unit 12e. The integrated spectrum remaining in the first spectrum integrating unit 12c after the transmission is initialized to zero (step S8). In the operation of S8, the data stored in the integrated spectrum storage unit 12d is not changed.

Instead of the number of times the spectrum is calculated in the beam direction, beam selection time, which is the time while the transmission and reception optical system 9 corresponding to one beam direction is selected, may be used. When beam selection time elapses, the integration of the first integrated spectrum by the first spectrum integrating unit 12c may be terminated, and integration of spectra by the second spectrum integrating unit 12e may be performed. The beam selection time is the time while greater than or equal to a predetermined minimum number of pulses are generated. The minimum number of pulses is determined such that the SN ratio of an integrated spectrum integrated at least for a wind speed measurement section corresponding to the shortest distance is greater than or equal to the first threshold value in all beam directions.

The beam selection time while a beam direction is selected and the number of pulses generated in a beam direction (the number of generated pulses) may not always be constant. A lower limit value for the beam selection time or the number of generated pulses is required to be set so that pulses greater than or equal to the minimum number of pulses are generated. An upper limit value may be set, and the beam selection time may be caused to be changed so as to be less than or equal to the upper limit value. The upper limit value of the beam selection time may be set to be less than or equal to the longest cycle in which the wind speed at the shortest distance is measured. The longest cycle may be set depending on an update rate of the wind speed at a short distance.

Next, the second spectrum integrating unit 12e reads a stored integrated spectrum corresponding to the selected beam direction and the selected distance from among the integrated spectra stored in the integrated spectrum storage unit 12d for each distance and each beam direction. Then, the second spectrum integrating unit 12e further integrates the integrated spectrum read from the integrated spectrum storage unit 12d and the integrated spectrum integrated by the first spectrum integrating unit 12c in S8 for each distance (step S9). The integrated spectrum generated in S9 is the second integrated spectrum.

Next, the SN ratio calculating unit 12f calculates the SN ratio of the integrated spectrum at each distance from the peak of the integrated spectrum obtained in S9 and the noise level (step S10).

Next, the SN ratio determining unit 12g compares the SN ratio of the integrated spectrum at each distance that is calculated in S10 with the predetermined first threshold value for each distance (step S11).

With respect to the distance at which the SN ratio of the integrated spectrum is greater than or equal to the first threshold value (YES in S11), in step S12, the Doppler wind speed calculating unit 12h determines the Doppler frequency shift from the peak frequency of the spectrum obtained in S9 and determines the Doppler wind speed (wind speed) with a calculation equation determined from the Doppler frequency shift. Furthermore, the control unit 13 sends an initialization signal to the stored integrated spectrum correcting unit 12j. The stored integrated spectrum correcting unit 12j initializes (resets to zero) the values of spectrum data stored in the integrated spectrum storage unit 12d for the beam direction and the distance (wind speed measurement section) for which the wind speed is calculated. In the wind measurement lidar device 1, when the SN ratio of the second integrated spectrum is greater than or equal to the first threshold value in each wind speed measurement section, the wind speed is calculated from the second integrated spectrum.

Regarding a distance at which the SN ratio of the integrated spectrum is not greater than or equal to the first threshold value (NO in S11), the control unit 13 sends an update signal to the stored integrated spectrum correcting unit 12j. The stored integrated spectrum correcting unit 12j receiving the update signal overwrites and saves the spectrum data integrated by the second spectrum integrating unit 12e in S9 in the integrated spectrum storage unit 12d as the integrated spectrum of the corresponding wind speed calculation section (step S13). That is, when the Doppler wind speed calculating unit 12h does not calculate the Doppler wind speed, the stored integrated spectrum correcting unit 12j stores the second integrated spectrum into the integrated spectrum storage unit 12d.

The control unit 13 sends a beam switching command signal to the optical switch 8 (step S14). It is only required that S14 be performed after YES in S7 and before S3 is executed.

By causing operation as in S0 to S14, the wind speed can be measured for the long distance with a low SN ratio in the spectrum of a reception signal. Furthermore, unlike in the prior art, only spectra obtained from pulses transmitted and received in a beam direction can be integrated. Spectra obtained from pulses in different beam directions are not mixed upon integration of spectra. Therefore, the wind measurement lidar device 1 can measure the wind speed in each direction and at each distance with high accuracy. In addition, since the time for beam direction switching itself is not long, the measurement rate does not decrease particularly in a short distance range in which a higher SN ratio is expected.

In the wind measurement lidar device 1, the number of beams is four, and the number of distance ranges for measuring the wind speed is two. It is only required that both the number of beams and the number of distance ranges be any number greater than or equal to two.

The effects achieved by the wind measurement lidar device 1 are particularly effective when this device is mounted on a wind turbine and the incoming wind speed is predicted. Since a wind field at a short distance arrives in a short time, it is necessary to measure the wind speed at a short distance in short cycles. The wind measurement lidar device 1 can measure the wind speed at a short distance in short cycles. Since a distant wind field takes time to arrive, the demand for measuring in short cycles is not high; however, it is necessary to obtain information of the wind speed certainly with a required accuracy. The wind measurement lidar device 1 can measure the wind speed certainly with a required accuracy at the long distance.

In the wind measurement lidar device 1, the number of transmission and reception optical systems is equal to the number of beam directions (In the example illustrated in FIG. 2, the number of transmission and reception optical systems is four, and the number of beam directions is four.). It is possible to have a single transmission and reception optical system by using a transmission and reception optical system of a type in which beams are transmitted and received in a plurality of directions (beam directions) by one series of optical systems disclosed in Patent Literature 2 as the transmission and reception optical system. That is, in a wind measurement lidar device according to the present disclosure, it is required that the number of beam directions be plural, whereas the number of transmission and reception optical systems is not necessarily plural. A plurality of transmission and reception optical systems of a type that transmits and receives beams in a plurality of directions may be used.

The wind measurement lidar device is mounted on a wind turbine and transmits transmission light, which is pulsed laser light, into the atmosphere in a plurality of beam directions determined with respect to a front direction of the wind turbine and measures the wind speed at each of a plurality of distances from the wind turbine in each of the beam directions from a Doppler frequency shift of reflection light, which is the transmission light reflected by particles moving together with the atmosphere, with respect to the transmission light.

Modification

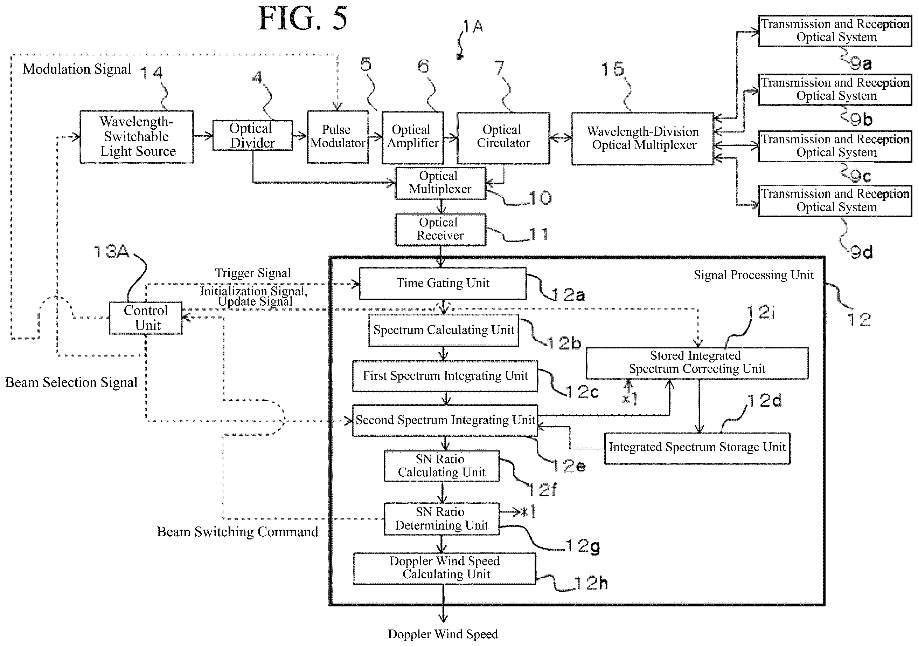

As another method of selecting a direction (beam direction) in which a beam of laser light is transmitted and received, a configuration illustrated in FIG. 5 may be used. FIG. 5 is a schematic diagram illustrating the configuration of a modification of the wind measurement lidar device. Differences between FIG. 5 and FIG. 1 are described. A wind measurement lidar device 1A includes a wavelength-switchable light source 14 instead of the light source 3 and a wavelength-division optical multiplexer 15 instead of the optical switch 8. In addition to the function of the light source 3, the wavelength-switchable light source 14 can output laser lights of four types of wavelengths $\lambda 1$, $\lambda 2$, $\lambda 3$, and $\lambda 4$. Based on the wavelength selection signal from a control unit 13A, the wavelength-switchable light source 14 outputs a laser light of an instructed wavelength. The wavelength-division optical multiplexer 15 has four input and output ports and switches ports for outputting a laser light depending on the wavelength of a laser light inputted thereto. The number of wavelengths may not be four. The wavelength-switchable light source only is required to output laser lights having a plurality of different wavelengths.

Variables $\lambda 1$, $\lambda 2$, $\lambda 3$, and $\lambda 4$ are used to express wavelengths of laser lights outputted from the wavelength-switchable light source 14. The wavelengths of laser lights outputted to the respective ports of the wavelength-division optical multiplexer 15 are set to $\lambda 1$, $\lambda 2$, $\lambda 3$, and $\lambda 4$, which are equal to the wavelengths of the laser lights that the wavelength-switchable light source 14 outputs. Furthermore, any one of the transmission and reception optical systems 9a, 9b, 9c, and 9d is connected to one of the ports. With these arrangements, it is possible to select a port from which the wavelength-division optical multiplexer 15 outputs a laser light, that is, a beam direction by switching the wavelength selection signal to be sent from the control unit 13 to the wavelength-switchable light source 14. If the other operations are equal to those in FIG. 1, the same operations as those of the wind measurement lidar device in FIG. 1 can be performed to obtain the same effects.

In general, there is an upper limit number of times for switching the optical switch. There are cases where the lifetime of the entire device is determined when the number of times of switching of an optical switch reaches the upper limit number of times. If the configuration including the wavelength-switchable light source 14 and the wavelength-division optical multiplexer 15 is used instead of the optical switch, the problem of the life of optical switches can be moderated, thereby contributing to extension of the life of the entire device.

The first spectrum integrating unit 12c and the second spectrum integrating unit 12e constitute a spectrum integrating unit to generate a second integrated spectrum obtained by integrating, for each wind speed measurement section, a plurality of the spectra each calculated from a plurality of the divided reception signals obtained by dividing each of a plurality of reception signals obtained from a plurality of the pulses transmitted in succession in a beam direction and an integrated spectrum stored in the integrated spectrum storage unit 12d or generating the first integrated spectrum obtained by integrating, for each wind speed measurement section, the second integrated spectrum and a plurality of spectra each calculated from a plurality of divided reception signals obtained by dividing a plurality of reception signals obtained from a plurality of pulses transmitted in succession in a beam direction. The first spectrum integrating unit may read the integrated spectrum stored in the integrated spectrum storage unit 12d before starting the integration and integrate the spectra of the divided reception signals with the integrated spectrum that is read. In that modification, the first spectrum integrating unit 12c serves as a spectrum integrating unit to generate the second integrated spectrum, and thus the second spectrum integrating unit is not necessary.

In the wind measurement lidar device 1, the wind speed is not calculated from the first integrated spectrum; however, the wind speed may be calculated from the first integrated spectrum in which the SN ratio is greater than or equal to the first threshold value. An integrated spectrum to be compared with the first threshold value is the second integrated spectrum in the first embodiment. The SN ratio of the first integrated spectrum may be compared with the first threshold value, and the SN ratio of the second integrated spectrum may be compared with the first threshold value when the SN ratio of the first integrated spectrum is not greater than or equal to the first threshold value.

The spectrum integrating unit is required to be able to determine an integrated spectrum obtained by integrating at least a part of spectra (referred to as spectra generated after previous-time) obtained from divided reception signals of a plurality of pulses transmitted after the previous calculation of the wind speed for each wind speed measurement section that is a combination of a beam direction and a time interval.

In the wind measurement lidar device 1, the SN ratio determination is performed for each beam. Regarding the spectrum data at each distance obtained by the second spectrum integrating unit 12e, regarding beams for measuring the wind speed at the same altitude, whether or not the SN ratio exceeds the first threshold value may be determined for all of these beams at each distance. That is, when the SN ratio of an integrated spectrum is greater than or equal to the first threshold value in all of a plurality of wind speed measurement sections at the same distance and at the same altitude, the Doppler wind speed calculating unit may calculate the wind speed in all of the plurality of wind speed measurement sections at the same distance and at the same altitude. When there is the wind speed measurement section in which the SN ratio of an integrated spectrum is not greater than or equal to the first threshold value among a plurality of wind speed measurement sections at the same distance and at the same altitude, the wind speed is calculated in none of the plurality of wind speed measurement sections at the same distance and at the same altitude. Specifically, in FIG. 2, it is determined whether or not the SN ratio is greater than or equal to the first threshold value in both Beam 1 and Beam 2. When the SN ratio is greater than or equal to the first threshold value in both Beam 1 and Beam 2, the wind speed is measured for Beam 1 and Beam 2 at that distance. Furthermore, it is determined whether or not the SN ratio is greater than or equal to the first threshold value in both Beam 3 and Beam 4. When the SN ratio is greater than or equal to the first threshold value in both Beam 3 and Beam 4, the wind speed is measured for Beam 3 and Beam 4 at that distance. This makes it possible to equalize the time required for wind speed measurement at each altitude at each distance.

When integrated spectra satisfy the condition for calculating the wind speed in all of the plurality of wind speed measurement sections at the same distance and at the same altitude, the wind speeds in all of the plurality of wind speed measurement sections at the same distance and at the same altitude are calculated.

Regarding the determination as to whether or not the SN ratio of an integrated spectrum is greater than or equal to the first threshold value, the number of times of storing the integrated spectrum into the integrated spectrum storage unit 12d is counted when the SN ratio is less than the first threshold value. When the counted number reaches a predetermined maximum value, the counted number may be reset to zero, and the integrated spectrum stored in the integrated spectrum storage unit 12d may be initialized. In this method, a significant decrease in measurement accuracy due to an excessive measurement time of wind speed measurement can be moderated. Here, when the SN ratio of the integrated spectrum does not reach a required SN ratio and the counted number reaches the maximum value, the fact that the wind speed measurement cannot be performed is outputted as data. The required SN ratio is the first threshold value to be compared with the SN ratio of an integrated spectrum.

In addition, in the wind measurement lidar device, a situation occurs in which the SN ratio of the integrated spectrum in some beam direction does not reach the required SN ratio when beams are scanned once, that is, for example, each of the beams are measured once such as Beam 1 -> Beam 2 -> Beam 3 -> Beam 4. In this situation, for data of a beam in which the SN ratio of the integrated spectrum does not reach the required SN ratio, a flag indicating that integration is being carried out is outputted. In addition, since performing integration for excessively long time leads to significant deterioration in the measurement accuracy of the wind speed, an upper limit number of times is determined for the number of times of scanning used for integration, that is, the number of times of measuring the beam direction (the number of times of successive integration). When the SN ratio of the integrated spectrum does not reach the required SN ratio after the first integrated spectra are integrated up to the upper limit number of times, a flag indicating that wind speed measurement is in trouble is outputted as data. In addition to the calculation result of the wind speed and the SN ratio at the time of calculation, data of the two types of flags described above (that integration is being carried out or that wind speed measurement is in trouble) and the number of times of scanning used for the integration (what number of times of scanning is currently performed against the upper limit number of times) are outputted for each scanning. With this arrangement, the measurement result in the wind measurement lidar device can be utilized in real time.

When the upper limit number of times of scanning is set, the stored integrated spectrum correcting unit operates as follows. For the wind speed measurement section in which the SN ratio of an integrated spectrum is less than the first threshold value, the stored integrated spectrum correcting unit stores the integrated spectrum integrated by the second spectrum integrating unit into the integrated spectrum storage unit when the number of times of successive integration, which is the number of times an integrated spectrum is stored in the integrated spectrum storage unit after initialization of the integrated spectrum storage unit, is less than the upper limit number of times. When the number of times of successive integration is greater than or equal to the upper limit number of times, the stored integrated spectrum correcting unit initializes the integrated spectrum stored in the integrated spectrum storage unit.

The above also applies to other embodiments.

Second Embodiment

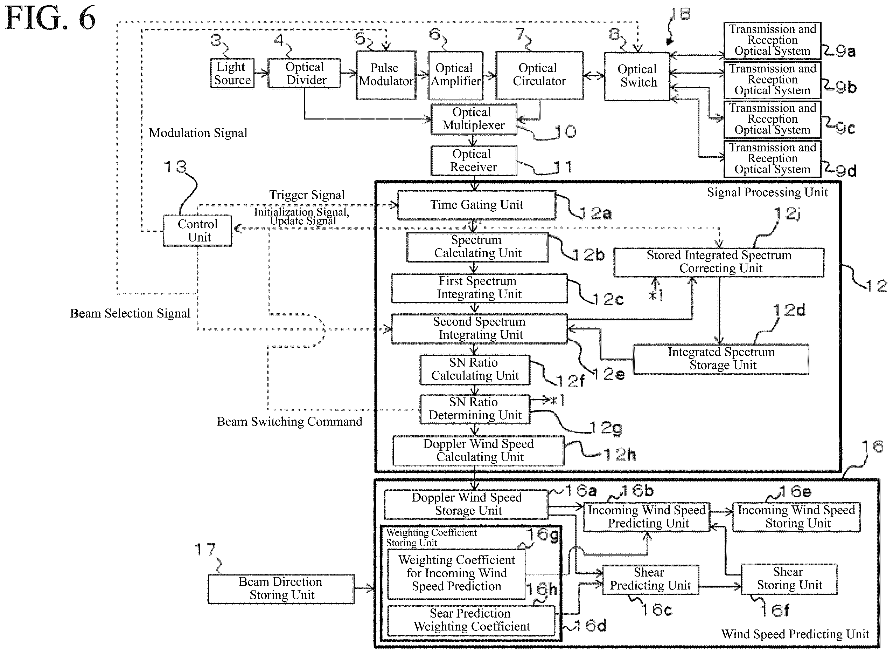

A second embodiment is an embodiment in which the first embodiment is modified so that the wind speed and the shear of an incoming wind of a wind turbine are predicted. A shear is a rate of change in the altitude direction of a value of a component of the wind speed in the front direction of a wind turbine. FIG. 6 is a schematic diagram illustrating the configuration of a wind measurement lidar device according to the second embodiment. In FIG. 6, points that are different from FIG. 1 of the first embodiment are described.

A wind measurement lidar device 1B includes a wind speed predicting unit 16 and a beam direction storing unit 17. The wind speed predicting unit 16 predicts the wind speed and the shear of the incoming wind of the wind turbine based on the wind speed (Doppler wind speed) calculated by the signal processing unit 12. The wind speed predicting unit 16 mainly includes a Doppler wind speed storage unit 16a, an incoming wind speed predicting unit 16b, a shear predicting unit 16c, a weighting coefficient storing unit 16d, an incoming wind speed storing unit 16e, and a shear storing unit 16f. The Doppler wind speed storage unit 16a stores the wind speed calculated by the signal processing unit 12. The wind speed is stored with measurement time for each distance (time interval) and for each beam direction. That is, the wind speed is stored for each wind speed measurement section that is a combination of the beam direction and a time interval. The Doppler wind speed storage unit 16a is referred to by the incoming wind speed predicting unit 16b and the shear predicting unit 16c.

The incoming wind speed predicting unit 16b predicts the incoming wind speed at the wind turbine based on the wind speed. The incoming wind speed predicting unit 16b predicts the incoming wind speed at the wind turbine by weighting and averaging the wind speeds in each wind speed measurement section. The shear predicting unit 16c predicts the shear based on the wind speed. The shear predicting unit 16c calculates, by weighted averaging, an average shear obtained by calculating the shears for a plurality of distances and averaging the shears.

A weighting coefficient storing unit 16d stores a weighting coefficient for incoming wind speed prediction 16g used by the incoming wind speed predicting unit 16b and a shear prediction weighting coefficient 16h used by the shear predicting unit 16c. An incoming wind speed storing unit 16e stores the incoming wind speed predicted by the incoming wind speed predicting unit 16b. A shear storing unit 16f stores the shear predicted by the shear predicting unit 16c.

The beam direction storing unit 17 stores angles representing a plurality of beam directions in which the wind measurement lidar device 1B transmits laser light. Angles representing a beam direction refers to an azimuth angle, an elevation angle, and a crossing angle with respect to the front direction of the wind turbine 2. The front direction is on a horizontal plane. The crossing angle is an angle between the front direction and the beam direction when the start points of the front direction of the wind turbine 2 and the beam direction are made to be at the same position. An azimuth angle is an angle formed by the beam direction and the front direction when the beam direction is projected on the horizontal plane. An elevation angle is an angle formed by the horizontal plane and the beam direction on a vertical plane including the beam direction.

The wind measurement lidar device 1B operates similarly to the wind measurement lidar device 1. The wind measurement lidar device 1B can measure the wind speed in each direction and at each distance with high accuracy. In addition, the measurement rate does not decrease in a distance range of a short distance. Furthermore, the wind measurement lidar device 1B can predict the wind speed and the shear of the incoming wind of the wind turbine.

First, a method of predicting the incoming wind speed performed by the incoming wind speed predicting unit 16b is described. An incoming wind speed V(t) can be predicted by the following Equation (1) described in Non-Patent Literature 3. In the wind measurement lidar device 1B, the incoming wind speed can be predicted with higher accuracy than in the prior art since the wind speed can be measured with higher accuracy than in the prior art at the long distance.

[Equation 1]

$$V(t) = \frac{1}{J}\sum_{j=1}^{J} V_{Lj}\left(t - \frac{(d_j - d_1)}{v}\right) \qquad\qquad ---(1)$$

In Equation (1), t denotes the time (s) while a measurement is performed, v denotes an average wind speed (m/s) in the front direction of the wind turbine, $d_1$ denotes the incoming wind speed predicting position (m), and when the incoming wind speed predicting position exists at the position of the wind turbine, $d_1$ is determined to be 0 m. Symbol J denotes the number of distance ranges for measuring the wind speed. In the example illustrated in FIG. 2, J = 2. Symbol j denotes a range number representing a distance. In the example illustrated in FIG. 2, j = 1 or 2. Symbol $d_j$ denotes a distance (m) from the wind turbine in a distance range for which the wind speed is measured by the wind measurement lidar device 1B. $V_{Lj}(t)$ denotes the value (m/s) of a component in the front direction of the wind turbine of the wind speed at each distance j determined from the wind speed measured by the wind measurement lidar device 1B.

The value of $V_{Lj}$ is calculated using the following Equation (2) on the assumption that the wind is a horizontal wind and that the front direction of the wind turbine coincides with the wind direction. In Equation (2), measurement values of the wind speed at a distance $d_j$ in different beam directions are averaged and calculated. A horizontal wind is wind in which there is no component in the height direction in the wind speed.

[Equation 2]

$$V_{Lj}(t) = \frac{1}{I}\sum_{i=1}^{I} \frac{V_{LOS}(i,j)}{\cos\theta_i} \qquad\qquad ---(2)$$

In Equation (2), I denotes the number of beams. In the example illustrated in FIG. 2, I = 4. Symbol i denotes a beam number. In the example illustrated in FIG. 2, i is any one value of i = 1, 2, 3, 4. $V_{LOs}(i, j)$ denotes a wind speed (m/s) corresponding to beam number i and range number j. $V_{LOs}(i, j)$ denotes a wind speed stored in the Doppler wind speed storage unit 16a. Symbol $\theta_i$ denotes a beam crossing angle (rad). $\theta_i$ denotes an angle (crossing angle) formed by each beam direction with respect to the front direction of the wind turbine as illustrated in FIG. 2. $\theta_i$ is stored in the beam direction storing unit 17.

The following Equation (3) is another possible method of determining the average wind speed v in the front direction of the wind turbine, Equation (3) can calculate an average wind speed v faster than Equation (1) can.

[Equation 3]

$$v = \frac{1}{IJ} \sum_{j=1}^{J} \sum_{i=1}^{I} V_{LOS}(i,j) \qquad ---(3)$$

In Equation (1), wind speed measurement values at each distance j are added with a uniform coefficient and an average is calculated. In the wind measurement lidar device 1B, it is likely to take a long time to measure the wind speed particularly at the long distance. If the measurement is performed over a long time, the measurement accuracy may be deteriorated due to some change on wind speed or the like within that time. Therefore, in each measurement result, the number of times of scanning a beam (how many times the measurement is performed in the beam direction) to reach a required SN ratio is stored, and the measurement value is weighted depending on this number of times. The weighting improves the prediction accuracy of the incoming wind speed. When Equation (1) is weighted, the following Equation (4) is used.

[Equation 4]

$$V(t) = \frac{1}{\sum_{j=1}^{J} Q_j} \sum_{j=1}^{J} Q_j V_{Lj} \left( t - \frac{(d_j - d_1)}{v} \right) \qquad ---(4)$$

In Equation (4), Qj is a weighting coefficient corresponding to the number of times of scanning (the number of times of successive integration) in a distance range j (distance range whose range number is j). Qj is set to be a smaller value as the number of times of scanning increases by monotonically non-increasing. That is, Qj is determined so as to be larger when the number of times of scanning is small and to be smaller when the number of times of scanning is large. The number of times of scanning is the number of times indicating how many first integrated spectra are integrated. Since the number of times of scanning is different depending on the distance range j, Qj is a value that is set to be different depending on the distance range j. Qj denotes the weighting coefficient for incoming wind speed prediction 16g stored in the weighting coefficient storing unit 16d.

Instead of weighting and averaging the value $V_{Lj}$ of the component of the wind speed in the front direction of the wind turbine for each distance range j, the wind speed $V_{LOs}(i, j)$ measured in each beam direction may be weighted and averaged to obtain $V_{Lj}$. In that method, the following Equation (5) may be used instead of Equation (2). When the following Equation (5) is used, Equation (1A) obtained by replacing $V_{Lj}(t)$ with $V_{0Lj}(t)$ in Equation (1) is used.

[Equations 5]

$$V_{0Lj}(j) = \frac{1}{\sum_{i=1}^{I} R(i,j)} \sum_{i=1}^{I} \frac{R(i,j) V_{LOS}(i,j)}{\cos\theta_i} \qquad ---(5)$$

$$V(t) = \frac{1}{J} \sum_{j=1}^{J} V_{0Lj}\left(t - \frac{(d_j - d_1)}{v}\right) \qquad ---(1A)$$

In Equation (5), R(i, j) is a weighting coefficient corresponding to the number of times of scanning in a distance range of a beam number i and a range number j. R(i, j) is a modification of the weighting coefficient for incoming wind speed prediction 16g stored in the weighting coefficient storing unit 16d. R(i, j) is determined to be larger when the number of times of scanning is small and to be a smaller value by monotonically non-increasing when the number of times of scanning becomes larger.

When Equations (1) and (4) are used, the incoming wind speed predicting unit calculates a plurality of distance wind speeds, which are wind speeds at respective distances, from wind speeds in wind speed measurement sections at the same distance and predicts the incoming wind speed by weighted averaging of the distance wind speeds. When Equations (1A) and (5) are used, the incoming wind speed predicting unit calculates a plurality of distance wind speeds, which are the wind speeds at respective distances, from the weighted averaging of wind speeds in wind speed measurement sections at the same distance and predicts the incoming wind speed by averaging the distance wind speeds.

Weighted averaging can also be applied to predict a shear (the rate of change in the value of a component of the wind speed in the front direction of the wind turbine in the altitude direction). Regarding incoming shear as well, the prediction accuracy is improved by determining a weighted averaging based on the reliability of wind speed measurement values. First, a calculation formula of the shear when the weighted averaging is not performed is described. Here, S(t) is an average value of shears at each distance j. $S_{Lj}$(t) is a shear calculated at each distance j determined from the wind speed measured by the wind measurement lidar device.

[Equation 6]

$$S(t) = \frac{1}{J} \sum_{j=1}^{J} S_{Lj}\left(t - \frac{(d_j - d_1)}{v}\right) \qquad ---(6)$$

As illustrated in FIG. 2, when an upper layer is measured by two beams (Beam 1, Beam 2) and a lower layer is measured by two beams (Beam 3, Beam 4), the shear $S_{Lj}$(t) in a distance range of a range number j is calculated by the following Equation (7). Here, it is assumed that the wind is a horizontal wind. In the wind measurement lidar device 1B, since the wind speed can be measured with higher accuracy than in the prior art at the long distance, the shear can be predicted with higher accuracy than in the prior art when the weighted averaging is not performed.

[Equation 7]

$$S_{Lj}(t) = \frac{\sum_{i=1}^{2} \frac{V_{LOS}(i,j)}{\cos\theta_i} - \sum_{i=3}^{4} \frac{V_{LOS}(i,j)}{\cos\theta_i}}{h_j} \qquad ---(7)$$

A weighted averaging by weighting coefficient Qj of shears $S_{Lj}$(t) at respective distances j is calculated by the following equation. When Qj is used to predict the shear, Qj is also the shear prediction weighting coefficient 16h stored in the weighting coefficient storing unit 16d.

[Equation 8]

$$S(t) = \frac{1}{J} \frac{1}{\sum_{j=1}^{J} Q_j} \sum_{j=1}^{J} Q_j S_{Lj}\left(t - \frac{(d_j - d_1)}{v}\right) \qquad \text{---(8)}$$

When wind speeds $V_{LOs}(i, j)$ are calculated by weighted averaging, $S_{OLj}(t)$ is calculated using weighting coefficient $R(i, j)$ in the following Equation (9). When Equation (9) is used, Equation (6A) is used in which $S_{Lj}(t)$ is replaced with $S_{OLj}(t)$ in Equation (6). When $R(i, j)$ is used to predict the shear, $R(i, j)$ is also the shear prediction weighting coefficient 16h stored in the weighting coefficient storing unit 16d.

[Equations 9]

$$S_{0Lj}(t) = \frac{1}{\sum_{i=1}^{I} R(i,j)} \frac{\sum_{i=1}^{2} \frac{R(i,j)V_{LOS}(i,j)}{cos\theta_i} - \sum_{i=3}^{4} \frac{R(i,j)V_{LOS}(i,j)}{cos\theta_i}}{h_j} \qquad \text{---(9)}$$

$$S(t) = \frac{1}{J} \sum_{j=1}^{J} S_{0Lj}\left(t - \frac{(d_j - d_1)}{v}\right) \qquad \text{---(6A)}$$

In a method of using equations (6) and (7), the shear predicting unit predicts a plurality of distance shears, which is shears of respective distances and predicts an average shear by weighted averaging of the distance shears. When Equations (6A) and (9) are used, the shear predicting unit predicts a plurality of distance shears, which are shears for each distance, based on the wind speed weighted for each wind speed measurement section and predicts an average shear by averaging the distance shears.

A weighted averaging using weighting coefficients based on the reliability of wind speed measurement values may be calculated for one or both of the prediction of the incoming wind speed and the prediction of the shear. Here, the reliability of the wind speed measurement value is the number of times of scanning in the beam direction required to measure the wind speed. The weighting coefficient is set to be monotonically non-increasing to the decreasing of the reliability of the wind speed measurement value. That is, the weighting coefficient is set to be larger when the reliability of the wind speed measurement value is higher and to be smaller when the reliability is lower. Different weighting coefficients may be used to predict the incoming wind speed and to predict the shear.

Even at the same distance, a situation may occur in which the SN ratio of the integrated spectrum is different among beams. As a result, a situation in which the SN ratio of the integrated spectrum does not reach the required SN ratio may occur for some beams upon scanning once, that is, when all beams are each measured once. For example, in FIG. 2, this can be a situation in which the blades of the wind turbine rotate and block one or more of the four beams. In this situation, when $V_{Lj}$ of a component of the wind speed in the front direction of the wind turbine at each distance j is obtained using Equation (2) or Equation (5), an imbalance occurs in the number of pieces of data in the upper layer and the lower layer. For example, the wind speed can be calculated only for Beam 1, Beam 2, and Beam 3. When such a situation occurs, the influence of the wind speed at the upper layer is strong in the prediction of the incoming wind speed; however, when there is shear in the wind field, the prediction accuracy of the incoming wind speed decreases due to lack of information of the lower layer. In such a situation, by applying a larger weight to a wind speed measurement value of the lower layer, that is, Beam 3, the upper layer and the lower layer can be balanced equivalently, the influence of shear can be moderated to some extent, and the prediction accuracy of the incoming wind speed can be ensured.

In the example illustrated in FIG. 2, the four beam directions are distributed to two beam directions at two elevation angles. The number of beam directions may be greater than four and is only required to be determined so that there are same number of beam directions in all of different elevation angles. That is, it is only required that the plurality of beam directions are determined such that the number of other beam directions having the same elevation angle as the elevation angle of each beam direction is greater than or equal to one. In a beam direction at the elevation angle (elevation angle 1) in which there are a small number of beam directions in which the wind speed is calculated, the incoming wind speed predicting unit 16b predicts the incoming wind speed by making the weighting coefficient greater than that for beam directions at other elevation angles (elevation angles different from the elevation angle 1). At other elevation angles, there are more beam directions in which the wind speed are measured than at the elevation angle 1.

In addition, for example, when the SN ratio of the integrated spectrum reach the required SN ratio only by the two beams in the upper layer due to the influence of blocking by the blades or the like, a wind speed measurement value cannot be obtained in the lower layer. When no wind speed measurement value can be obtained in the lower layer, a wind speed measurement value in the lower layer can be assumed from a wind speed measurement value in the upper layer and, for example, shear data measured most recently by using Equations (6) and (7), and the incoming wind speed may be predicted based on this assumed value. Here, the case where the number of beams is four, and there are two layers of the upper layer and the lower layer is described. The number of layers in the vertical direction of the beam may be greater than or equal to three. For example, the number of beams may be 6, and three layers of an upper layer, a middle layer, and a lower layer may be measured.

The incoming wind speed predicting unit estimates the wind speed at a non-measurement elevation angle, which is an elevation angle at which there is no beam direction in which the wind speed is measured based on the wind speed measured in a beam direction having an elevation angle adjacent to the non-measurement elevation angle and the shear measured most recently and predicts the incoming wind speed using an estimated value of the wind speed at the non-measurement elevation angle.

By controlling any one or more of the orientation of the wind turbine 2 (yaw angle), the orientation of the blades (pitch angle), and the rotational torque based on the prediction result of the incoming wind speed or the shear by the wind measurement lidar device 1B, it is possible to contribute to any one or more of the improvement of the power generation amount of the wind turbine 2, reduction of the load applied to the blades, reduction of the load applied to a rotating part, and reduction of the load applied to a wind turbine tower.

The wind measurement lidar device 1B predicts the incoming wind speed on the assumption that the front direction of the wind turbine coincides with the wind direction as described in the explanation of Equation (2). As one of methods of matching the front direction of the wind turbine with the wind direction, the direction (yaw angle) of the wind turbine 2 is controlled so that the front direction of the wind turbine coincides with the wind direction measured by an anemometer using the anemometer for measuring the wind direction. The anemometer is, for example, a vane-type anemometer. In this method, there are situations in which a backward flow (wake) occurs due to the rotation of the blades of the wind turbine, and an error may occur in the wind direction value due to the influence of the backward flow. The wind measurement lidar device may measure the wind direction, and the direction of the wind turbine 2 may be controlled by the wind direction measured by the wind measurement lidar device.

Third Embodiment

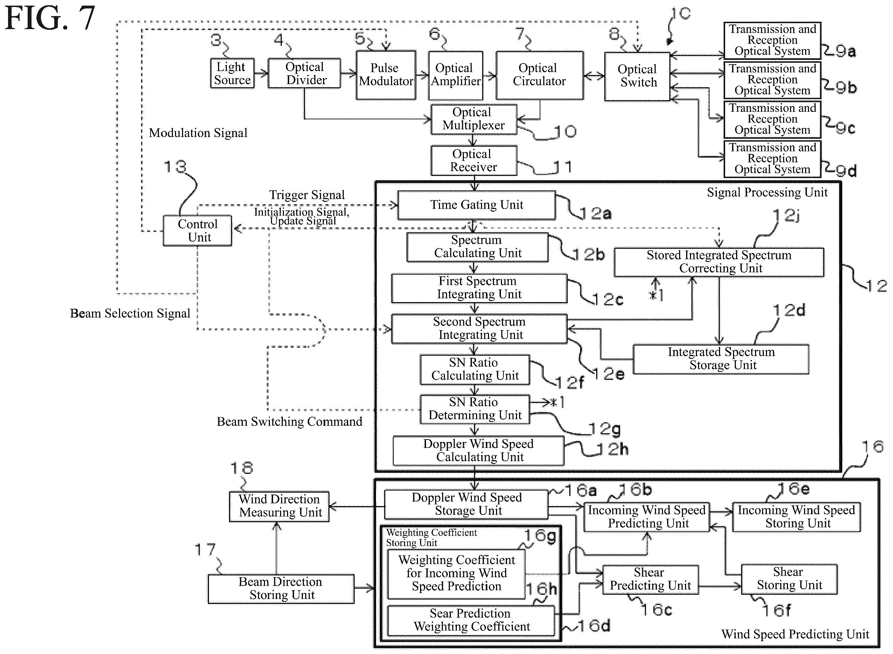

A third embodiment is an embodiment in which the second embodiment is modified so as to include a wind direction measuring unit for measuring a wind direction at the long distance. FIG. 7 is a schematic diagram illustrating the configuration of a wind measurement lidar device according to the third embodiment. In FIG. 7, points that are different from FIG. 6 of the second embodiment are described. A wind measurement lidar device 1C includes a wind direction measuring unit 18. The wind direction measuring unit 18 measures a wind direction at the long distance with respect to the wind turbine.

A long distance is defined as a distance from the wind turbine is greater than or equal to 2 times of D, where D is the rotor diameter of the wind turbine. The definition of the long distance is a distance that is required to be used for evaluation of the wind turbine power generation amount in Non-Patent Literature 3.

The reason for measuring the wind direction at the long distance is to moderate the influence of forward turbulence. Rotation of the blades of the wind turbine 2 causes forward turbulence called "induction" in front of the wind turbine 2. Due to the forward turbulence, it is difficult to measure the wind direction in the vicinity of the wind turbine. The entire wind direction is less likely to be disturbed at the long distance where there is no influence of the "induction". Therefore, the wind direction is measured at the long distance. The wind measurement lidar device 1C can measure the wind direction with less error than in the prior art.

The wind direction measuring unit 18 calculates a wind vector based on wind speeds (strictly speaking, the line-of-sight direction wind speeds) measured at a distance range of the long distance in a plurality of different beam directions and the data of beam directions stored in the beam direction storing unit 17. The wind speed calculated by the Doppler wind speed calculating unit 12h is a speed obtained by calculating an inner product of the wind vector and a unit vector (beam direction vector) in the beam direction (line-of-sight direction). When it is assumed that the wind vector is uniform at the long distance, a wind vector can be determined from wind speed measurement values in three or more beam directions and vectors in the beam directions.

The wind direction measuring unit 18 calculates the direction of the wind vector calculated at the long distance as the wind direction. When a horizontal wind is assumed, the wind speed may be calculated in two beam directions. In a method of measuring the wind speed in four or more beam directions, the wind direction measuring unit 18 calculates a wind vector so that, for example, the sum of square errors is minimized.

The wind direction value measured by the wind measurement lidar device 1C in a distance range included in the long distance is used for yaw angle control of the wind turbine 2. Since the wind direction can be measured more accurately than in measuring at a short distance, the front direction of the wind turbine 2 can be matched with the wind direction with high accuracy. By matching the front direction of the wind turbine 2 with the wind direction accurately, the power generation efficiency of the wind turbine 2 is improved.

In the wind measurement lidar device according to the present disclosure, it is likely to take a long time to measure the wind speed of the long distance; however, since the entire of wind turbine 2 is moved in the yaw angle control of the wind turbine 2, the control speed is slow. Therefore, it is not a disadvantage that it may take a long time to measure the wind speed at the long distance in controlling the yaw angle of the wind turbine 2.

The wind measurement lidar device 1C operates similarly to the wind measurement lidar device 1. The wind measurement lidar device 1C can measure the wind speed in each direction and at each distance with high accuracy. In addition, the measurement rate does not decrease in a distance range of a short distance. Furthermore, the wind measurement lidar device 1C can predict the wind speed and the shear of the incoming wind of the wind turbine. The wind measurement lidar device 1C can also measure the wind direction at the long distance. By using the measured wind direction for yaw angle control of the wind turbine, the power generation efficiency of the wind turbine 2 can be improved.

Fourth Embodiment

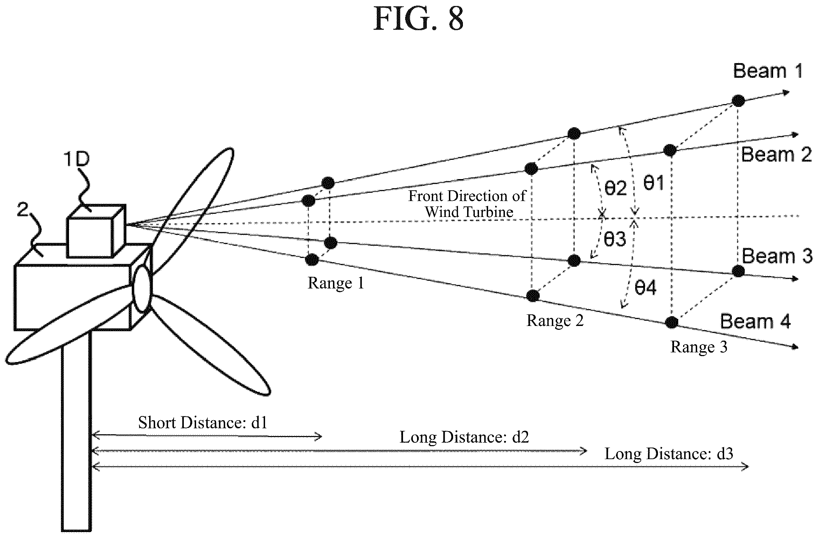

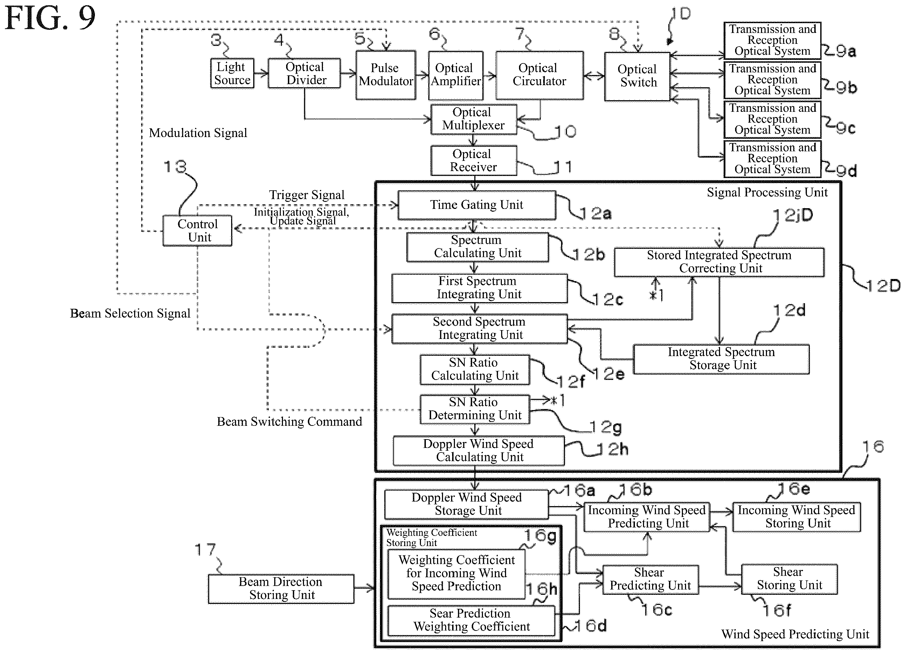

A fourth embodiment is an embodiment in which the second embodiment is modified so that a distance range is defined so that there is a plurality of distance ranges classified as the long distance and that spectra of divided reception signals in the plurality of distance ranges of the long distance are integrated together . FIG. 8 is a schematic diagram illustrating the distance for measuring the wind speed in a wind measurement lidar device according to the fourth embodiment. FIG. 9 is a schematic diagram illustrating the configuration of the wind measurement lidar device according to the fourth embodiment. In FIG. 9, points that are different from FIG. 6 of the second embodiment are described. The first embodiment, the third embodiment, or other embodiments may be modified.

As illustrated in FIG. 8, the wind measurement lidar device 1D transmits and receives four beams of Beam 1, Beam 2, Beam 3, and Beam 4. In each beam, the wind speed is measured at three points of distance d1, distance d2, and distance d3. Distance d2 and distance d3 are classified as the long distance. Distance d1 is classified as a short distance (not the long distance). For the long distance d2 and the long distance d3, spectrum data calculated at the respective distances are integrated together. It can be considered that the wind speed is substantially the same between the long distance d2 and the long distance d3. Therefore, by integrating the spectrum data calculated at the long distance d2 and the long distance d3 together, the SN ratio of the spectrum data can be increased, and the wind speed at the long distance can be measured more accurately.

The number of distances for measuring the wind speed with each beam may be greater than or equal to four. Two or more of wind speed measurement sections that are not the long distance may be provided. The wind measurement lidar device 1D stores data indicating distances to be processed as the long distance are placed at what count or farther when counted from the near side.

In the wind measurement lidar device 1D, a stored integrated spectrum correcting unit 12jD is modified, and when the spectrum data integrated by the second spectrum integrating unit 12e is stored in the integrated spectrum storage unit 12d in S13 illustrated in FIG. 3, the stored integrated spectrum correcting unit 12jD overwrites and stores all distances classified as the long distance in that beam direction with the spectrum data integrated by the second spectrum integrating unit 12e at one distance that is classified as the long distance in that beam direction. When the spectrum is integrated at a distance that is not the long distance in that beam direction, the stored integrated spectrum correcting unit 12jD overwrites and stores the integrated spectrum storage unit 12d with the spectrum data integrated by the second spectrum integrating unit 12e only for that beam direction and that distance.

When the stored integrated spectrum correcting unit 12jD stores the integrated spectrum in this manner, an integrated spectrum stored in the integrated spectrum storage unit 12d for a distance that is the long distance in each beam direction is obtained by integrating spectra collectively at a plurality of distances that are the long distance. In addition, at each distance which is the long distance in each beam direction, integrated spectra stored in the integrated spectrum storage unit 12d are the same.

When spectra of a plurality of distances that are the long distance are integrated collectively, the integrated spectrum read from the integrated spectrum storage unit 12d by the second spectrum integrating unit 12e is an integrated spectrum obtained by integrating all pieces of spectrum data calculated at a plurality of distances that are the long distance in the same beam direction.

The wind measurement lidar device 1D operates similarly to the wind measurement lidar device 1B. The wind measurement lidar device 1D can measure the wind speed in each direction and at each distance with high accuracy. In addition, the measurement rate does not decrease in a distance range of a short distance. Furthermore, the wind measurement lidar device 1D can predict the wind speed and the shear of the incoming wind of the wind turbine.

The wind measurement lidar device 1D can measure the wind speed at a longer distance more certainly than the wind measurement lidar device 1B can. Therefore, this is particularly effective when the inflow (arrival) of a gust is detected in advance using a wind speed measurement value at the long distance.

A single integrated spectrum may be determined for the beam direction by integrating spectra calculated in a plurality of wind speed measurement sections classified into the long distance. When there is one or more integrated spectra of the long distance, it is only required that the spectrum integrating unit integrate spectra of divided reception signals in a plurality of time intervals collectively corresponding to a plurality of distances classified as the long distance for each beam direction.

Fifth Embodiment

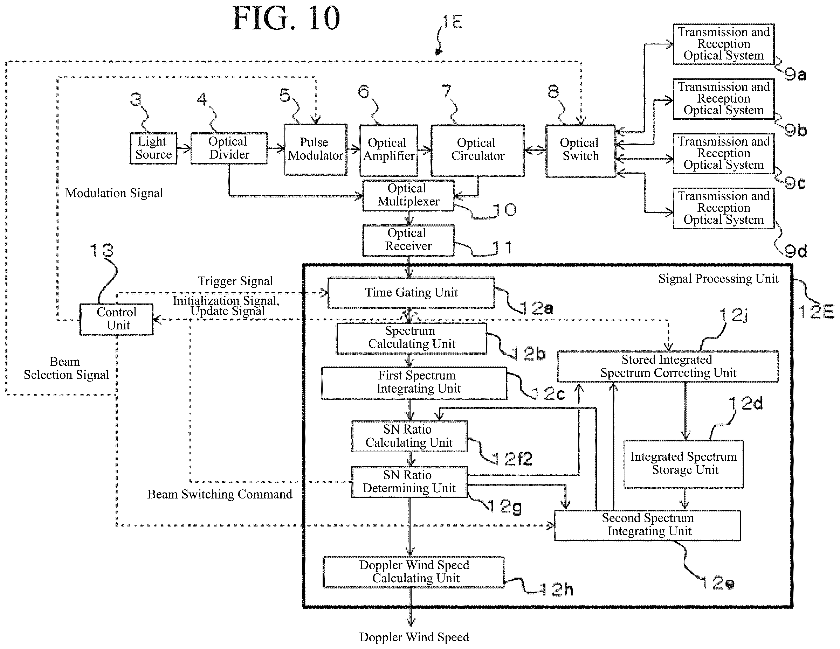

A fifth embodiment is an embodiment in which the first embodiment is modified such that whether or not the SN ratio of the first integrated spectrum integrated by the first spectrum integrating unit is greater than or equal to the first threshold value is checked and that, when the SN ratio of the first integrated spectrum is greater than or equal to the first threshold value, the wind speed is calculated only from the first integrated spectrum that is currently integrated. FIG. 10 is a schematic diagram illustrating the configuration of a wind measurement lidar device according to the fifth embodiment. In FIG. 10, points that are different from FIG. 1 of the first embodiment are described. The second to fourth embodiments or other embodiments may be modified.

A wind measurement lidar device 1E includes a signal processing unit 12E. The signal processing unit 12E includes an SN ratio calculating unit 12f2. The SN ratio calculating unit 12f2 calculates the SN ratio of the first integrated spectrum integrated by the first spectrum integrating unit 12c and the SN ratio of the second integrated spectrum integrated by the second spectrum integrating unit 12e. The SN ratio determining unit 12g determines whether or not the SN ratios calculated by the SN ratio calculating unit 12f2 are greater than or equal to the first threshold value.

When the SN ratio of the first integrated spectrum is greater than or equal to the first threshold value, the Doppler wind speed calculating unit 12h calculates the Doppler wind speed from the first integrated spectrum. When the SN ratio of the first integrated spectrum is not greater than or equal to the first threshold value, the second integrated spectrum is generated. When the SN ratio of the second integrated spectrum is greater than or equal to the first threshold value, the Doppler wind speed calculating unit 12h calculates the Doppler wind speed from the second integrated spectrum. When the SN ratio of the second integrated spectrum is not greater than or equal to the first threshold value, the stored integrated spectrum correcting unit 12j stores the second integrated spectrum into the integrated spectrum storage unit 12d. That is, when the Doppler wind speed calculating unit 12h does not calculate the Doppler wind speed, the stored integrated spectrum correcting unit 12j stores the second integrated spectrum into the integrated spectrum storage unit 12d.

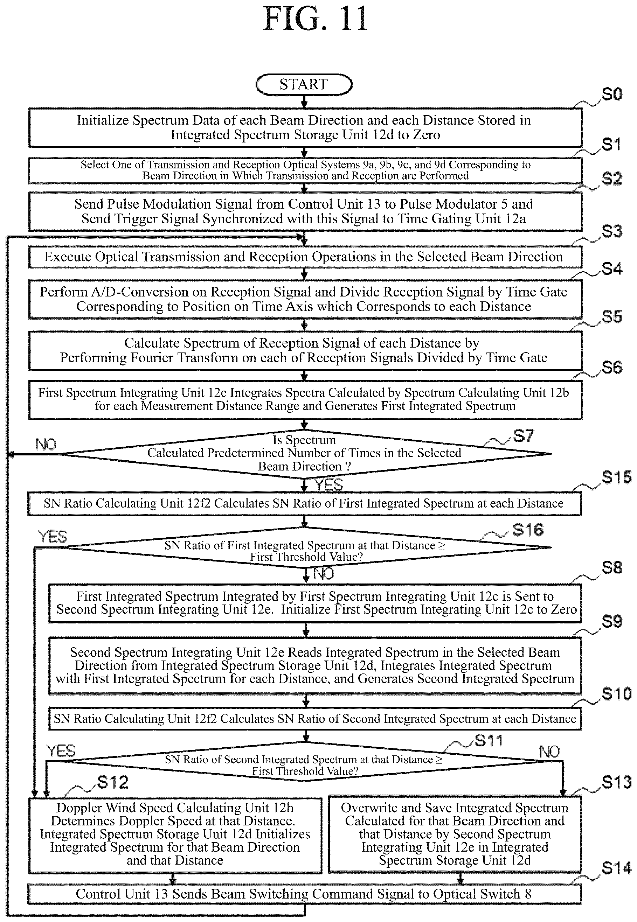

FIG. 11 is a flowchart illustrating the operation of the wind measurement lidar device according to the fifth embodiment. In FIG. 11, points that are different from FIG. 3 of the first embodiment are described. Steps S15 and S16 are added between S7 and S8. In S7, it is checked whether or not the spectrum is calculated the predetermined number of times in the selected beam direction. If the spectrum is not calculated the predetermined number of times (NO in S7), the process returns to S3. If the spectrum is calculated the predetermined number of times (YES in S7), in S15, the SN ratio calculating unit 12f2 calculates the SN ratio of the first integrated spectrum at each distance integrated by the first spectrum integrating unit 12c. In S16, the SN ratio determining unit 12g compares the SN ratio of the first integrated spectrum at each distance calculated in S15 with the first threshold value for each distance.

For the distance range in which the SN ratio of the first integrated spectrum is greater than or equal to the first threshold value (YES in S16), the process proceeds to S12. In step S12, the Doppler wind speed calculating unit 12h determines the Doppler frequency shift from the peak frequency of the spectrum obtained in S15 and determines the Doppler wind speed (wind speed) corresponding to the Doppler frequency shift. Furthermore, the control unit 13 sends an initialization signal to the stored integrated spectrum correcting unit 12j, and the stored integrated spectrum correcting unit 12j initializes (resets to zero) the value of the spectrum data regarding the beam direction and the distance range (wind speed measurement section) for which the wind speed is calculated, the value of the spectrum data being stored in the integrated spectrum storage unit 12d.

For a distance range for which the wind speed is not calculated since the SN ratio of the first integrated spectrum is smaller than the first threshold value (NO in S16), the process proceeds to S8. In S8, the first integrated spectrum integrated by the first spectrum integrating unit 12c is sent to the second spectrum integrating unit 12e. Then, the integrated spectrum remaining in the first spectrum integrating unit 12c is initialized to zero. The processes after S8 are similar to those in the first embodiment.

The wind measurement lidar device 1E operates similarly to the wind measurement lidar device 1. The wind measurement lidar device 1E can measure the wind speed in each direction and at each distance with high accuracy. In addition, the measurement rate does not decrease in a distance range of a short distance. The wind measurement lidar device 1E can further reduce the number of times to generate the first integrated spectrum as compared with that of the wind measurement lidar device 1. The number of times of generating the first integrated spectrum is referred to as the number of times of generation.

First, a situation in which the number of times of generating the first integrated spectrum increases in the wind measurement lidar device 1 is described. In the wind measurement lidar device mounted on the wind turbine, since the blades of the wind turbine rotate, the beam is frequently blocked, and a situation in which a reception signal cannot be obtained occurs frequently. In such a situation, in a pulse reflected by the blades, there is no component in the reception signal that is generated from reflection light reflected by the aerosol. The first integrated spectrum obtained by integrating spectra of the reception signal of the pulse blocked by the blades has a low SN ratio. The first integrated spectrum having an SN ratio that is not greater than or equal to the first threshold value is integrated with the integrated spectrum stored in the integrated spectrum storage unit 12d by the second spectrum integrating unit 12e to generate the second integrated spectrum. The second integrated spectrum is stored in the integrated spectrum storage unit 12d.

A reception signal of a pulse blocked by a blade is referred to as a reception signal with blocking. The reception signal of the pulse not blocked by the blades is referred to as a reception signal without blocking. A first integrated spectrum integrated including a spectrum of the reception signal with blocking is referred to as a first integrated spectrum with blocking. A first integrated spectrum obtained by integrating only spectra of reception signals with blocking is referred to as a first integrated spectrum with complete blocking. A first integrated spectrum including both the spectrum of the reception signal with blocking and the spectrum of the reception signal without blocking is referred to as a first integrated spectrum with partial blocking. A first integrated spectrum obtained by integrating only spectra of reception signals without blocking is referred to as a first integrated spectrum without blocking.

Suppose a situation in which several first integrated spectra with blocking are generated in succession, the SN ratio of the stored integrated spectrum decreases. And after that, the first integrated spectrum without blocking is generated in the beam direction in which the integrated spectrum in which the SN ratio is decreased is stored. The SN ratio of the first integrated spectrum without blocking is greater than or equal to the first threshold value. In the wind measurement lidar device 1, the first integrated spectrum is integrated with the stored integrated spectrum to generate the second integrated spectrum. Since the SN ratio of the stored integrated spectrum is low, the SN ratio of the second integrated spectrum is not greater than or equal to the first threshold value. In the wind measurement lidar device 1, the wind speed is not calculated at this point of time. When the first integrated pulse is further generated from the reception signal without blocking, and the SN ratio of the second integrated pulse equals or exceeds the first threshold value, the wind measurement lidar device 1 calculates the wind speed.

In the wind measurement lidar device 1E, the SN ratio of the first integrated spectrum is checked, and when the SN ratio of the first integrated spectrum is greater than or equal to the first threshold value, the wind speed is calculated from the first integrated spectrum. Therefore, even when the SN ratio of the second integrated spectrum is not greater than or equal to the first threshold value, and the SN ratio of the first integrated spectrum is greater than or equal to the first threshold value, the wind measurement lidar device 1E can calculate the wind speed. In the wind measurement lidar device 1E, when the SN ratio of the first integrated spectrum is not greater than or equal to the first threshold value, and the SN ratio of the second integrated spectrum reaches the first threshold value, the wind speed is calculated from the second integrated spectrum. Therefore, in the wind measurement lidar device 1E, the wind speed can be calculated when the SN ratio of the first integrated spectrum or the SN ratio of the second integrated spectrum is the first threshold value.

A phenomenon in which the SN ratio of the first integrated spectrum decreases due to blocking by the blades is examined quantitatively. A situation where blocking by the blades occurs is represented by the following variables.

$Tb$: Time while pulses are blocked by the blades of the wind turbine.
$Tn$: Time while pulses are not blocked by the blades of the wind turbine.
$Tn > Tb$ is assumed.
$T$: Cycle in which blocking by the blades occurs. $T = Tn + Tb$.
$Tc$: Time for integrating the first integrated spectrum. This is referred to as integration time. $Tn > Tc$.
$fpr$: repetition frequency of laser light. The number of pulses generated per second.

Since $fpr$ is constant, the number of times of integration of pulses is proportional to the integration time of the pulses. Here, not the number of times of integration of pulses but the integration time of pulses is used for examination.

The conditions under which laser light is blocked by the blades are similar to those in Patent Literature 3.

Paragraph 0054 of Patent Literature 3 says: "For example, it is assumed that the rotation speed of the blades 202 is 6 rpm, the width of the blades 202 is 4 m, and the height at which the coherent lidar device 1 is installed is 5 m apart from the rotation center of the blades 202. In this case, the time required for the blades 202 to make one revolution is 10 s, and time while the laser light is blocked by the blades 202 is approximately 1.28 s × the number of the blades 202. Generally, the number of the blades 202 is three, and thus time while the laser light is blocked while the blades 202 make one revolution is 1.28 s × 3."

Under the conditions described in paragraph 0054 of Patent Literature 3, $Tb = 1.28$ [sec], $Tn = 2.053$ [sec], and $T = 3.333$ [sec] are obtained. In Patent Literature 3, $Tc = 5.0$ [sec] is assumed so that the wind speed can be calculated in the farthest distance range (time gate). In the present disclosure, Tc is set to time shorter than that in Patent Literature 3, such as 1.0 [sec] so that the wind speed can be calculated at least in the shortest distance range (time gate).

In order to examine a change in the SN ratio of the first integrated spectrum by integration, the following variables are defined.

Tx: time while blocking by a blade does not occur during integration time Tc. This is referred to as a non-blocking time. $Tc \geq Tx \geq 0$.

y: proportion of Tx in Tc. This is referred to as a non-blocking rate. $y = Tx/Tc$. $1 \geq y \geq 0$. The first integrated spectrum without blocking is obtained when $y = 1$, the first integrated spectrum with partial blocking is obtained when $1 > y > 0$, and the first integrated spectrum with complete blocking is obtained when $y = 0$.

α: probability that no blocking by the blades occurs during Tc.

Probability that $Tx = Tc$ is satisfied. $\alpha = (Tn - Tc)/T$.

β: probability that blocking by the blades occurs during entire of Tc.

Probability that $Tx = 0$ is satisfied. $\beta = (Tb - Tc)/T$.

$Z_1$: SN ratio of the first integrated spectrum. This varies depending on whether there is blocking by the blades.

$k_1$: first threshold value. The SN ratio $Z_1$ of the first integrated spectrum is a lower limit value at which the wind speed can be calculated.

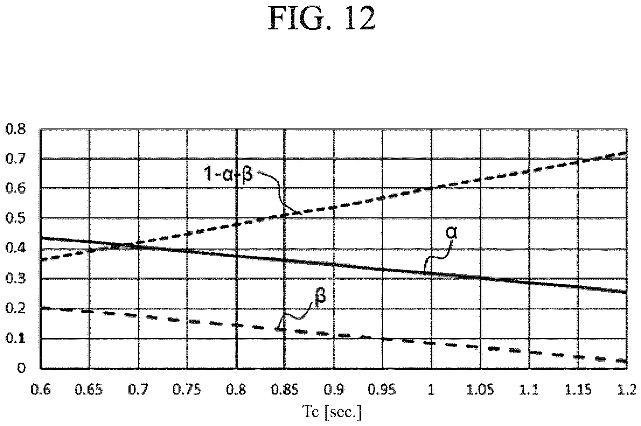

Similarly to Patent Literature 3, changes in the parameters α, β, and $(1 - \alpha - \beta)$ when $Tb = 1.28$ [sec], $Tn = 2.053$ [sec], $T = 3.333$ [sec], and Tc is caused to be changed in a range of 0.6 to 1.2 [sec] are shown in FIG. 12. $(1 - \alpha - \beta)$ is a probability that blocking by the blades occurs in a partial time in Tc. FIG. 12 is a graph illustrating changes in a parameter used to evaluate the operation of the wind measurement lidar device against the integration time Tc of the first integrated spectrum. As Tc increases, α and β decrease linearly, and $(1 - \alpha - \beta)$ increases linearly. In the case of $Tc = 1.0$ [sec], $\alpha = 0.316$ and $\beta = 0.084$ are obtained. In the case of $Tc = 0.8$ [sec], $\alpha = 0.376$ and $\beta = 0.144$ are obtained. In the case of $Tc = 1.2$ [sec], $\alpha = 0.256$ and $\beta = 0.024$ are obtained.

Here, the followings are assumed.

(a) When spectra can be integrated for Tc without blocking by the blades, the SN ratio $Z_1$ of the first integrated spectrum without blocking equals the first threshold value $k_1$ ($Z_1 = k_1$). When the integration time Tc is changed, the SN ratio $Z_1$ of the first integrated spectrum without blocking is also changed. As the SN ratio $Z_1$ is changed, the first threshold value $k_1$ is also caused to be changed such that $Z_1 = k_1$ is satisfied.

(b) When the laser light is blocked by the blades, a signal component Sg of the spectrum equals zero ($Sg = 0$), and the noise component Nz is the same as that when the laser light is not blocked by the blades.

The SN ratio $Z_1$ of the first integrated spectrum without blocking may be assumed to be higher than the first threshold value $k_1$ ($Z_1 > k_1$). Although the analysis becomes complicated, even when $Z_1 > k_1$ is satisfied, it is possible to analyze the influence of blocking by the blades on the SN ratios of the first integrated spectrum and the second integrated spectrum.

When a reception signal includes the signal Sg and the noise Nz, integration of N-pieces of spectra of reception signals gives the power of the signal Sg as $(N * Sg)^2$ and the power of the noise Nz as $N * Nz^2$. Therefore, the SN ratio before integration is $(Sg/Nz)$, and the SN ratio of the spectrum after integration is $\sqrt{(N)} * (Sg/Nz)$. The SN ratio of the spectrum after the integration is $\sqrt{(N)}$ times as high as that before the integration. When the spectrum includes only the noise Nz, integration of N-pieces of spectra gives the power of the signal Sg as being 0 and the power of the noise Nz as being $N * Nz^2$. The SN ratio of the spectrum before and after the integration is 0.

When N-pieces of spectra are integrated successfully without being blocked by the blades, the SN ratio of the spectrum after integration is $\sqrt{(N)} * (Sg/Nz)$. Thereafter, when all the N-pieces of spectra are blocked by the blades, the SN ratio of 2 * N-pieces of spectra after integration decreases to $\sqrt{(N/2)} * (Sg/Nz)$. When subsequent N-pieces of spectra are not blocked by the blades, the SN ratio of the integrated 2 * N-pieces of spectra after integration is improved to $\sqrt{(2}$

* N) * (Sg/Nz).

As for the SN ratio $Z_1$ of the first integrated spectrum integrated with the integration time Tc, $Z_1 = k_1$ is obtained with a probability of $\alpha$, since blocking by the blades does not occur with a probability of $\alpha$, the first integrated spectrum without blocking (y = 1) is generated. Symbol $k_1$ denotes the first threshold value. $Z_1 = 0$ is obtained with a probability of $\beta$, since the first integrated spectrum with complete blocking is generated with a probability of $\beta$. With a probability of $(1 - \alpha - \beta)$, the first integrated spectrum with partial blocking is generated, and $Z_1 = \sqrt{(y)} * k_1$ is obtained. The non-blocking rate y takes a value in a range of 1 > y > 0 with a uniform probability.

The following variables are defined in order to examine the effect that the wind speed can be calculated faster by comparing the SN ratio of the first integrated spectrum and the first threshold value before the second integrated spectrum is generated and calculating the wind speed when the SN ratio of the first integrated spectrum is greater than or equal to the first threshold value.

$Tx_j$: Tx of the first integrated spectrum generated for a j-th time. Non-blocking time Tx is time while the laser light is not blocked by the blades during integration time Tc.

yj: non-blocking rate y in the first integrated spectrum generated for a j-th time.

$$y_j = Tx_j/Tc.$$

$x_n$: sum of yj up to an n-th time. This is referred to as a non-blocking rate.

$x_n = \Sigma y_j$. Here, $\Sigma$ means that a sum is calculated for j = 1,..., n.

$g_n(x_n)$: probability distribution function of the non-blocking rate $x_n$.

$G_n(x_n)$: cumulative distribution function of the non-blocking rate $x_n$. $Gn(x_n) = \int g_n(x)dx$. Here, $\int$ represents an integration of x from 0 to $x_n$. Symbol n is referred to as a degree. $Gn(x_n)$ uses a function of a degree equal to the number of first integrated pulses with partial blocking.

$\zeta_n$: a probability that the wind speed is not calculated by the n-th time. This is referred to as an unfinished calculation probability.

$\gamma_n$: probability that the SN ratio of the first integrated spectrum generated at an n-th time is greater than or equal to the first threshold value and that the wind speed can be calculated by the wind measurement lidar device 1E, whereas the wind speed cannot be calculated by the wind measurement lidar device 1. This is referred to as a first improvement probability. The wind speed is not calculated by an (n - 1)th time.

ysum: sum of $\gamma_n$. This is referred to as the first improvement total probability.

ysum = $\Sigma \gamma_n$, here, $\Sigma$ means to calculate a sum of pieces indicated by an integer being greater than or equal to 2.

$\varepsilon_n$: probability that the SN ratio of the first integrated spectrum generated at an n-th time is not greater than or equal to the first threshold value, and the SN ratio of the second integrated spectrum is greater than or equal to the first threshold value. This is referred to as a second improvement probability. The second improvement probability is an increase of a probability that can calculate the wind speed by calculating the wind speed also from the second integrated spectrum as compared with that of the case of calculating the wind speed only from the first integrated spectrum.

$\varepsilon$sum: sum of $\varepsilon_n$. This is referred to as the second improvement total probability.

$\varepsilon$sum = $\Sigma \varepsilon_n$, here, $\Sigma$ means to calculate a sum of pieces indicated by an integer being greater than or equal to 2.

$\lambda_n$: probability that the first integrated spectrum without blocking is generated in the range of times from a second time to an (n - 1)th time but the wind measurement lidar device 1 cannot calculate the wind speed, and that the SN ratio of the second integrated spectrum generated at an n-th time is greater than or equal to the first threshold value. This is referred to as a recovery probability.

First, $g_n(x_n)$ and $Gn(x_n)$ are described. $x_1 = y = Tx/Tc$ takes a value in the range of 1 > $x_1$ > 0 with a uniform probability. Therefore, $g_1(x_1)$ and $G_1(x_1)$ can be calculated by the following equations.

$$\text{For } x_1 \text{ satisfying } 0 < x_1 < 1, g_1(x_1) = 1 \qquad (10)$$

$$\text{For } x_1 \text{ satisfying } 0 < x_1 < 1, G_1(x_1) = x_1 \qquad (11)$$

Function $g_2(x_2)$ has the following relationship with $g_1(x_1)$.

$$g_2(x_2) = \int g_1(x) * g_1(x_2 - x)dx \qquad (12)$$

In Equation (12), $\int$ means integration from max(0, $x_2$ - 1) to min(1, $x_2$) with respect to x. Here, max(x, y) means the maximum value of x or y. And, min(x, y) means the minimum value of x or y.

The following equations are obtained by calculating Equation (12).

$$\text{For } x_2 \text{ satisfying } 0 < x_2 \leq 1, g_2(x_2) = x_2 \tag{13-1}$$

$$\text{For } x_2 \text{ satisfying } 1 \leq x_2 < 2, g_2(x_2) = 2 - x_2 \tag{13 - 2}$$

Furthermore, $G_2(x_2)$ is given as follows.

$$\text{For } x_2 \text{ satisfying } 0 < x_2 \leq 1, G_2(x_2) = (1/2) * x_2^2 \tag{14-1}$$

$$\text{For } x_2 \text{ satisfying } 1 \leq x_2 < 2, G_2(x_2) = 1 - (1/2) * (2 - x_2)^2 \tag{14-2}$$

Function $g_3(x_3)$ has the following relationship with $g_1(x_1)$ and $g_2(x_2)$.

$$g_3(x_3) = \int g_2(x) * g_1(x_3 - x)dx \tag{15}$$

In Equation (15), $\int$ means integration from max(0, $x_3$ - 1) to min(2, $x_3$) with respect to x.

The following equations are obtained by calculating Equation (15).

$$\text{For } x_3 \text{ satisfying } 0 < x_3 \leq 1, g_3(x_3) = (1/2) * x_3^2 \tag{16-1}$$

$$\text{For } x_3 \text{ satisfying } 1 \leq x_3 \leq 2, g_3(x_3) = 3/4 - (x_3 - 3/2)^2 \tag{16-2}$$

$$\text{For } x_3 \text{ satisfying } 2 \leq x_3 < 3, g_3(x_3) = (1/2) * (3 - x_3)^2 \tag{16-3}$$

Furthermore, $G_3(x_3)$ is calculated as follows.

$$\text{For } x_3 \text{ satisfying } 0 < x_3 \leq 1, G_3(x_3) = (1/6) * x_3^3 \tag{17-1}$$

For $x_3$ satisfying $1 \leq x_3 \leq 2$,

$$G_3(x_3) = 1/2 - (1/3) * x_3 * (3/2 - x_3) * (3 - x_3) \tag{17-2}$$

For $x_3$ satisfying $2 \leq x_3 < 3$, $G_3(x_3) = 1 - (1/6) * (3 - x_3)^3$ (17-3)

Function $g_4(x_4)$ has the following relationship with $g_1(x_1)$ and $g_3(x_3)$.

$$g_4(x_4) = \int g_3(x) * g_1(x_4 - x)dx \tag{18}$$

In Equation (18), $\int$ means integration from max(0, $x_3$ - 1) to min(3, $x_3$) with respect to x.

Calculating Equation (18) shows that $g_4(x_4)$ can be calculated by the following equations.

$$\text{For } x_4 \text{ satisfying } 0 < x_4 \leq 1, g_4(x_4) = (1/6) * x_4^3 \tag{19-1}$$

For $x_4$ satisfying $1 \leq x_4 \leq 2$,

$$g_4(x_4) = (2/3) - (1/2) * x_4 *(x_4 - 2)^2 \qquad (19\text{ -}2)$$

For $x_4$ satisfying $2 \leq x_4 \leq 3$,

$$g_4(x_4) = (2/3) - (1/2) * (4 - x_4) * (x_4 - 2)^2 \qquad (19\text{-}3)$$

$$\text{For } x_4 \text{ satisfying } 3 \leq x_4 < 4, \, g_4(x_4) = (1/6) * (4 - x_4)^3 \qquad (19\text{-}4)$$

G4(x4) can be calculated by the following equation.

$$\text{For } x_4 \text{ satisfying } 0 < x_4 \leq 1, \, G_4(x_4) = (1/24) * x_4^4 \qquad (20\text{-}1)$$

For $x_4$ satisfying $1 \leq x_4 \leq 2$,

$$G_4(x_4) = 1/2 - (1/8) * (2 - x_4)$$

$$* ((2 - x_4)^3 - (8/3) * (2 - x_4)^2 + (16/3)) \qquad (20\text{-}2)$$

For $x_4$ satisfying $2 \leq x_4 \leq 3$,

$$G_4(x_4) = 1/2 + (1/8) * (x_4 - 2)$$

$$* ((x_4 - 2)^3 - (8/3) *(x_4 - 2)^2 + (16/3)) \qquad (20\text{-}3)$$

$$\text{For } x_4 \text{ satisfying } 3 < x_4 \leq, G_4(x_4) = 1 - (1/24) * (4 - x_4)^4 \qquad (20\text{-}4)$$

As for the first integrated spectrum, when the non-blocking time Tx is the same as the integration time Tc (Tx = Tc), the SN ratio of the first integrated spectrum equals the first threshold value and the wind speed can be calculated from the first integrated spectrum. As for the second integrated spectrum obtained by integrating two first integrated spectra, the SN ratio of the second integrated spectrum is greater than or equal to the first threshold value when the non-blocking rate $x_2$ satisfies $x_2 \geq \sqrt{(2)}$. As for the second integrated spectrum obtained by integrating n-pieces of first integrated spectra, the SN ratio of the second integrated spectrum is greater than or equal to the first threshold value when the non-blocking rate $x_n$ satisfies $x_n \geq \sqrt{(n)}$.

When $x_2 \geq \sqrt{(2)}$ is satisfied, the wind speed can be calculated from the second integrated spectrum, and it is not necessary to further integrate spectra. Only when $x_2 < \sqrt{(2)}$ is satisfied, $g_3(x_3)$ and G3(x3) are required to be considered. When $x_3 \geq \sqrt{(3)}$ is satisfied, the wind speed can be calculated from the second integrated spectrum, and it is not necessary to further integrate spectra. In order to take these points into consideration, the following function is defined. $f_{3B}(x_3)$ and $F_{3B}(x3)$ are used when the first integrated spectrum with complete blocking is generated at the first time or the second time.

$f_3(x_3)$: probability distribution function of a non-blocking rate $x_3$ assuming that $g_2(x_2) = 0$ is satisfied for $x_2$ satisfying $x_2 \geq \sqrt{(2)}$.

$F_3(x_3)$: cumulative distribution function of the non-blocking rate $x_3$. $F_3(x_3) = \int f_3(x)dx$. Symbol $\int$ denotes integration from 0 to $x_3$ with respect to x.

$f_{3B}(x_3)$: probability distribution function of the non-blocking rate $x_3$ assuming that $g_2(x_2) = 0$ is satisfied for $x_2$ satisfying $x_2 \geq \sqrt{(3)}$.

$F_{3B}(x_3)$: cumulative distribution function of non-blocking rate $x_3$. $F_{3B}(x3) = \int f_{3B}(x)dx$. Symbol $\int$ denotes integration from 0 to $x_3$ with respect to x.

$f_4(x_4)$: probability distribution function of a non-blocking rate $x_4$ assuming that f3(x2) = 0 is satisfied for $x_3$ satisfying $x_3 \geq \sqrt{(3)}$.

$F_4(x_4)$: cumulative distribution function of the non-blocking rate $x_4$. $F_4(x_4) = \int f_4(x)dx$. Symbol $\int$ denotes integration from 0 to $x_4$ with respect to x.

Function f3(x3) has the following relationship with $g_1(x_1)$ and $g_2(x_2)$.

$$f_3(x_3) = \int g_2(x) * g_1(x_3 - x)dx \qquad (21)$$

In Equation (21), $\int$ means integration from $\max(0, x_3 - 1)$ to $\min(\sqrt{2}, x_3)$ with respect to x.

The following equations are obtained by calculating Equation (21).

$$\text{For } x_3 \text{ satisfying } 0 < x_3 \le 1, f_3(x_3) = (1/2) * x_3^2 \qquad (22\text{-}1)$$

$$\text{For } x_3 \text{ satisfying } 1 \le x_3 \le \sqrt{2}, f_3(x_3) = 3/4 - (x_3 - 3/2)^2 \qquad (22\text{-}2)$$

For $x_3$ satisfying $\sqrt{2} \le x_3 \le 2$,

$$f_3(x_3) = 2 * \sqrt{2} - 2 - (1/2) * (x_3 - 1)^2 \qquad (22\text{-}3)$$

For $x_3$ satisfying $2 \le x_3 \le 1 + \sqrt{2}$,

$$f_3(x_3) = 2 * \sqrt{2} - 3 + (1/2) * (3 - x_3)^2 \qquad (22\text{-}4)$$

$$\text{For } x_3 \text{ satisfying } 1 + \sqrt{2} \le x_3 \le 3, f_3(x_3) = 0 \qquad (22\text{-}5)$$

Furthermore, $F_3(x_3)$ is calculated as follows.

$$\text{For } x_3 \text{ satisfying } 0 < x_3 \le 1, F_3(x_3) = (1/6) * x_3^3 \qquad (23\text{-}1)$$

For $x_3$ satisfying $1 \le x_3 \le \sqrt{2}$,

$$F_3(x_3) = 1/2 - (1/3) * x_3 * (3/2 - x_3) * (3 - x_3) \qquad (23\text{-}2)$$

For $x_3$ satisfying $\sqrt{2} \le x_3 \le 2$,

$$F_3(x_3) = 7/2 - (13/6) * \sqrt{2}$$

$$- (1/6) * (x_3 - \sqrt{2})^3 - (1/2) * (\sqrt{2} - 1) * (x_3 - \sqrt{2})^2$$

$$+ (3 * \sqrt{2} - (7/2)) * (x_3 - \sqrt{2}) \qquad (23\text{-}3)$$

For $x_3$ satisfying $2 \le x_3 \le 1 + \sqrt{2}$,

$$F_3(x_3) = (14/3) * \sqrt{2} - 35/6$$

$$+ (1/3) * (x_3 - 2)^3 - (1/2) * (x_3 - 2)^2$$

$$+ (2 * \sqrt{2} - 5/2) * (x_3 - 2) \qquad (23\text{-}4)$$

For $x_3$ satisfying $1 + \sqrt{2} \le x_3 \le 3$,

$$F_3(x_3) = 2 * \sqrt{2} - 2 \qquad (23\text{-}5)$$

Function $f_{3B}(x_3)$ has the following relationship with $g_1(x_1)$ and $g_2(x_2)$.

$$f_{3B}(x_3) = \int g_2(x) * g_1(x_3 - x)dx \qquad (24)$$

In Equation (24), $\int$ means integration from $\max(0, x_3 - 1)$ to $\min(\sqrt{3}, x_3)$ with respect to x.

The following equations are obtained by calculating Equation (24).

$$\text{For } x_3 \text{ satisfying } 0 < x_3 \le 1, f_{3B}(x_3) = (1/2) * x_3^2 \qquad (25\text{-}1)$$

$$\text{For } x_3 \text{ satisfying } 1 \le x_3 \le \sqrt{3}, f_{3B}(x_3) = 3/4 - (x_3 - 3/2)^2 \qquad (25\text{-}2)$$

For $x_3$ satisfying $\sqrt{3} \le x_3 \le 2$,

$$f_{3B}(x_3) = 2 * \sqrt{3} - 5/2 - (1/2) * (x_3 - 1)^2 \qquad (25\text{-}3)$$

For $x_3$ satisfying $2 \le x_3 \le 1 + \sqrt{3}$,

$$f_{3B}(x_3) = 2 * \sqrt{3} - 7/2 + (1/2) * (3 - x_3)^2) \qquad (25\text{-}4)$$

$$\text{For } x_3 \text{ satisfying } 1 + \sqrt{3} \le x_3 \le 3, f_{3B}(x_3) = 0 \qquad (25\text{-}5)$$

Furthermore, $F_{3B}(x_3)$ is calculated as follows.

$$\text{For } x_3 \text{ satisfying } 0 < x_3 \le 1, F_{3B}(x_3) = (1/6) * x_3^2 \qquad (26\text{-}1)$$

For $x_3$ satisfying $1 \le x_3 \le \sqrt{3}$,

$$F_{3B}(x_3) = 1/2 - (1/3) * x_3 * (3/2 - x_3) * (3 - x_3) \qquad (26\text{-}2)$$

For $x_3$ satisfying $\sqrt{3} \le x_{3b} \le 2$,

$$F_{3B}(x_3) = 5 - (5/2) * \sqrt{3}$$
$$+ (7/3) * (\sqrt{3} - 3/2) * (x_3 - \sqrt{3})$$
$$- (1/6) * (x_3 - \sqrt{3}) * x_3 * (x_3 - 3 + \sqrt{3}) \qquad (26\text{-}3)$$

For $x_3$ satisfying $2 \le x_3 \le 1 + \sqrt{3}$,

$$F_{3B}(x_3) = 5 * \sqrt{3} - 47/6$$
$$+ (2 * \sqrt{3} - 10/3) * (x_3 - 2)$$
$$+ (1/6) * (x_3 - 2) * (x_3 - 3) * (x_3 - 4) \qquad (26\text{-}4)$$

For $x_3$ satisfying $1 + \sqrt{3} \le x_3 \le 3$,

$$F_{3B}(x_3) = 2 * \sqrt{3} - 5/2 \tag{26-5}$$

Function f4(x4) has the following relationship with $g_1(x_1)$ and f3(x3).

$$f_4(x_4) = \int f_3(x) * g_1(x_4 - x)dx \tag{27}$$

In Equation (27), $\int$ means integration from $\max(0, x_4 - 1)$ to $\min(\sqrt{3}, x_4)$ with respect to x.
The following equations are obtained by calculating Equation (27).

$$\text{For } x_4 \text{ satisfying } 0 < x_4 \leq 1, f_4(x_4) = (1/6) * x_4^3 \tag{28-1}$$

For $x_4$ satisfying $1 \leq x_4 \leq \sqrt{2}$,

$$f_4(x_4) = 2/3 - (1/2) * x_4 * (x_4 - 2)^2 \tag{28-2}$$

For $x_4$ satisfying $\sqrt{2} \leq x_4 \leq \sqrt{3}$,

$$f_4(x_4) = 14/3 - 3 * \sqrt{2}$$

$$- (1/3) * (x_4 - \sqrt{2})^3$$

$$- (\sqrt{2} - 1) * (x_4 - \sqrt{2})^2$$

$$+ (4 * \sqrt{2} - 5) * (x_4 - \sqrt{2}) \tag{28-3}$$

For $x_4$ satisfying $\sqrt{3} \leq x_4 \leq 2$,

$$f_4(x_4) = (2/3) * \sqrt{2} + (2 * \sqrt{2} - 3) * \sqrt{3}$$

$$- (1/6) * (x_4 - 1)^3 \tag{28-4}$$

For $x_4$ satisfying $2 \leq x_4 \leq 1 + \sqrt{2}$,

$$f_4(x_4) = (2/3) * \sqrt{2} + (2 * \sqrt{2} - 3) * \sqrt{3}$$

$$- 1/2 + (1/3) * (x_4 - 1) * (5/2 - x_4) * (4 - x_4)) \tag{28-5}$$

For $x_4$ satisfying $1 + \sqrt{2} \leq x_4 \leq 1 + \sqrt{3}$,

$$f_4(x_4) = - (7/2) + (17/6) * \sqrt{2} + (2 * \sqrt{2} - 3) * \sqrt{3}$$

$$+ (1/6) * (x_4 - 1 - \sqrt{2})^3$$

$$+ (1/2) * (\sqrt{2} - 1) * (x_4 - 1 - \sqrt{2})^2$$

$$- (3 * \sqrt{2} - (7/2)) * (x_3 - 1 - \sqrt{2}) \tag{28-6}$$

$$\text{For } x_4 \text{ satisfying } 1 + \sqrt{3} \leq x_4 \leq 4, \ f_4(x_4) = 0 \qquad (28\text{-}7)$$

Furthermore, $F_4(x_4)$ is calculated as follows.

$$\text{For } x_4 \text{ satisfying } 0 < x_4 \leq 1, \ F_4(x_4) = (1/24) * x_4^4 \qquad (29\text{-}1)$$

For $x_4$ satisfying $1 \leq x4 \leq \sqrt{2}$,

$$F_4(x_4) = (1/24)$$

$$- (1/8) * (x_4 - 1)^4 + (1/6) * (x_4 - 1)^3$$

$$+ (1/4) * (x_4 - 1)^2 - (1/6) * (x_4 - 1) \qquad (29\text{-}2)$$

$$\text{For } x_4 \text{ satisfying } \sqrt{2} \leq x_4 \leq \sqrt{3},$$

$$F_4(x_4) = 2 * \sqrt{2} - (8/3)$$

$$- (1/12) * (x_4 - \sqrt{2})^4$$

$$- (1/3) * (\sqrt{2} - 1) * (x_4 - \sqrt{2})^3$$

$$+ (1/2) * (5 - 4 * \sqrt{2}) * (x_4 - \sqrt{2})^2$$

$$+ (3 * \sqrt{2} - (11/3)) * (x_4 - \sqrt{2}) \qquad (29\text{-}3)$$

For $x_4$ satisfying $\sqrt{3} \leq x_4 \leq 2$,

$$F_4(x_4) = F_4(\sqrt{3})$$

$$+ ((2/3) * \sqrt{2} + (2 * \sqrt{2} - 3) * \sqrt{3}) * (x_4 - \sqrt{3})$$

$$- (1/24) * ((x_4 - 1)^4 - (\sqrt{3} - 1)^4) \qquad (29\text{-}4)$$

For $x_4$ satisfying $2 \leq x_4 \leq 1 + \sqrt{2}$,

$$F_4(x_4) = F_4(2)$$

$$+ (1/12) * (x_4 - 2)^4 - (1/6) * (x_4 - 2)^3 - (1/4) * (x_4 - 2)^2$$

$$+ (- (1/6) + (2/3) * \sqrt{2} + (2 * \sqrt{2} - 3) * \sqrt{3})$$

$$* (x_4 - 2) \qquad (29\text{-}5)$$

For $x_4$ satisfying $1 + \sqrt{2} \leq x_4 \leq 1 + \sqrt{3}$,

$$F_4(x_4) = F_4 (1 + \sqrt{2})$$

$$+ (1/24) * (x_4 - 1 - \sqrt{2})^4$$

$$+ (1/6) * (\sqrt{2} - 1) * (x_4 - 1 - \sqrt{2})^3$$

$$- ((3/2) * \sqrt{2} - (7/4)) * (x_3 - 1 - \sqrt{2})^2$$

$$+ (- (7/2) + (17/6) * \sqrt{2} + (2 * \sqrt{2} - 3) * \sqrt{3})$$

$$* (x_3 - 1 - \sqrt{2}) \qquad (29\text{-}6)$$

$$\text{For } x_4 \text{ satisfying } 1 + \sqrt{3} \leq x_4 \leq 4, F_4(x_4) = F_4 (1 + \sqrt{3}) \qquad (29\text{-}7)$$

The wind measurement lidar device 1 cannot calculate the wind speed for some cases in which the first integrated spectrum without blocking is generated. When the phenomenon that the wind speed cannot be calculated in the first integrated spectrum without blocking occurs, the condition for the SN ratio of the second integrated spectrum obtained by integrating one first integrated spectrum without blocking and n-pieces of first integrated spectra with partial blocking after the phenomenon being greater than or equal to the first threshold value is that the non-blocking rate $x_n$ of the second integrated spectrum obtained by integrating the n-pieces of first integrated spectra with partial blocking satisfies $x_n \geq (\sqrt{n + 1} - 1)$.

The following functions are used in order to calculate the probability of calculating the wind speed from the second integrated spectrum after the phenomenon in which the wind measurement lidar device 1 cannot calculate the wind speed with the first integrated spectrum without blocking occurs.

$h_2(x_2)$: probability distribution function of the non-blocking rate $x_2$ assuming that $g_1(x_1) = 0$ is satisfied for $x_1$ satisfying $x_1 \geq (\sqrt{2} - 1)$.

$H_2(x_2)$: cumulative distribution function of non-blocking rate $x_2$. $H_2(x_2) = \int h_2(x)dx$. Symbol $\int$ denotes integration from 0 to $x_2$ with respect to x.

$h_{2B}(x_2)$: probability distribution function of the non-blocking rate $x_2$ assuming that $g_1(x_1) = 0$ is satisfied for $x_1$ satisfying $x_1 \geq (\sqrt{3} - 1)$.

$H_{2B}(x_2)$: cumulative distribution function of non-blocking rate $x_2$. $H_{2B}(x_2) = \int h_{2B}(x)dx$. Symbol $\int$ denotes integration from 0 to $x_2$ with respect to x.

$h_3(x_3)$: probability distribution function of the non-blocking rate $x_3$ assuming that $h_2(x_2) = 0$ is satisfied for $x_2$ satisfying $x_2 \geq (\sqrt{3} - 1)$.

$H_3(x_3)$: cumulative distribution function of the non-blocking rate $x_3$. $H_3(x_3) = \int h_3(x)dx$. Symbol $\int$ denotes integration from 0 to $x_3$ with respect to x.

$h_{3B}(x_3)$: probability distribution function of the non-blocking rate $x_3$ assuming that $g_2(x_2) = 0$ is satisfied for $x_2$ satisfying $x_2 \geq (\sqrt{3} - 1)$.

$H_{3B}(x_3)$: cumulative distribution function of non-blocking rate $x_3$. $H_{3B}(x_3) = \int h_{3B}(x)dx$. Symbol $\int$ denotes integration from 0 to $x_3$ with respect to x.

Function $h_2(x_2)$ has the following relationship with $g_1(x_1)$.

$$h_2(x_2) = \int g_1(x) * g_1(x_2 - x)dx \qquad (30)$$

In Equation (30), $\int$ means integration from $\max(0, x_2 - 1)$ to $\min((\sqrt{2} - 1), x_2)$ with respect to x.

$h_2(x_2)$ is calculated as follows.

$$\text{For } x_2 \text{ satisfying } 0 < x_2 \leq \sqrt{2} - 1, h_2(x_2) = x_2 \qquad (31\text{-}1)$$

$$\text{For } x_2 \text{ satisfying } \sqrt{2} - 1 \leq x_2 < 1, h_2(x_2) = \sqrt{2} - 1 \qquad (31\text{-}2)$$

$$\text{For } x_2 \text{ satisfying } 1 \leq x_2 < \sqrt{2}, \; h_2(x_2) = \sqrt{2} - x_2 \qquad (31\text{-}3)$$

$$\text{For } x_2 \text{ satisfying } \sqrt{2} \leq x_2 < 2, \; h_2(x_2) = 0 \qquad (31\text{-}4)$$

$H_2(x_2)$ is calculated as follows.

For $x_2$ satisfying $0 < x_2 \leq \sqrt{2} - 1$,

$$H_2(x_2) = (1/2) * x_2^2 \qquad (32\text{-}1)$$

For $x_2$ satisfying $\sqrt{2} - 1 \leq x_2 < 1$,

$$H_2(x_2) = (\sqrt{2} - 1) * (x_2 - (1/2) * (\sqrt{2} - 1)) \qquad (32\text{-}2)$$

For $x_2$ satisfying $1 \leq x_2 < \sqrt{2}$,

$$H_2(x_2) = \sqrt{2} - 1 - (1/2) * (\sqrt{2} - x_2)^2 \qquad (32\text{-}3)$$

For $x_2$ satisfying $\sqrt{2} \leq x_2 < 2$,

$$H_2(x_2) = \sqrt{2} - 1 \qquad (32\text{-}4)$$

Function $h_3(x_3)$ has the following relationship with $g_1(x_1)$ and $h_2(x_2)$.

$$h_3(x_3) = \int h_2(x) * g_1(x_3 - x)dx \qquad (33)$$

In Equation (33), $\int$ means integration from $\max(0, x_3 - 1)$ to $\min((\sqrt{3} - 1), x_3)$ with respect to x.

By calculating Equation (33), $h_3(x_3)$ is obtained as follows.

$$\text{For } x_3 \text{ satisfying } 0 < x_3 \leq \sqrt{2} - 1, \; h_3(x_3) = (1/2) * x_3^2 \qquad (34\text{-}1)$$

For $x_3$ satisfying $\sqrt{2} - 1 \leq x_3 < \sqrt{3} - 1$,

$$h_3(x_3) = (\sqrt{2} - 1) * (x_3 - (1/2) * (\sqrt{2} - 1)) \qquad (34\text{-}2)$$

For $x_3$ satisfying $\sqrt{3} - 1 \leq x_3 < 1$,

$$h_3(x_3) = \sqrt{6} - \sqrt{3} - 1/2 \qquad (34\text{-}3)$$

For $x_3$ satisfying $1 \leq x_3 < \sqrt{2}$,

$$h_3(x_3) = \sqrt{6} - \sqrt{3} - 1/2 - (1/2) * (x_3 - 1)^2 \qquad (34\text{-}4)$$

For $x_3$ satisfying $\sqrt{2} \leq x_3 < \sqrt{3}$,

$$h_3(x_3) = \sqrt{(6)} - \sqrt{(3)} - 2 + \sqrt{(2)}$$

$$- (\sqrt{(2)} - 1) * (x_3 - \sqrt{(2)}) \qquad (34\text{-}5)$$

$$\text{For } x_3 \text{ satisfying } \sqrt{(3)} \leq x_3 < 3, h_3(x_3) = 0 \qquad (34\text{-}6)$$

$H_3(x_3)$ is calculated as follows.

$$\text{For } x_3 \text{ satisfying } 0 < x_3 \leq \sqrt{(2)} - 1, H_3(x_3) = (1/6) * x_3{}^3 \qquad (35\text{-}1)$$

For $x_3$ satisfying $\sqrt{(2)} - 1 \leq x_3 < \sqrt{(3)} - 1$,

$$H_3(x_3) = (1/6) * (\sqrt{(2)} - 1)^3$$

$$+ (1/2) * (\sqrt{(2)} - 1) * x_3 * (x_3 - (\sqrt{(2)} - 1)) \qquad (35\text{-}2)$$

For $x_3$ satisfying $\sqrt{(3)} - 1 \leq x_3 < 1$,

$$H_3(x_3) = (1/6) * (11 * \sqrt{(2)} - 10 - 3 * \sqrt{(3)})$$

$$+ (\sqrt{(6)} - \sqrt{(3)} - 1/2) * (x_3 - (\sqrt{(3)} - 1)) \qquad (35\text{-}3)$$

For $x_3$ satisfying $1 \leq x_3 < \sqrt{(2)}$,

$$H_3(x_3) = 1/3 + 2 * \sqrt{(6)} - (7/6) * \sqrt{(2)} - 2 * \sqrt{(3)}$$

$$+ (\sqrt{(6)} - \sqrt{(3)} - 1/2) * (x_3 - 1)$$

$$- (1/6) * (x_3 - 1)^3 \qquad (35\text{-}4)$$

For $x_3$ satisfying $\sqrt{(2)} \leq x_3 < \sqrt{(3)}$,

$$H_3(x_3) = 2 + \sqrt{(3)} - (5/2) * \sqrt{(2)}$$

$$+ (\sqrt{(2)} - 1) * (x_3 - \sqrt{(2)})$$

$$* (\sqrt{(3)} - (1/2) * (x_3 + \sqrt{(2)})) \qquad (35\text{-}5)$$

For $x_3$ satisfying $\sqrt{(3)} \leq x_3 < 3$,

$$H_3(x_3) = \sqrt{(6)} - \sqrt{(3)} - 1/2 \qquad (35\text{-}6)$$

Function $h_{2B}(x_2)$ has the following relationship with $g_1(x_1)$.

$$h_{2B}(x_2) = \int g_1(x) * g_1(x_2 - x)dx \qquad (36)$$

In Equation (36), $\int$ means integration from $\max(0, x_2 - 1)$ to $\min((\sqrt{(3)} - 1), x_2)$ with respect to x.
By calculating Equation (36), $h_{2B}(x_2)$ is obtained as follows.

$$\text{For } x_2 \text{ satisfying } 0 < x_2 \leq \sqrt{3} - 1, \, h_{2B}(x_2) = x_2 \qquad (37-1)$$

$$\text{For } x_2 \text{ satisfying } \sqrt{3} - 1 \leq x_2 < 1, \, h_{2B}(x_2) = \sqrt{3} - 1 \qquad (37-2)$$

$$\text{For } x_2 \text{ satisfying } 1 \leq x_2 < \sqrt{3}, \, h_{2B}(x_2) = \sqrt{3} - x_2 \qquad (37-3)$$

$$\text{For } x_2 \text{ satisfying } \sqrt{3} \leq x_2 < 2, \, h_{2B}(x_2) = 0 \qquad (37-4)$$

$H_{2B}(x_2)$ is calculated as follows.
For $x_2$ satisfying $0 < x_2 \leq \sqrt{3} - 1$,

$$H_{2B}(x_2) = (1/2) * x_2^2 \qquad (38-1)$$

For $x_2$ satisfying $\sqrt{3} - 1 \leq x_2 < 1$,

$$H_{2B}(x_2) = (\sqrt{3} - 1) * (x_2 - (1/2) * (\sqrt{3} - 1)) \qquad (38-2)$$

For $x_2$ satisfying $1 \leq x_2 < \sqrt{3}$,

$$H_{2B}(x_2) = \sqrt{3} - 1 - (1/2) * (\sqrt{3} - x_2)^2 \qquad (38-3)$$

For $x_2$ satisfying $\sqrt{3} \leq x_2 < 2$,

$$H_{2B}(x_2) = \sqrt{3} - 1 \qquad (38-4)$$

Function $h_{3B}(x_3)$ has the following relationship with $g_1(x_1)$ and $g_2(x_2)$.

$$h_{3B}(x_3) = \int g_2(x) * g_1(x_3 - x)dx \qquad (39)$$

In Equation (39), $\int$ means integration from $\max(0, x_3 - 1)$ to $\min((\sqrt{3} - 1), x_3)$ with respect to x.
$h_{3B}(x_3)$ is calculated as follows.

$$\text{For } x_3 \text{ satisfying } 0 < x_3 \leq \sqrt{3} - 1, \, h_{3B}(x_3) = (1/2) * x_3^2 \qquad (40-1)$$

For $x_3$ satisfying $\sqrt{3} - 1 \leq x_3 < 1$,

$$h_{3B}(x_3) = 2 - \sqrt{3} \qquad (40-2)$$

For $x_3$ satisfying $1 \leq x_3 < \sqrt{3}$,

$$h_{3B}(x_3) = 2 - \sqrt{3} - (1/2) * (x_3 - 1)^2 \qquad (40-3)$$

$$\text{For } x_3 \text{ satisfying } \sqrt{3} \leq x_3 < 3, \, h_{3B}(x_3) = 0 \qquad (40-4)$$

$H_{3B}(x_3)$ is calculated as follows.

$$\text{For } x_3 \text{ satisfying } 0 < x_3 \le \sqrt{3} - 1, \; H_{3B}(x_3) = (1/6) * x_3^3 \qquad (41\text{-}1)$$

For $x_3$ satisfying $\sqrt{3} - 1 \le x_3 < 1$,

$$H_{3B}(x_3) = \sqrt{3} - 5/3 + (2 - \sqrt{3}) * (x_3 - \sqrt{3} + 1) \qquad (41\text{-}2)$$

For $x_3$ satisfying $1 \le x_3 < \sqrt{3}$,

$$H_{3B}(x_3) = 16/3 - 3 * \sqrt{3}$$

$$+ (2 - \sqrt{3}) * (x_3 - 1) - (1/6) * (x_3 - 1)^3 \qquad (41\text{-}3)$$

For $x_3$ satisfying $\sqrt{3} \le x_3 < 3$,

$$H_{3B}(x_3) = 2 - \sqrt{3} \qquad (41\text{-}4)$$

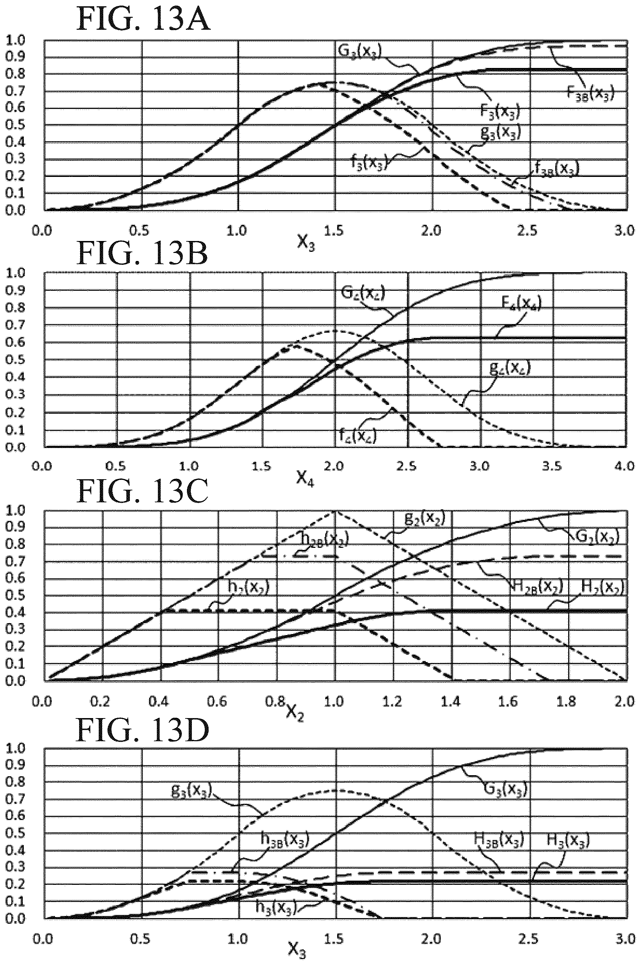

Illustrated in FIG. 13 are probability distribution functions and cumulative distribution functions with respect to non-blocking rates $x_2$, $x_3$, and $x_4$. FIG. 13 includes graphs each illustrating probability distribution functions and a cumulative distribution function with respect to non-blocking rates $x_2$, $x_3$, and $x_4$ used to evaluate the operation of the wind measurement lidar device according to the fifth embodiment. In FIG. 13A, $f_3(x_3)$, $F_3(x_3)$, $f_{3B}(x_3)$, $F_{3B}(x_3)$, $g_3(x_3)$, and $G_3(x_3)$ are illustrated. $f_3(x_3)$ is indicated by a thick broken line, $f_{3B}(x_3)$ is indicated by a one-dot chain line, and $g_3(x_3)$ is indicated by a thin broken line. $F_3(x_3)$ is indicated by a thick solid line, $F_{3B}(x_3)$ is indicated by a long broken line (a broken line with longer lines), and $G_3(x_3)$ is indicated by a thin solid line. f3(x3) is the same as $g_3(x_3)$ in a range of $x_3$ less than a value satisfying $x_3 = \sqrt{2}$ but starts to decrease from $x_3 = \sqrt{2}$ and equals zero at $x_3 = (1 + \sqrt{2})$. The difference between $g_3(x_3)$ and f3(x3) has a maximum value of 0.172 in the range of $x_3 = 2$ to $(1 + \sqrt{2})$. $f_{3B}(x_3)$ is smaller than $g_3(x_3)$ from $x_3 = \sqrt{3}$ and larger. The difference between $g_3(x_3)$ and $f_{3B}(x_3)$ increases up to $x_3 = 2$ and reaches a maximum value of 0.036 in the range of $x_3 = 2$ to $(1 + \sqrt{3})$.

In FIG. 13B, $f_4(x_4)$, $F_4(x_3)$, $g_4(x_4)$, and $G_4(x_4)$ are illustrated. $f_4(x_4)$ is indicated by a thick broken line, and $g_4(x_4)$ is indicated by a thin broken line. $F_4(x_4)$ is indicated by a thick solid line, and $G_4(x_4)$ is indicated by a thin solid line. f4(x4) is the same as $g_4(x_4)$ up to $\sqrt{2}$; however, a minute difference is generated from $x_4 = \sqrt{2}$ and larger. In f4(x4), the increase rate of the difference from $g_4(x_4)$ increases from $x_4 = \sqrt{3}$, and in the range of $x_4 = (1 + \sqrt{2})$ to $(1 + \sqrt{3})$, a difference of about 0.33 occurs between $g_3(x_3)$ and $f_{3B}(x_3)$. When $x_4 = (1 + \sqrt{3})$ is satisfied, $f_4(x_4)$ equals zero.

In FIG. 13C, $h_2(x_2)$, $H_2(x_2)$, $h_{2B}(x_2)$, $H_{2B}(x_2)$, $g_2(x_2)$, and $G_2(x_2)$ are illustrated. $h_2(x_2)$ is indicated by a thick broken line, $h_{2B}(x_2)$ is indicated by a one-dot chain line, and $g_2(x_2)$ is indicated by a thin broken line. $H_2(x_2)$ is indicated by a thick solid line, $H_{2B}(x_2)$ is indicated by a long broken line, and $G_2(x_2)$ is indicated by a thin solid line. $h_2(x_2)$ is the same as $g_2(x_2)$ up to $x_2 = (\sqrt{2} - 1)$ but has a constant value of $h_2(x_2) = (\sqrt{2} - 1)$ in the range of $x_2 = (\sqrt{2} - 1)$ to 1. $h_2(x_2)$ decreases linearly for $x_2$ satisfying $x_2 > 1$ and equals zero at $x_2$ satisfying $x_2 = \sqrt{2}$. $h_{2B}(x_2)$ is the same as $g_2(x_2)$ up to $x_2$ satisfying $x_2 = (\sqrt{3} - 1)$ but has a constant value of $h_{2B}(x_2) = (\sqrt{3} - 1)$ in the range of $x_2 = (\sqrt{3} - 1)$ to 1. $h_{2B}(x_2)$ decreases linearly for $x_2$ satisfying $x_2 > 1$ and equals zero at $x_2$ satisfying $x_2 = \sqrt{3}$.

In FIG. 13D, $h_3(x_3)$, $H_3(x_3)$, $h_{3B}(x_3)$, $H_{3B}(x_3)$, $g_3(x_3)$, and $G_3(x_3)$ are illustrated. h3(x3) is indicated by a thick broken line, $h_{3B}(x_3)$ is indicated by a one-dot chain line, and $g_3(x_3)$ is indicated by a thin broken line. $H_3(x_3)$ is indicated by a thick solid line, $H_{3B}(x_3)$ is indicated by a long broken line, and $G_3(x_3)$ is indicated by a thin solid line. $h_3(x_3)$ is the same as $g_3(x_3)$ in a range of $x_3$ less than a value satisfying $x_3 = (\sqrt{2} - 1)$ but starts to decrease slightly from $x_3 = (\sqrt{2} - 1)$ and has a constant value of $h_3(x_3) = \sqrt{6} - \sqrt{3} - 1/2$ in the range of $x_3 = (\sqrt{3} - 1)$ to 1. $h_3(x_3)$ decreases with a quadratic function for $x_3$ satisfying $x_3 > 1$ and equals zero at $x_3$ satisfying $x_3 = \sqrt{3}$. $h_{3B}(x_3)$ is the same as $g_3(x_3)$ up to $x_3 = (\sqrt{3} - 1)$ but has a constant value of $h_{3B}(x_3) = (2 - \sqrt{3})$ in the range of $x_3 = (\sqrt{3} - 1)$ to 1. $h_{3B}(x_2)$ decreases with a quadratic function for $x_2$ satisfying $x_2 > 1$, and equals zero at $x_3$ satisfying $x_3 = \sqrt{3}$.

Let us return to the description of the calculation of $\zeta n$ and other calculated values. The probability that the first integrated spectrum without blocking is generated is constant being $\alpha$ regardless of what number of times the first integrated spectrum is generated. For the first integrated spectrum at the first time, the second integrated spectrum is the same as the first integrated spectrum, and thus $\gamma_1 = \varepsilon_1 = 0$ are satisfied. Meanwhile, the probability $\zeta_1$ that the wind speed cannot be calculated with the first integrated spectrum at the first time, $\zeta_1 = 1 - \alpha$ is satisfied. Since a value in the wind measurement lidar device 1E is calculated for $\gamma_2$ and other calculated values, a subscript E is added in the notation, such as $\gamma_{2E}$.

In the wind measurement lidar device 1E, the wind speed can be calculated from the first integrated spectrum when the first integrated spectrum is not blocked regardless of what number of times the first integrated spectrum is generated. The unfinished calculation probability $\zeta_{2E}$ and other probabilities can be calculated as follows.

$$\zeta_{2E} = (1 - \alpha)^2 - \varepsilon_{2E} \qquad (42)$$

$$\zeta_{3E} = \zeta_{2E} * (1 - \alpha) - \varepsilon_{3E} \qquad (43)$$

$$\zeta_{4E} = \zeta_{3E} * (1 - \alpha) - \varepsilon_{4E} \qquad (44)$$

For the first integrated spectrum without blocking, the non-blocking rate y = 1 is satisfied, and the SN ratio is greater than or equal to the first threshold value. In order for the SN ratio of the second integrated spectrum generated at the second time to be not greater than or equal to the first threshold value, $x_2 < \sqrt{2}$ is required to be satisfied. When $x_1 < (\sqrt{2} - 1)$ is satisfied in the second integrated spectrum generated at the first time, $x_2 < \sqrt{2}$ is satisfied in the second integrated spectrum integrated with the first integrated spectrum without blocking that is generated at the second time. In order to satisfy $x_1 < (\sqrt{2} - 1)$, it is necessary that the first integrated spectrum with partial blocking in which $y < (\sqrt{2} - 1)$ or the first integrated spectrum with complete blocking is generated at the first time. Therefore, $\gamma_{2E}$ can be calculated by the following equations.

$$\gamma_{2E} = \alpha * ((1 - \alpha - \beta) * G_1(\sqrt{2} - 1) + \beta)$$

$$= \alpha * ((1 - \alpha - \beta) * (\sqrt{2} - 1) + \beta) \qquad (45)$$

In order for the SN ratio of the second integrated spectrum of the second time to be greater than or equal to the first threshold value, the first integrated spectra of the first time and the second time are required to be first integrated spectra with partial blocking, and $x_2 \geq \sqrt{2}$ is required to be satisfied. Therefore, $\varepsilon_{2E}$ can be calculated by the following equations.

$$\varepsilon_{2E} = (1 - \alpha - \beta)^2 * (1 - G_2(\sqrt{2}))$$

$$= (1 - \alpha - \beta)^2 * (\sqrt{2} - 1)^2 \qquad (46)$$

When the first integrated spectrum without blocking is generated at the third time, the non-blocking rate $x_2$ is required to satisfy $x_2 < (\sqrt{3} - 1)$ in order for the SN ratio of the second integrated spectrum at the third time to be not greater than or equal to the first threshold value. In the wind measurement lidar device 1E, $x_2 < (\sqrt{3} - 1)$ is satisfied in the following three situations.

(A1) A situation where two first integrated spectra with partial blocking are generated, and $x_2 < (\sqrt{3} - 1)$ is satisfied.
(A2) A situation where one first integrated spectrum with complete blocking is generated, and one first integrated spectrum with partial blocking where $y < (\sqrt{3} - 1)$ is satisfied is generated.
(A3) A situation where two first integrated spectra with complete blocking are generated.

Therefore, $\gamma_{3E}$ can be calculated by the following equations. The degree n of the cumulative distribution function $G_n(x_n)$ of the non-blocking rate is the number of first integrated pulses with partial blocking.

$$\gamma_{3E} = \alpha * ((1 - \alpha - \beta)^2 * G_2(\sqrt{3} - 1)$$

$$+ 2 * \beta * (1 - \alpha - \beta) * G_1(\sqrt{3} - 1)) + \beta^2)$$

$$= \alpha * ((1 - \alpha - \beta)^2 * (2 - \sqrt{3}))$$

$$+ 2 * \beta * (1 - \alpha - \beta) * (\sqrt{3} - 1) + \beta^2) \qquad (47)$$

In order for the SN ratio of the second integrated spectrum at the third time to be greater than or equal to the first threshold value, it is necessary that the non-blocking rates $x_3$ and $x_2$ satisfy $x_3 \geq \sqrt{3}$ and $x_2 < \sqrt{2}$. It is necessary to satisfy $x_2 < \sqrt{2}$ in order for the SN ratio of the second integrated spectrum at the second time to be not greater than or equal to the first threshold value. $x_3 \geq \sqrt{3}$ and $x_2 < \sqrt{2}$ are satisfied in the following two situations.

(B1) A situation where three first integrated spectra with partial blocking are generated, and $x_3 \geq \sqrt{3}$ is satisfied.
(B2) A situation where one first integrated spectrum with complete blocking is generated at the first time or the second time, two first integrated spectra with partial blocking are generated, and $x_3 \geq \sqrt{3}$ is satisfied.

Therefore, $\varepsilon_{3E}$ can be calculated by the following equation. Since the probability is calculated under the condition of $x_2 < \sqrt{2}$ is satisfied, $F_3(x_3)$ is used instead of $G_3(x_3)$.

$$\varepsilon_{3E} = (1 - \alpha - \beta)^3 * (F_3(1 + \sqrt{2}) - F_3(\sqrt{3}))$$

$$+ 2 * \beta * (1 - \alpha - \beta)^2 * (1 - G_2(\sqrt{3})) \qquad (48)$$

When the first integrated spectrum without blocking is generated at the fourth time, $x_3 < 1$ is required to be satisfied in order for the SN ratio of the second integrated spectrum at the fourth time to be not greater than or equal to the first threshold value. Here, $(\sqrt{4} - 1)) = 1$ is calculated. $x_3 < 1$ is satisfied in the following four situations.

(C1) A situation where three first integrated spectra with partial blocking are generated, and $x_3 < 1$ is satisfied.
(C2) A situation where one first integrated spectrum with complete blocking is generated, two first integrated spectra with partial blocking are generated, and $x_3 < 1$ is satisfied.
(C3) A situation where two first integrated spectra with complete blocking are generated, and one first integrated spectrum with partial blocking in which $y < 1$ is generated.
(C4) A situation where three first integrated spectra with complete blocking are generated.

Therefore, $\gamma_{4E}$ can be calculated by the following equations.

$$\gamma_{4E} = \alpha*((1 - \alpha - \beta)^3 * G_3(1)$$

$$+ 3 * \beta * (1 - \alpha - \beta)^2 * G_2(1)$$

$$+ 3 * \beta^2 * (1 - \alpha - \beta) * G_1(1) + \beta^3)$$

$$= \alpha * ((1/6) * (1 - \alpha - \beta)^3$$

$$+ (3/2) * \beta * (1 - \alpha - \beta)^2$$

$$+ 3 * \beta^2 * (1 - \alpha - \beta) + \beta^3) \qquad (49)$$

In order for the SN ratio of the second integrated spectrum at the fourth time to be greater than or equal to the first threshold value, $x_4 \geq 2 (= \sqrt{4})$, $x_3 < \sqrt{3}$, and $x_2 < \sqrt{2}$ are required to be satisfied. Inequations $x_3 < \sqrt{3}$ and $x_2 < \sqrt{2}$ represent that the SN ratios of the second integrated spectra at the second time and the third time are not greater than or equal to the first threshold value. $x_4 \geq 2$ is satisfied in the following three situations.

(D1) A situation where four first integrated spectra with partial blocking are generated, and $x_4 \geq 2$ is satisfied.

(D2) A situation where the first integrated spectra with partial blocking in which $x_2 < \sqrt{2}$ is satisfied are generated at the first time and the second time, the first integrated spectrum with complete blocking is generated at the third time, the first integrated spectrum with partial blocking is generated at the fourth time, and $x_4 \geq 2$ is satisfied.

(D3) A situation where the first integrated spectrum with complete blocking is generated for the first time or the second time, three first integrated spectra with partial blocking are generated, and $x_4 \geq 2$ is satisfied.

Therefore, $\varepsilon_{4E}$ can be calculated by the following equation. Since the probability is calculated under the conditions of $x_3 < \sqrt{3}$ and $x_2 < \sqrt{2}$ are satisfied, $F_4(x_4)$ is used in (D1). $F_3(x_3)$ is used in (D2), and $F_{3B}(x_3)$ is used in (D3).

$$\varepsilon_{4E} = (1 - \alpha - \beta)^4 * (F_4(1 + \sqrt{3})) - F_4(2))$$

$$+\beta * (1 - \alpha - \beta)^3 * (F_3(1 + \sqrt{2})) - F_3(2)$$

$$+2 * \beta * (1 - \alpha - \beta)^3 * (F_{3B}(1 + \sqrt{3})) - F_{3B}(2)) \qquad (50)$$

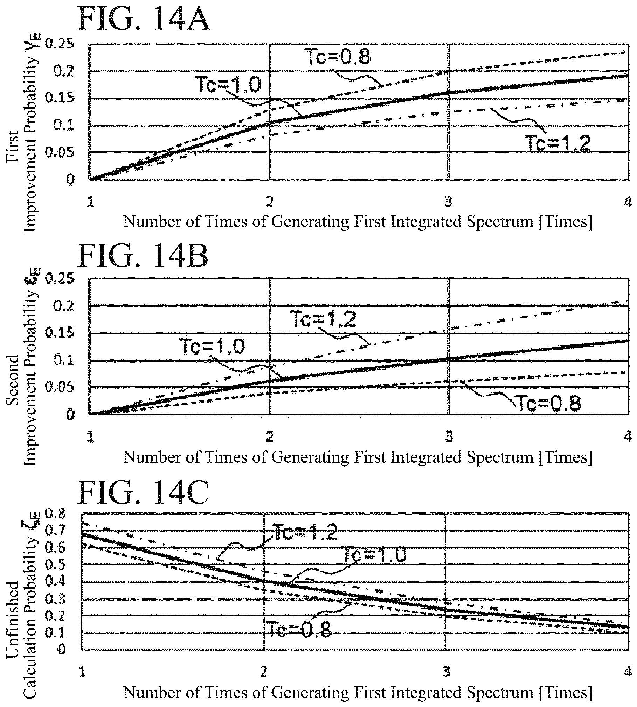

Illustrated in FIG. 14 are graphs showing changes in the first improvement probability $\gamma_{nE}$, the second improvement probability $\varepsilon_{nE}$, and the unfinished calculation probability $\zeta_{nE}$ with respect to the number of times of generating the first integrated spectrum in the wind measurement lidar device 1E. FIG. 14 includes graphs illustrating the change in the probability related to the number of times of generating the first integrated spectrum against the number of times of generating the first integrated spectrum in the wind measurement lidar device according to the fifth embodiment. In FIG. 14, the case of Tc = 1.0 is indicated by a solid line, the case of Tc = 0.8 is indicated by a broken line, and the case of Tc = 1.0 is indicated by a one-dot chain line. In FIG. 14A, the first improvement probability $\gamma_{nE}$ is illustrated. In FIG. 14B, the second improvement probability $\varepsilon_{nE}$ is illustrated. In FIG. 14C, the unfinished calculation probability $\zeta_{nE}$ is illustrated. For the first improvement probability $\gamma_{nE}$ and the second improvement probability $\varepsilon_{nE}$, the cumulative probability is displayed.

In the case of Tc = 1.0, the first improvement probability $\gamma_{nE}$ are calculated as follows $\gamma_{2E} = 0.105$, $\gamma_{2E} + \gamma_{3E} = 0.161$ ($\gamma_{3E} = 0.056$), and $\gamma_{2E} + \gamma_{3E} + \gamma_{4E} = 0.191$ ($\gamma_{4E} = 0.030$). As the number of times of generation n increases, $\gamma_{nE}$ decreases. Assuming that $\gamma_{nE}$ decreases in a geometrical progression, $\gamma_{sumE}$ is estimated to be about 0.23. Similar trends are shown also for the cases of Tc = 0.8 and Tc = 1.2. In the case of Tc = 0.8, $\gamma_{nE}$ is larger than that in the case of Tc = 1.0. In the case of Tc = 1.2, $\gamma_{nE}$ is smaller than that in the case of Tc = 1.0. The reason why $\gamma_{sumE}$ is larger as Tc is smaller is that the probability $\beta$ that the first integrated spectrum with complete blocking is generated is larger as Tc is smaller.

In the case of Tc = 1.0, the second improvement probability $\varepsilon_{nE}$ are calculated as follows $\varepsilon_{2E} = 0.062$, $\varepsilon_{2E} + \varepsilon_{3E} = 0.103$ ($\varepsilon_{3E} = 0.041$), and $\varepsilon_{2E} + \varepsilon_{3E} + \varepsilon_{4E} = 0.133$ ($\varepsilon_{4E} = 0.029$). As the number of times of generation n increases, $\varepsilon_{nE}$ decreases. Assuming that $\varepsilon_{nE}$ decreases in a geometrical progression, $\varepsilon_{sumE}$ is calculated to be about 0.20. Similar trends are shown also for the cases of Tc = 0.8 and Tc = 1.2. In the case of Tc = 1.2, $\varepsilon_{nE}$ is larger than that in the case of Tc = 1.0. In the case of Tc = 0.8, $\varepsilon_{nE}$ is smaller than that in the case of Tc = 1.0. It can be considered that the reason why $\varepsilon_{sumE}$ increases as Tc increases is due to the fact that the probability $(1 - \alpha - \beta)$ that the first integrated spectrum with partial blocking is generated increases as Tc increases.

In the case of Tc = 1.0, the unfinished calculation probability $\zeta_{nE}$ are calculated as follows $\zeta_{1E} = 0.684$, $\zeta_{2E} = 0.406$ ($\zeta_{2E} = 0.594 * \zeta_{1E}$), $\zeta_{3E} = 0.236$ ($\zeta_{3E} = 0.581 * \zeta_{2E}$), and $\zeta_{4E} = 0.132$ ($\zeta_{4E} = 0.560 * \zeta_{3E}$). As the number of times of generation n increases, $\zeta_{nE}$ decreases. Similar trends are shown also for the cases of Tc = 0.8 and Tc = 1.2. In the case of Tc = 1.2, $\zeta_{nE}$ is larger than that in the case of Tc = 1.0. In the case of Tc = 0.8, $\zeta_{nE}$ is smaller than that in the case of Tc = 1.0. It can be considered that the reason why $\zeta_{nE}$ decreases as Tc decreases is due to the fact that the probability $\alpha$ that the first integrated spectrum without blocking is generated increases as Tc decreases. As the number of times of generation n increases, the difference in $\zeta_{nE}$ due to the difference in Tc decreases.

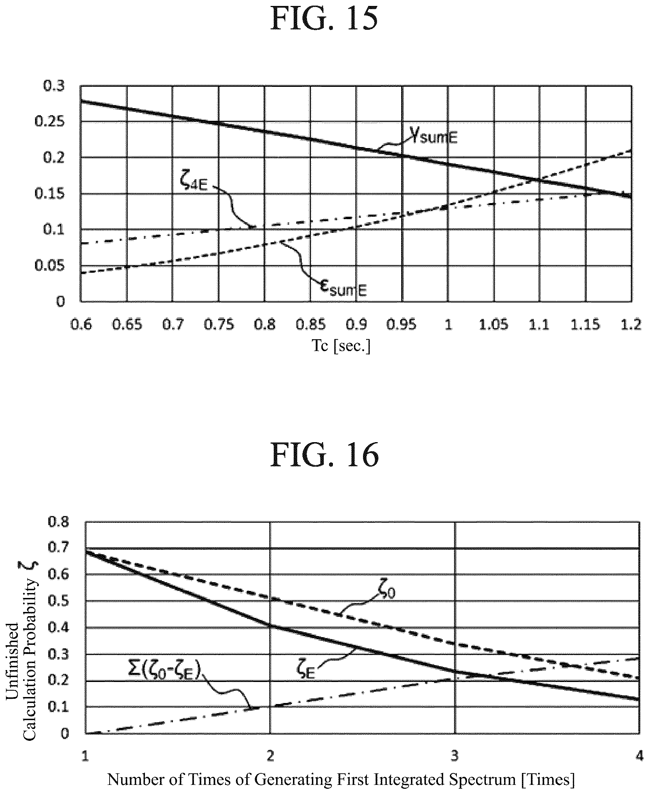

A graph showing changes in the first improvement total probability $\gamma_{sumE}$, the second improvement total probability $\varepsilon_{sumE}$, and the unfinished calculation probability $\zeta_{4E}$ against the integration time Tc of the first integrated spectrum in the wind measurement lidar device 1E is illustrated in FIG. 15. FIG. 15 is a graph illustrating changes in the probability related to the number of times of generating the first integrated spectrum against the integration time Tc of the first integrated spectrum in the wind measurement lidar device according to the fifth embodiment. In FIG. 15, the first improvement total probability $\gamma_{sumE}$ is indicated by a solid line, the second improvement total probability $\varepsilon_{sumE}$ is indicated by a broken line, and the unfinished calculation probability $\zeta_{4E}$ is indicated by a one-dot chain line. The first improvement total probability $\gamma_{sumE}$ is approximated by $\gamma_{sumE} \approx (\gamma_{2E} + \gamma_{3E} + \gamma_{4E})$. The second improvement total probability $\varepsilon_{sumE}$ is approximated by $\varepsilon_{sumE} \approx (\varepsilon_{2E} + \varepsilon_{3E} + \varepsilon_{4E})$.

The first improvement total probability $\gamma_{sumE}$ are calculated as follows $\gamma_{sumE} > 0.191$ in the case of Tc = 1.0, $\gamma_{sumE} > 0.146$ in the case of Tc = 1.2, and $\gamma_{sumE} > 0.236$ in the case of Tc = 0.8. In the wind measurement lidar device 1E, the number of times of generating the first integrated spectrum until the wind speed is calculated can be reduced as compared with that in the wind measurement lidar device 1 with a probability of about 20%. The reason why the first improvement total probability $\gamma_{sumE}$ is large when Tc is small is because $\beta$ is large when Tc is small.

The second improvement total probability $\varepsilon_{sumE}$ are calculated as follows $\varepsilon_{sumE} > 0.133$ in the case of Tc = 1.0, $\varepsilon_{sumE} > 0.209$ in the case of Tc = 1.2, and $\varepsilon_{sumE} > 0.077$ in the case of Tc = 0.8. Since the wind measurement lidar device 1E calculates the wind speed from the second integrated spectrum when the wind speed cannot be calculated from the first integrated spectra, the number of times of generating the first integrated spectrum can be reduced with a probability of about 15% or more as compared with the case of calculating the wind speed only from the first integrated spectra. The reason why the second improvement total probability $\varepsilon_{sumE}$ is large when Tc is large is that $\alpha$ is small and $(1 - \alpha - \beta)$ is large.

The unfinished calculation probability $\zeta_{4E}$ are calculated as follows $\zeta_{4E} = 0.132$ in the case of Tc = 1.0, $\zeta_{4E} = 0.155$ in the case of Tc = 1.2, and $\zeta_{4E} = 0.107$ in the case of Tc = 0.8. The reason why the unfinished calculation probability $\zeta_{4E}$ is small when Tc is small is that $\alpha$ is large when Tc is small.

As a comparative example, the unfinished calculation probability $\zeta_{n0}$ of the wind measurement lidar device 1 is examined. Here, the subscript 0 indicates that the value is a calculation value for the wind measurement lidar device 1. The unfinished calculation probability $\zeta_{n0}$ is different from the unfinished calculation probability $\zeta_{nE}$ of the wind measurement lidar device 1E, because the wind measurement lidar device 1 cannot calculate the wind speed cannot from the first integrated spectrum without blocking generated at the second and subsequent times in some situations. At the second time of generating the first integrated spectrum, the unfinished calculation probability $\zeta_{20}$ is larger than $\zeta_{2E}$ by the first improvement probability $\gamma_{2E}$. At the third time of generating the first integrated spectrum, the unfinished calculation probability $\zeta_{30}$ is obtained by adding to $\zeta_{3E}$ by the first improvement probability $(\gamma_{2E} + \gamma_{3E})$ and subtracting from $\zeta_{3E}$ by a recovery probability $\lambda_{30}$. $\zeta_{40}$ is obtained by adding to $\zeta_{4E}$ by the first improvement probability $(\gamma_{2E} + \gamma_{3E} + \gamma_{4E})$ and subtracting from $\zeta_{4E}$ by a recovery probability $(\lambda_{30} + \lambda_{40})$.

Therefore, $\zeta_{10}$, $\zeta_{20}$, $\zeta_{30}$, and $\zeta_{40}$ are as follows.

$$\zeta_{10} = 1 - \alpha \qquad (51)$$

$$\zeta_{20} = \zeta_{2E} + \gamma_{2E} \qquad (52)$$

$$\zeta_{30} = \zeta_{3E} + \gamma_{2E} + \gamma_{3E} - \lambda_{30} \qquad (53)$$

$$\zeta_{40} = \zeta_{4E} + \gamma_{2E} + \gamma_{3E} + \gamma_{4E} - \lambda_{30} - \lambda_{40} \qquad (54)$$

Since the recovery probability $\lambda_{n0}$ is the probability that the wind speed can be calculated after a phenomenon in which the wind speed cannot be calculated even when the first integrated spectrum without blocking is generated in the wind measurement lidar device 1 at the second or subsequent times, $\lambda_{10} = \lambda_{20} = 0$ are obtained.

There are the following three situations when the wind speed cannot be calculated even when the first integrated spectrum without blocking is generated at the second time and the wind speed can be calculated at the third time in the wind measurement lidar device 1.

(E1) A situation where the first integrated spectrum without blocking is generated at the third time.
(E2) A situation where the first integrated spectrum with partial blocking where $y < (\sqrt{2} - 1)$ is satisfied is generated at the first time, the first integrated spectrum with partial blocking is generated at the third time, and $x_3 \geq \sqrt{3}$ is satisfied.
(E3) A situation where the first integrated spectrum with complete blocking is generated at the first time, the first integrated spectrum with partial blocking is generated at the third time, and $x_3 \geq \sqrt{3}$ is satisfied.

Therefore, $\lambda_{30}$ can be calculated by the following equations.

$$\lambda_{30} = \alpha * \gamma_{2E}$$

$$+ \alpha * (1 - \alpha - \beta)^2 * (H_2(\sqrt{2}) - H_2(\sqrt{3} - 1))$$

$$+ \alpha * \beta * (1 - \alpha - \beta) * (1 - G_1(\sqrt{3} - 1))$$

$$= \alpha * \gamma_{2E}$$

$$+ \alpha * (1 - \alpha - \beta)^2 * (\sqrt{2} + \sqrt{3} - 1/2 - \sqrt{6})$$

$$+ \alpha * \beta * (1 - \alpha - \beta) * (2 - \sqrt{3}) \tag{55}$$

There are the following ten situations when the wind speed cannot be calculated even when the first integrated spectrum without blocking is generated at the second time or the third time and the wind speed can be calculated at the fourth time in the wind measurement lidar device 1.

(F1) A situation where the wind speed cannot be calculated from the first integrated spectrum without blocking generated at the third time, and the first integrated spectrum without blocking is generated at the fourth time.

(F2) A situation where the first integrated spectrum with partial blocking in which $y < (\sqrt{2} - 1)$ is satisfied is generated at the first time, the first integrated spectrum without blocking is generated at the second time, the first integrated spectrum with partial blocking is generated at the third time in which $x_3 < \sqrt{3}$ is satisfied, and the first integrated spectrum without blocking is generated at the fourth time.

(F3) A situation where the first integrated spectrum with partial blocking in which $y < (\sqrt{2} - 1)$ is satisfied is generated at the first time, the first integrated spectrum without blocking is generated at the second time, the first integrated spectrum with complete blocking is generated at the third time, and the first integrated spectrum without blocking is generated at the fourth time.

(F4) A situation where the first integrated spectrum with complete blocking is generated at the first time, the first integrated spectrum without blocking is generated at the second time, the first integrated spectrum with partial blocking in which $y < (\sqrt{3}-1)$ is satisfied is generated at the third time, and the first integrated spectrum without blocking is generated at the fourth time.

(F5) A situation where the first integrated spectrum with complete blocking is generated at the first time and the third time, and the first integrated spectrum without blocking is generated at the second time and the fourth time.

(F6) A situation where the first integrated spectrum with partial blocking in which $y < (\sqrt{2} - 1)$ is satisfied is generated at the first time, the first integrated spectrum without blocking is generated at the second time, the first integrated spectrum with partial blocking is generated at the third time in which $x_3 < \sqrt{3}$ is satisfied, and the first integrated spectrum with partial blocking is generated at the fourth time, and $x_4 \geq 2$ is satisfied.

(F7) A situation where the first integrated spectrum with partial blocking in which $y < (\sqrt{2} - 1)$ is satisfied is generated at the first time, the first integrated spectrum without blocking is generated at the second time, the first integrated spectrum with complete blocking is generated at the third time, and the first integrated spectrum with partial blocking is generated at the fourth time, and $x_4 \geq 2$ is satisfied.

(F8) A situation where the first integrated spectrum with complete blocking is generated at the first time, the first integrated spectrum without blocking is generated at the second time, the first integrated spectrum with partial blocking in which $y < (\sqrt{3} - 1)$ is satisfied is generated at the third time, and the first integrated spectrum with partial blocking is generated at the fourth time, and $x_4 \geq 2$ is satisfied.

(F9) A situation where the first integrated spectra with partial blocking in which $x_2 < (\sqrt{3} - 1)$ is satisfied are generated at the first time and the second time, the first integrated spectrum without blocking is generated at the third time, the first integrated spectrum with partial blocking is generated at the fourth time, and $x_4 \geq 2$ is satisfied. is generated at the third time, the first integrated spectrum with partial blocking is generated at the fourth time, and $x_4 \geq 2$ is satisfied.

Therefore, $\lambda_{40}$ can be calculated by the following equations. $H_2(x_2)$ is used in (F2) and (F7), $H_3(x_3)$ is used in (F6), $H_{2B}(x_2)$ is used in (F8) and (F10), and $H_{3B}(x_3)$ is used in (F9).

$$\lambda_{40} = \alpha * \gamma_{3E}$$

$$+ \alpha^2 * (1 - \alpha - \beta)^2 * H_2(\sqrt{3} - 1)$$

$$+ \alpha^2 * \beta * (1 - \alpha - \beta) * G_1(\sqrt{3} - 1)$$

$$+ \alpha^2 * \beta * (1 - \alpha - \beta) * G_1(\sqrt{2} - 1)$$

$$+ \alpha^2 * \beta^2$$

$$+ \alpha * (1 - \alpha - \beta)^3 * (H_3(\sqrt{3})) - H_3(1))$$

$$+ \alpha * \beta * (1 - \alpha - \beta)^2 * (H_2(\sqrt{2})) - H_2(1))$$

$$+ \alpha * \beta * (1 - \alpha - \beta)^2 * (H_{2B}(\sqrt{3})) - H_{2B}(1))$$

$$+ \alpha * (1 - \alpha - \beta)^3 * (H_{3B}(\sqrt{3})) - H_{3B}(1))$$

$$+ 2 * \alpha * \beta * (1 - \alpha - \beta)^2 * (H_{2B}(\sqrt{3})) - H_{2B}(1))$$

$$= \alpha * \gamma_{3E}$$

$$+ \alpha^2 * (1 - \alpha - \beta)^2 * (\sqrt{6} - \sqrt{3} - 1/2)$$

$$+ \alpha^2 * \beta * (1 - \alpha - \beta) * (\sqrt{3} - 1)$$

$$+ \alpha^2 * \beta * (1 - \alpha - \beta) * (\sqrt{2} - 1)$$

$$+ \alpha^2 * \beta^2$$

$$+ \alpha * (1 - \alpha - \beta)^3 * (2 * \sqrt{6} + 5 * \sqrt{2} - 4 * \sqrt{3} - 5)$$

$$+ \alpha * \beta * (1 - \alpha - \beta)^2 * (3/2 - \sqrt{2})$$

$$+ \alpha * \beta * (1 - \alpha - \beta)^2 * (2 - \sqrt{3})$$

$$+ \alpha * (1 - \alpha - \beta)^3 * (2 * \sqrt{3} - 10/3)$$

$$+ 2 * \alpha * \beta * (1 - \alpha - \beta)^2 * (2 - \sqrt{3})$$

$$= \alpha * \gamma_{3E}$$

$$+ \alpha^2 * (1 - \alpha - \beta)^2 * (\sqrt{6} - \sqrt{3} - 1/2)$$

$$+ \alpha^2 * \beta * (1 - \alpha - \beta) * (\sqrt{3} + \sqrt{2} - 2)$$

$$+ \alpha^2 * \beta^2$$

$$+ \alpha * (1 - \alpha - \beta)^3 * (2 * \sqrt{6} + 5 * \sqrt{2} - 2 * \sqrt{3} - 25/3)$$

$$+ \alpha * \beta * (1 - \alpha - \beta)^2 * (15/2 - 3 * \sqrt{3} - \sqrt{2}) \qquad (56)$$

A graph illustrating changes in the unfinished calculation probabilities $\zeta_E$ and $\zeta_0$ against the number of times of generating the first integrated spectrum is illustrated in FIG. 16. FIG. 16 is a graph illustrating changes in the probability that the wind speed cannot be calculated against the number of times of generating the first integrated spectrum in the wind measurement lidar devices according to the fifth embodiment and the first embodiment. In FIG. 16, the unfinished calculation probability $\zeta_{nE}$ in the wind measurement lidar device 1E in the case of Tc = 1.0 is indicated by a solid line, the unfinished calculation probability $\zeta_0$ in the wind measurement lidar device 1 is indicated by a broken line, and $\Sigma(\zeta_0 - \zeta_E)$ is indicated by a one-dot chain line. $\Sigma(\zeta_0 - \zeta_E)$ at the number of times of generation n is the sum of $(\zeta_{j0} - \zeta_{jE})$ at j = 1 to n.

Here, the following variables are defined in order to represent the difference in the number of times of generating the first integrated spectrum until the wind speed is calculated between the wind measurement lidar device 5 and the wind measurement lidar device 1.

$\Delta\zeta_E$: $\Sigma(\zeta_0 - \zeta_E)$ at a sufficiently large number of times of generation n.
$\tau_0$: estimated attenuation rate of $\zeta_0$. Let $\tau_0 = \zeta_{40}/\zeta_{30}$.
$\tau_E$: estimated attenuation rate of $\zeta_0$. Let $\tau_E = \zeta_{4E}/\zeta_{3E}$.
$\Delta\zeta_E$ is calculated by the following Equation (57).

$$\Delta\zeta_E = \zeta_{20} - \zeta_{2E} + \zeta_{30} - \zeta_{3E}$$

$$+ \zeta_{40}/(1 - \tau_0) - \zeta_{4E}/(1 - \tau_E) \tag{57}$$

Assuming that $\tau_0 = 0.620$ and $\tau_E = 0.551$ are satisfied, $\Delta\zeta_E = 0.467$ is calculated from Equation (57). In the case of Tc = 1.0, the wind measurement lidar device 1E can reduce the number of times of generating the first integrated spectrum until the wind speed is calculated by about 0.5 times less than in the wind measurement lidar device 1.

The second integrated spectrum is not necessarily stored in the integrated spectrum storage unit 12d, and the second integrated spectrum may be stored in the integrated spectrum storage unit 12d when the SN ratio of the second integrated spectrum is greater than or equal to a second threshold value. The second threshold value is determined to be smaller than the first threshold value. The second threshold value is determined to be, for example, a value when the non-blocking rate y (= Tx/Tc), which is the ratio of a wind speed signal included in the first integrated spectrum, is 0.2. Alternatively, the second threshold value is determined to be such, for example, a value corresponding to 5% from the lower side among calculated values of the SN ratios of first integrated spectra. The second threshold value is determined so that the first integrated spectrum, which is likely to decrease the SN ratio by integrating it, is not used for integration.

Only the second integrated spectrum having the SN ratio being higher than the SN ratio of the stored integrated spectrum stored in the integrated spectrum storage unit 12d may be stored in the integrated spectrum storage unit 12d.

A higher SN ratio integrated spectrum, which is either one of the first integrated spectrum or the second integrated spectrum having a higher SN ratio, may be stored in the integrated spectrum storage unit 12d. Only the higher SN ratio integrated spectrum having the SN ratio being higher than the SN ratio of the stored integrated spectrum may be stored in the integrated spectrum storage unit 12d.

The above also applies to other embodiments.

Sixth Embodiment

A sixth embodiment is an embodiment in which the fifth embodiment is modified such that first integrated spectrum is integrated to generate the second integrated spectrum only when the SN ratio of the first integrated spectrum is not low. In a wind measurement lidar device 1F of the sixth embodiment, the determination target wind speed measurement sections, which are one or more of wind speed measurement sections (distance ranges), are determined in advance for each beam direction. When the SN ratio of the first integrated spectrum in each distance range of the determination target wind speed measurement section is calculated, where it is determined whether or not the number of distance ranges in which the SN ratio is greater than or equal to the second threshold value is greater than or equal to a predetermined lower limit number, and where the number of distance ranges is greater than or equal to the lower limit number, the first integrated spectrum that is integrated currently is integrated with an integrated spectrum stored in the integrated spectrum storage unit 12d. The second threshold value is set to be smaller than the first threshold value. The second threshold value is determined so that spectra generated from reception signals without blocking are included to some extent (for example, 20% or more) in the first integrated spectrum.

The determination target wind speed measurement sections may be all distance ranges in that beam direction, or distance ranges existing within the predetermined number from the shortest distance range. The determination target wind speed measurement section may be determined so as to include a distance range in which it can be determined whether or not a signal indicating the wind speed is included in the reception signal. The lower limit number is set to an appropriate number greater than or equal to one.

By evaluating comprehensively the SN ratio of the first integrated spectrum in the determination target wind speed measurement section determined for each beam direction, whether or not the first integrated spectrum is used for integration of the second integrated spectrum can be determined appropriately. When the SN ratio of the first integrated spectrum is evaluated for the determination target wind speed measurement section individually, there is a possibility that the wind speed measurement section in which first integrated spectrum is used for integration and the wind speed measurement section in which first integrated spectrum is not used are mixed in one beam direction.

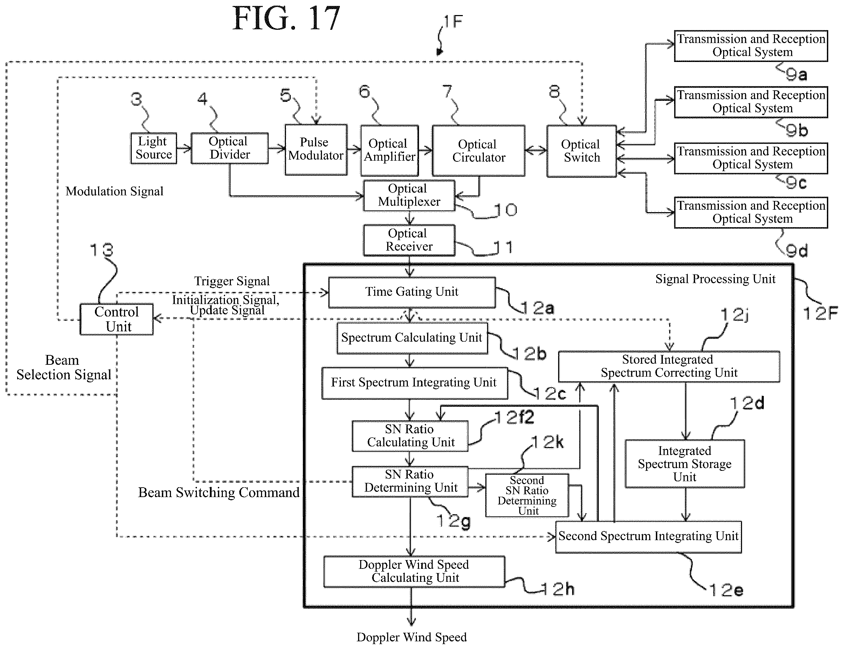

FIG. 17 is a schematic diagram illustrating the configuration of the wind measurement lidar device according to the sixth embodiment. In FIG. 17, points that are different from FIG. 10 of the fifth embodiment are described.

The wind measurement lidar device 1F includes a signal processing unit 12F. The signal processing unit 12F includes a second SN ratio determining unit 12k in addition to the SN ratio determining unit 12g. When the SN ratio of the first integrated spectrum is not greater than or equal to the first threshold value, the second SN ratio determining unit 12k determines whether or not the SN ratio of the first integrated spectrum is greater than or equal to the second threshold value. The second SN ratio determining unit 12k determines whether or not the number of distance ranges, which are included in the determination target wind speed measurement section and have the SN ratio greater than or equal to the second threshold value, is greater than or equal to a lower limit number.

When the second SN ratio determining unit 12k determines that the number of distance ranges in which the SN ratio of the first integrated spectrum is greater than or equal to the second threshold value is greater than or equal to the lower limit number, the second spectrum integrating unit 12e integrates the first integrated spectrum with the integrated spectrum stored in the integrated spectrum storage unit 12d in that beam direction. Otherwise, the second spectrum integrating unit 12e does not integrate the first integrated spectrum with an integrated spectrum stored in the integrated spectrum storage unit 12d. When the integration is not performed, the integrated spectrum stored in the integrated spectrum storage unit 12d is not changed.

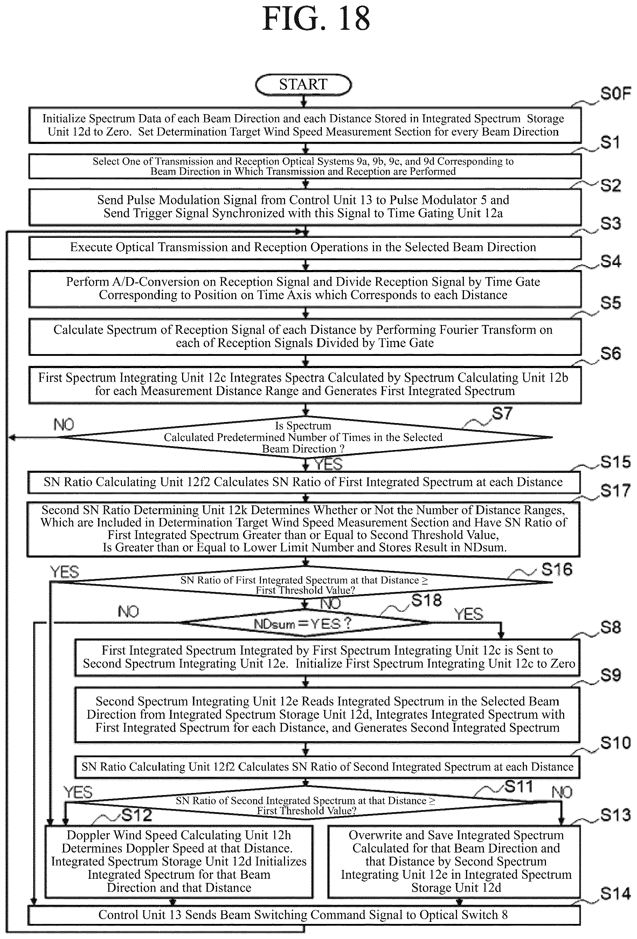

FIG. 18 is a flowchart illustrating the operation of the wind measurement lidar device according to the sixth embodiment. In FIG. 18, points that are different from FIG. 11 of the fifth embodiment are described. Step S0F is modified, step S17 is added before S16, and step S18 is added before S8.

In S0F, the determination target wind speed measurement section is set for each beam direction.

In step S17, the second SN ratio determining unit 12k determines whether or not the number of distance ranges, which are included in the determination target wind speed measurement section and have the SN ratio of the first integrated spectrum greater than or equal to the second threshold value, is greater than or equal to the lower limit number. The determination result is stored in variable NDsum. When the number of distance ranges, which are included in the determination target wind speed measurement section and have the SN ratio of the first integrated spectrum greater than or equal to the second threshold value, is greater than or equal to the lower limit number, it is set that NDsum = YES. Otherwise, it is set that NDsum = NO.

[0311] In S16, the process proceeds to S18 for a distance range in which no wind speed is calculated (NO in S16) since the SN ratio is smaller than the first threshold value. In S18, whether or not NDsum = YES holds is checked. If NDsum = YES (YES in S18), the process proceeds to S8. In S8, the first integrated spectrum is sent to the second spectrum integrating unit 12e. If NDsum = YES does not hold (NO in S18), the process proceeds to S14 in order to emit a beam of laser light in a next beam direction without using the first integrated spectrum for integration with the second integrated spectrum.

The wind measurement lidar device 1F operates similarly to the wind measurement lidar device 1E. The wind measurement lidar device 1F can measure the wind speed in each direction and at each distance with high accuracy. In addition, the measurement rate does not decrease in a distance range of a short distance. The wind measurement lidar device 1F can further reduce the number of times of generating the first integrated spectrum as compared with that of the wind measurement lidar device 1E.

In a distance range belonging to the determination target wind speed measurement section, when the number of distance ranges in which the SN ratio of the first integrated spectrum is greater than or equal to the second threshold value is not greater than or equal to the lower limit number, the wind measurement lidar device 1F does not integrate the first integrated spectrum. Therefore, the SN ratio of the integrated spectrum stored in the integrated spectrum storage unit 12d is higher in the wind measurement lidar device 1F than in the wind measurement lidar device 1E. For example, when blocking by the blades occurs in all distance ranges, the SN ratio has a value close to 0 in all distance ranges in that beam direction. In such a situation, the wind measurement lidar device 1F does not integrate the first integrated spectrum with the integrated spectrum stored in the integrated spectrum storage unit 12d. Therefore, the integrated spectrum storage unit 12d continues to store the stored integrated spectrum that is stored before the first spectrum integrating unit 12c generating the first integrated spectrum. That is, the integrated spectrum stored in the integrated spectrum storage unit 12d is not changed.

In a distance range belonging to the determination target wind speed measurement section, when the number of distance ranges in which the SN ratio of the first integrated spectrum is greater than or equal to the second threshold value is not greater than or equal to the lower limit number, the second integrated spectrum may be generated but not be stored in the integrated spectrum storage unit 12d.

Examination is made on a situation where the second integrated spectrum is not generated using the first integrated spectrum in which the SN ratio is not greater than or equal to the second threshold value. The first integrated spectrum having an SN ratio that is not greater than or equal to the second threshold value has a non-blocking rate y (= Tx/Tc) that is less than or equal to an upper limit value determined from the second threshold value. In order to simplify the analysis, it is assumed that not using the first integrated spectrum in which the SN ratio is not greater than or equal to the second threshold value for generating the second integrated spectrum causes that no second integrated spectrum obtained by integrating the first integrated spectrum with complete blocking is generated.

The first improvement probability $\gamma_2$ and other calculated values in the wind measurement lidar device 1F are denoted as $\gamma_{2F}$ by adding a subscript F. $\gamma_{2F}$, $\varepsilon_{2F}$, and $\zeta_{2F}$ can be calculated by the following equations. Equations (58) for calculating $\gamma_{2F}$ includes no $\beta$ term as compared with Equations (45) for calculating $\gamma_{2F}$.

$$\gamma_{2F} = \alpha * (1 - \alpha - \beta) * G_1(\sqrt{2} - 1)$$

$$= \alpha * (1 - \alpha - \beta) * (\sqrt{2} - 1) \qquad (58)$$

$$\varepsilon_{2F} = \varepsilon_{2E} \qquad (59)$$

$$\zeta_{2F} = \zeta_{2E} \qquad (60)$$

As to $\zeta$, the following equation is satisfied for n greater than or equal to 2.

$$\zeta_{(n+1)F} = \zeta_{nF} * (1 - \alpha) - \varepsilon_{nF} \qquad (61)$$

When the first integrated spectrum without blocking is generated at the third time, $x_2 < (\sqrt{3} - 1)$ is required to be satisfied in order for the SN ratio of the second integrated spectrum at the third time to be not greater than or equal to the first threshold value. In the wind measurement lidar device 1F, $x_2 < (\sqrt{3} - 1)$ is satisfied in the following two situations.

(G1) A situation where two first integrated spectra with partial blocking are generated, and $x_2 < (\sqrt{3} - 1)$ is satisfied.
(G2) A situation where one first integrated spectrum with complete blocking is generated, and one first integrated spectrum with partial blocking where y < $(\sqrt{2} - 1)$ is satisfied is generated.

The first integrated spectrum with complete blocking is not used for integration with the second integrated spectrum. Therefore, when the first integrated spectrum with complete blocking is generated, $x_1 < (\sqrt{2} - 1)$ is required to be satisfied in order for the SN ratio of the second integrated spectrum not to be greater than or equal to the first threshold value. Therefore, $\gamma_{3F}$ can be calculated by the following equations.

$$\gamma_{3F} = \alpha * ((1 - \alpha - \beta)^2 * G_2(\sqrt{3} - 1)$$

$$+ 2 * \beta * (1 - \alpha - \beta) * G_1(\sqrt{2} - 1)))$$

$$= \alpha * ((1 - \alpha - \beta)^2 * (2 - \sqrt{3}))$$

$$+ 2 * \beta * (1 - \alpha - \beta) * (\sqrt{2} - 1)) \qquad (62)$$

In order for the SN ratio of the second integrated spectrum at the third time to be greater than or equal to the first threshold value, $x_3 \geq \sqrt{3}$ and $x_2 < \sqrt{2}$ are required to be satisfied. $x_3 \geq \sqrt{3}$ is satisfied in the following three situations.

(H1) A situation where three first integrated spectra with partial blocking are generated, and $x_3 \geq \sqrt{3}$ is satisfied.
(H2) A situation where one first integrated spectrum with complete blocking is generated at the second time, two first integrated spectra with partial blocking are generated, and $x_2 \geq \sqrt{2}$ is satisfied.

Therefore, $\varepsilon_{3F}$ can be calculated by the following equation. In the situation of (H2), $F_3(x_3)$ is used.

$$\varepsilon_{3F} = (1 - \alpha - \beta)^3 * (F_3(1 + \sqrt{2})) - F_3(\sqrt{3})) $$
$$+ 2 * \beta * (1 - \alpha - \beta)^2 * (1 - G_2(\sqrt{2})) \qquad (63)$$

When the first integrated spectrum without blocking is generated at the fourth time, the SN ratio of the second integrated spectrum at the fourth time is greater than or equal to the first threshold value in the following three situations.

(J1) A situation where three first integrated spectra with partial blocking are generated, and $x_3 < 1$ is satisfied.
(J2) A situation where one first integrated spectrum with complete blocking is generated, two first integrated spectra with partial blocking are generated, and $x_2 < (\sqrt{3} - 1)$ is satisfied.
(J3) A situation where two first integrated spectra with complete blocking are generated, and one first integrated spectrum with partial blocking where $y < (\sqrt{2} - 1)$ is satisfied is generated.

Therefore, $y_{4F}$ can be calculated by the following equations.

$$\gamma_{4F} = \alpha * ((1 - \alpha - \beta)^3 * G_3(1) $$
$$+ 3 * \beta * (1 - \alpha - \beta)^2 * G_2(\sqrt{3} - 1) $$
$$+ 3 * \beta^2 * (1 - \alpha - \beta) * G_1(\sqrt{2} - 1)) $$
$$= \alpha * ((1/6) * (1 - \alpha - \beta)^3 $$
$$+ 3 * (2 - \sqrt{3}) * \beta * (1 - \alpha - \beta)^2 $$
$$+ 3 * (\sqrt{2} - 1) * \beta^2 * (1 - \alpha - \beta)) \qquad (64)$$

The SN ratio of the second integrated spectrum equals or exceeds the first threshold value at the fourth time in the following three situations.

(K1) A situation where four first integrated spectra with partial blocking are generated, and $x_4 \geq 2$ is satisfied.
(K2) A situation where one first integrated spectrum with complete blocking is generated at the third time, three first integrated spectra with partial blocking are generated, and $x_3 \geq \sqrt{3}$ is satisfied.
(K3) A situation where two first integrated spectra with complete blocking are generated at the third time, two first integrated spectra with partial blocking are generated, and $x_2 \geq \sqrt{2}$ is satisfied.

Therefore, $\varepsilon_{4F}$ can be calculated by the following equation. $F_4(x_4)$ is used in (K1), $F_3(x_3)$ is used in (K2), and $G_2(x_2)$ is used in (K3).

$$\varepsilon_{4F} = (1 - \alpha - \beta)^4 * (F_4(1 + \sqrt{3})) - F_4(2)) $$
$$+ 3 * \beta * (1 - \alpha - \beta)^3 * (F_3(1 + \sqrt{2})) - F_3(\sqrt{3})) $$
$$+ 3 * \beta^2 * (1 - \alpha - \beta)^2 * (1 - G_2(\sqrt{2})) \qquad (65)$$

As a comparative example, examination is made on the unfinished calculation probability $\zeta_{n0F}$ in the second modification of the first embodiment, which is a case where the wind measurement lidar device 1 is modified so that the first integrated spectrum with complete blocking is not used for integration of the second integrated spectrum. Here, the subscript 0F indicates that the value is a calculated value in the case of the second modification of the first embodiment.

The second modification of the first embodiment is referred to as a wind measurement lidar device 0F (not illustrated). The unfinished calculation probability $\zeta_{n0F}$ can be calculated similarly to the unfinished calculation probability $\zeta_{n0}$. $\zeta_{10F}$, $\zeta_{20F}$, $\zeta_{30F}$, and $\zeta_{40F}$ are as follows.

$$\zeta_{10F} = 1 - \alpha \qquad (66)$$

$$\zeta_{20F} = \zeta_{2F} + \gamma_{2F} \qquad (67)$$

$$\zeta_{30F} = \zeta_{3F} + \gamma_{2F} + \gamma_{3F} - \lambda_{30F} \qquad (68)$$

$$\zeta_{40F} = \zeta_{4F} + \gamma_{2F} + \gamma_{3F} + \gamma_{4F} - \lambda_{30F} - \lambda_{40F} \qquad (69)$$

There are the following three situations when the wind speed cannot be calculated even when the first integrated spectrum without blocking is generated at the second time and the wind speed can be calculated at the third time in the wind measurement lidar device 0F.

(L1) A situation where the first integrated spectrum without blocking is generated at the third time.
(L2) A situation where the first integrated spectrum with partial blocking of $y < (\sqrt{2} - 1)$ is satisfied is generated at the first time, the first integrated spectrum with partial blocking is generated at the third time, and $x_3 \geq \sqrt{3}$ is satisfied.
(L3) A situation where the first integrated spectrum with complete blocking is generated at the first time, the first integrated spectrum with partial blocking is generated at the third time, and $x_2 \geq \sqrt{2}$ is satisfied.

Therefore, $\lambda_{30F}$ can be calculated by the following equations.

$$\lambda_{30F} = \alpha * \gamma_{2F}$$
$$+ \alpha * (1 - \alpha - \beta)^2 * (H_2(\sqrt{2}) - H_2(\sqrt{3} - 1))$$
$$+ \alpha * \beta * (1 - \alpha - \beta) * (1 - G_1(\sqrt{2} - 1))$$
$$= \alpha * \gamma_{2F}$$
$$+ \alpha * (1 - \alpha - \beta)^2 * (\sqrt{2} + \sqrt{3} - 1/2 - \sqrt{6})$$
$$+ \alpha * \beta * (1 - \alpha - \beta) * (2 - \sqrt{2}) \qquad (70)$$

There are the following seven situations when the wind speed cannot be calculated even when the first integrated spectrum without blocking is generated at the second time or the third time and the wind speed can be calculated at the fourth time in the wind measurement lidar device 0F.

(M1) A situation where the wind speed cannot be calculated from the first integrated spectrum without blocking generated at the third time, and the first integrated spectrum without blocking is generated at the fourth time.
(M2) A situation where the first integrated spectrum with partial blocking in which $y < (\sqrt{2} - 1)$ is satisfied is generated at the first time, the first integrated spectrum without blocking is generated at the second time, the first integrated spectrum with partial blocking is generated at the third time in which $x_2 < \sqrt{3}$ is satisfied, and the first integrated spectrum without blocking is generated at the fourth time.
(M3) A situation where the first integrated spectrum with partial blocking in which $y < (\sqrt{2} - 1)$ is satisfied is generated at the first time, the first integrated spectrum without blocking is generated at the second time, the first integrated spectrum with complete blocking is generated at the third time, and the first integrated spectrum without blocking is generated at the fourth time.
(M4) A situation where the first integrated spectrum with partial blocking in which $y < (\sqrt{2} - 1)$ is satisfied is generated at the first time, the first integrated spectrum without blocking is generated at the second time, the first integrated spectrum with partial blocking is generated at the third time in which $x_3 < \sqrt{3}$ is satisfied, and the first integrated spectrum with partial blocking is generated at the fourth time, and $x_4 \geq 2$ is satisfied.

(M5) A situation where the first integrated spectra with partial blocking in which $x_2 < (\sqrt{3} - 1)$ is satisfied are generated at the first time and the second time, the first integrated spectrum without blocking is generated at the third time, the first integrated spectrum with partial blocking is generated at the fourth time in which $x_4 \geq 2$ is satisfied.

(M6) A situation where the first integrated spectrum with partial blocking in which $y < (\sqrt{2} - 1)$ is satisfied is generated at the first time, one first integrated spectrum without blocking and one first integrated spectrum with complete blocking are generated at the third time, the first integrated spectrum with partial blocking is generated at the fourth time, and $x_3 \geq \sqrt{3}$ is satisfied.

(M7) A situation where the first integrated spectrum with complete blocking is generated at the first time, the first integrated spectrum with partial blocking in which $y < (\sqrt{2} - 1)$ is satisfied is generated at the second time, the first integrated spectrum without blocking is generated at the third time, and the first integrated spectrum with partial blocking is generated at the fourth time, and $x_2 \geq \sqrt{3}$ is satisfied.

Therefore, $\lambda_{4E}$ can be calculated by the following equation. As the probability under conditions of $x_3 < \sqrt{3}$ and $x_2 < \sqrt{2}$ are satisfied, $H_2(x_2)$ is used in (M2) and (M6) and (M7), $H_3(x_3)$ is used in (M4), and $H_{3B}(x_3)$ is used in (M5).

$$\lambda_{40F} = \alpha * \gamma_{3E}$$
$$+ \alpha^2 * (1 - \alpha - \beta)^2 * H_2(\sqrt{3} - 1)$$
$$+ \alpha^2 * \beta * (1 - \alpha - \beta) * G_1(\sqrt{2} - 1)$$
$$+ \alpha * (1 - \alpha - \beta)^3 * (H_3(\sqrt{3}) - H_3(1))$$
$$+ \alpha * (1 - \alpha - \beta)^3 * (H_{3B}(\sqrt{3}) - H_{3B}(1))$$
$$+ 2 * \alpha * \beta * (1 - \alpha - \beta)^2 * (H_2(\sqrt{2}) - H_2(\sqrt{3} - 1))$$
$$+ \alpha * \beta * (1 - \alpha - \beta)^2 * (H_2(\sqrt{2}) - H_2(\sqrt{3} - 1))$$

$$= \alpha * \gamma_{3E}$$
$$+ \alpha^2 * (1 - \alpha - \beta)^2 * (\sqrt{6} - \sqrt{3} - 1/2)$$
$$+ \alpha^2 * \beta * (1 - \alpha - \beta) * (\sqrt{2} - 1)$$
$$+ \alpha * (1 - \alpha - \beta)^3 * (2 * \sqrt{6} + 5 * \sqrt{2} - 4 * \sqrt{3} - 5)$$
$$+ \alpha * (1 - \alpha - \beta)^3 * (2 * \sqrt{3} - 10/3)$$
$$+ 3 * \alpha * \beta * (1 - \alpha - \beta)^2 * (\sqrt{2} + \sqrt{3} - 1/2 - \sqrt{6})$$

$$= \alpha * \gamma_{3E}$$
$$+ \alpha^2 * (1 - \alpha - \beta)^2 * (\sqrt{6} - \sqrt{3} - 1/2)$$
$$+ \alpha^2 * \beta * (1 - \alpha - \beta) * (\sqrt{2} - 1)$$
$$+ \alpha * (1 - \alpha - \beta)^3 * (2 * \sqrt{6} + 5 * \sqrt{2} - 2 * \sqrt{3} - 25/3)$$
$$+ 3 * \alpha * \beta * (1 - \alpha - \beta)^2 * (\sqrt{2} + \sqrt{3} - 1/2 - \sqrt{6}) \qquad (71)$$

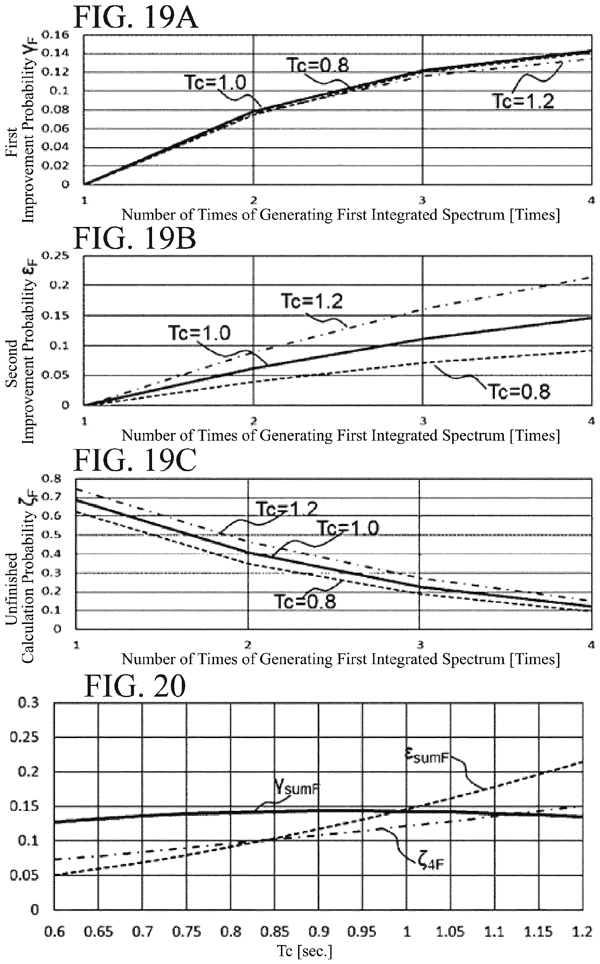

Illustrated in FIG. 19 are graphs showing changes in the first improvement probability $\gamma_{nF}$, the second improve-

ment probability $\varepsilon_{nF}$, and the unfinished calculation probability $\zeta_{nF}$ against the number of times of generating the first integrated spectrum in the wind measurement lidar device 1F. FIG. 19 includes graphs illustrating the change in the probability related to the number of times of generating the first integrated spectrum against the number of times of generating the first integrated spectrum in the wind measurement lidar device according to the sixth embodiment. In FIG. 19, the case of Tc = 1.0 is indicated by a solid line, the case of Tc = 0.8 is indicated by a broken line, and the case of Tc = 1.0 is indicated by a one-dot chain line. In FIG. 19A, the first improvement probability $\gamma_{nF}$ is illustrated. In FIG. 19B, the second improvement probability $\varepsilon_{nF}$ is illustrated. In FIG. 19C, the unfinished calculation probability $\zeta_{nF}$ is illustrated. For the first improvement probability $\gamma_{nF}$ and the second improvement probability $\varepsilon_{nF}$, the cumulative probability is displayed.

The first improvement probability $\gamma_{nF}$ are calculated as follows $\gamma_{2F} = 0.078$, $\gamma_{2F} + \gamma_{3F} = 0.122$ ($\gamma_{3F} = 0.044$), and $\gamma_{2F} + \gamma_{3F} + \gamma_{4F} = 0.143$ ($\gamma_{4F} = 0.021$) in the case of Tc = 1.0. As the number of times of generation n increases, $\gamma_{nF}$ decreases. Assuming that $\gamma_{nF}$ decreases in a geometrical progression, $\gamma_{sumF}$ is calculated to be about 0.16. The cases of Tc = 0.8 and Tc = 1.2 are also substantially the same as the case of Tc = 1.0. $\gamma_{nF}$ is smaller than $\gamma_{nE}$. This is because, in the wind measurement lidar device 1F, even when the first integrated spectrum with complete blocking is generated, the first integrated spectrum is not used for integration of the second integrated spectrum, and thus the SN ratio of the second integrated spectrum is higher than that of the wind measurement lidar device 1E.

The second improvement probability $\varepsilon_{nF}$ are calculated as follows $\varepsilon_{2F} = 0.062$, $\varepsilon_{2F} + \varepsilon_{3F} = 0.112$ ($\varepsilon_{3F} = 0.05$), and $\varepsilon_{2F} + \varepsilon_{3F} + \varepsilon_{4F} = 0.146$ ($\varepsilon_{3F} = 0.034$) in the case of Tc = 1.0. As the number of times of generation n increases, $\varepsilon_{nF}$ decreases. If it is assumed that $\varepsilon_{nE}$ decreases in a geometrical progression, $\varepsilon_{sumF}$ is calculated to be about 0.22. $\varepsilon_{nF}$ is larger than $\varepsilon_{nE}$ by about 10%. This is because the SN ratio of the second integrated spectrum is higher in the wind measurement lidar device 1F than in the wind measurement lidar device 1E. Similar trends are shown also for the cases of Tc = 0.8 and Tc = 1.2. In the case of Tc = 1.2, $\varepsilon_{nF}$ is larger than that in the case of Tc = 1.0. In the case of Tc = 0.8, $\varepsilon_{nF}$ is smaller than that in the case of Tc = 1.0.

The unfinished calculation probability $\zeta_{nF}$ are calculated as follows $\zeta_{1F} = 0.684$, $\zeta_{2F} = 0.406$ ($\zeta_{2F} = 0.594 * \zeta_{1F}$), $\zeta_{3F} = 0.228$ ($\zeta_{3F} = 0.561 * \zeta_{2F}$), and $\zeta_{4F} = 0.122$ ($\zeta_{4F} = 0.533 * \zeta_{3F}$) in the case of Tc = 1.0. As the number of times of generation n increases, $\zeta_{nF}$ decreases. $\zeta_{nF}$ is smaller than $\zeta_{nE}$. This is because $\gamma_{nF}$ is smaller than $\gamma_{nE}$ and $\varepsilon_{nF}$ is larger than $\varepsilon_{nE}$. In the case of Tc = 1.2, $\zeta_{nF}$ is larger than that in the case of Tc = 1.0. In the case of Tc = 0.8, $\zeta_{nF}$ is smaller than that in the case of Tc = 1.0.

A graph showing changes in the first improvement total probability $\gamma_{sumF}$, the second improvement total probability $\varepsilon_{sumF}$, and the unfinished calculation probability $\zeta_{4F}$ against the integration time Tc of the first integrated spectrum in the wind measurement lidar device 1F is illustrated in FIG. 20. FIG. 20 is a graph illustrating changes in the probability related to the number of times of generating the first integrated spectrum against the integration time Tc of the first integrated spectrum in the wind measurement lidar device according to the sixth embodiment. In FIG. 20, the first improvement total probability $\gamma_{sumF}$ is indicated by a solid line, the second improvement total probability $\varepsilon_{sumF}$ is indicated by a broken line, and the unfinished calculation probability $\zeta_{4F}$ is indicated by a one-dot chain line. The first improvement total probability $\gamma_{sumF}$ is approximated by $\gamma_{sumF} \approx (\gamma_{2F} + \gamma_{3F} + \gamma_{4F})$. The second improvement total probability $\varepsilon_{sumF}$ is approximated by $\varepsilon_{sumF} \approx (\varepsilon_{2F} + \varepsilon_{3F} + \varepsilon_{4F})$.

The first improvement total probability $\gamma_{sumF}$ are calculated as follows $\gamma_{sumF} > 0.143$ in the case of Tc = 1.0, $\gamma_{sumF} > 0.134$ in the case of Tc = 1.2, and $\gamma_{sumF} > 0.141$ in the case of Tc = 0.8. In the case of Tc = 1.0, $\gamma_{sumF}$ is smaller than $\gamma_{sumE}$ by about 0.05. The reason why the first improvement total probability $\gamma_{sumF}$ is hardly changed even when Tc is caused to be changed is that an equation including only the term $\alpha * (1 - \alpha - \beta)$ is obtained as shown in Equations (58) and that $\alpha * \beta$ in Equations (45) is not included in the equation.

The second improvement total probability $\varepsilon_{sumF}$ are calculated as follows $\varepsilon_{sumF} > 0.146$ in the case of Tc = 1.0, $\varepsilon_{sumF} > 0.214$ in the case of Tc = 1.2, and $\varepsilon_{sumF} > 0.092$ in the case of Tc = 0.8. $\varepsilon_{sumF}$ is larger than $\varepsilon_{sumE}$ by about 0.1.

The unfinished calculation probability $\zeta_{4F}$ are calculated as follows $\zeta_{4F} = 0.122$ in the case of Tc = 1.0, $\zeta_{4F} = 0.150$ in the case of Tc = 1.2, and $\zeta_{4F} = > 0.092$ in the case of Tc = 0.8. The reason why the unfinished calculation probability $\zeta_{4F}$ is large when Tc is small is that $\alpha$ is large when Tc is small.

The unfinished calculation probability $\zeta_{4F}$ is smaller than $\zeta_{4E}$. This is because the SN ratio of the integrated spectrum stored in the integrated spectrum storage unit 12d is higher in the wind measurement lidar device 1F than in the wind measurement lidar device 1E. Since the first integrated spectrum having a low SN ratio (smaller than the second threshold value) is not used for the integration of integrated spectra to be stored in the integrated spectrum storage unit 12d, the SN ratio of the integrated spectrum to be stored in the integrated spectrum storage unit 12d is higher than that in the case where the first integrated spectrum having a low SN ratio (smaller than the second threshold value) is also used for integration of integrated spectra to be stored in the integrated spectrum storage unit 12d.

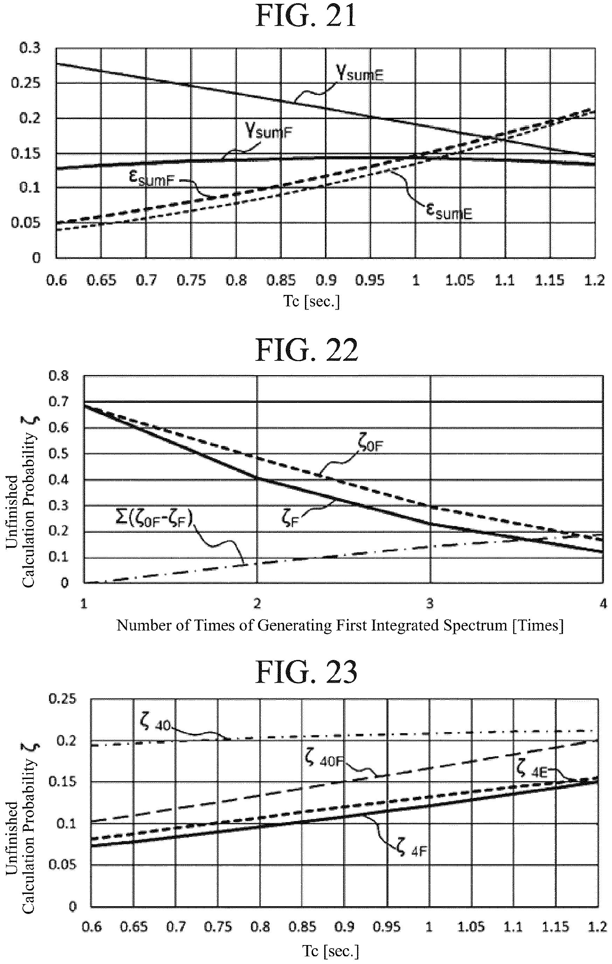

A graph showing changes in the first improvement total probabilities $\gamma_{sumF}$ and $\gamma_{sumE}$ and the second improvement total probabilities $\varepsilon_{sumF}$ and $\varepsilon_{sumE}$ against the integration time Tc of the first integrated spectrum is illustrated in FIG. 21. FIG. 21 is a graph illustrating changes in the probability related to the number of times of generating the first integrated spectrum against the integration time Tc of the first integrated spectrum in the wind measurement lidar devices according to the sixth embodiment and the fifth the embodiment. In FIG. 21, the first improvement total probability $\gamma_{sumF}$ is indicated by a thick solid line, and the first improvement total probability $\gamma_{sumE}$ is indicated by a thin solid line. The second improvement total probability $\varepsilon_{sumF}$ is indicated by a thick broken line, and the second improvement total probability $\varepsilon_{sumE}$ is indicated by a thick broken line. Similarly to $\gamma_{sumE}$, the first improvement total probability $\gamma_{sumF}$ is also approximated by $\gamma_{sumF} \approx (\gamma_{2F} + \gamma_{3F} + \gamma_{4F})$. Similarly to $\varepsilon_{sumE}$, the second improvement total probability $\varepsilon_{sumF}$ is also approximated by $\varepsilon_{sumF} \approx (\varepsilon_{2F} + \varepsilon_{3F} + \varepsilon_{4F})$.

The first improvement total probability $\gamma_{sumF}$ are calculated as follows $\gamma_{sumF} > 0.143$ in the case of Tc = 1.0, $\gamma_{sumF} > 0.134$ in the case of Tc = 1.2, and $\gamma_{sumF} > 0.141$ in the case of Tc = 0.8. In the wind measurement lidar device 1F, the number of times of generating the first integrated spectrum until the wind speed is calculated can be reduced as compared with that in the wind measurement lidar device 0F with a probability of about 14%. The first improvement total probability $\gamma_{sumF}$ is changed little even when Tc is caused to be changed, and $\gamma_{sumE} - \gamma_{sumF} = 0.095$ in the case of Tc = 0.8. In the range of Tc = 0.6 to 1.2, $\gamma_{sumF}$ is smaller than $\gamma_{sumE}$. The reason why $\gamma_{sumF}$ is small is that, in Embodiment 0F as a comparison target, when the SN ratio of the first integrated spectrum is not greater than or equal to the second threshold value, the SN ratio is not used for integration of the second integrated spectrum. In the wind measurement lidar device 0F, the probability that the wind speed cannot be calculated from the first integrated spectrum without blocking is smaller than that in the wind measurement lidar device 1.

The second improvement total probability $\varepsilon_{sumF}$ are calculated as follows $\varepsilon_{sumF} > 0.146$ in the case of Tc = 1.0, $\varepsilon_{sumF} > 0.214$ in the case of Tc = 1.2, and $\varepsilon_{sumF} > 0.092$ in the case of Tc = 0.8. In the range of Tc = 0.6 to 1.2, $\varepsilon_{sumF}$ is larger than $\varepsilon_{sumE}$ by about 0.01. The reason why $\varepsilon_{sumF}$ is larger than $\varepsilon_{sumE}$ is that, in the wind measurement lidar device 1F, the SN ratio of the stored integrated spectrum stored in the integrated spectrum storage unit 12d is higher than that in the wind measurement lidar device 1E.

A graph illustrating changes in the unfinished calculation probabilities $\zeta_F$ and $\zeta_{0F}$ against the number of times of generating the first integrated spectrum is illustrated in FIG. 22. FIG. 22 is a graph illustrating changes in the probability that the wind speed cannot be calculated against the number of times of generating the first integrated spectrum in the wind measurement lidar devices according to the sixth embodiment and the second modification of the first embodiment. In FIG. 22, the unfinished calculation probability $\zeta_{nF}$ in the wind measurement lidar device 1F in the case of Tc = 1.0 is indicated by a solid line, the unfinished calculation probability $\zeta_{n0F}$ in the wind measurement lidar device 0F is indicated by a broken line, and $\sum(\zeta_{n0F} - \zeta_{nF})$ is indicated by a one-dot chain line. Assuming that $\tau_{0F} = \zeta_{40F}/\zeta_{30F} = 0.533$ are satisfied and that $\tau_F = \zeta_{4F}/\zeta_{3F} = 0.601$ are satisfied, when $\Delta\zeta_F$ is estimated by a similar equation to Equation (57), $\Delta\zeta_F = 0.302$ can be calculated. In the case of Tc = 1.0, the wind measurement lidar device 1F can reduce the number of first integrated spectra, which are generated until the wind speed is calculated, by about 0.3 as compared to the wind measurement lidar device 0F.

A graph illustrating changes in the unfinished calculation probabilities $\zeta_{4F}$, $\zeta_{4E}$, $\zeta_{40F}$, and $\zeta_{40}$ against the integration time Tc of the first integrated spectrum is illustrated in FIG. 23. FIG. 23 is a graph illustrating changes in the unfinished calculation probability against the integration time Tc of the first integrated spectrum in the wind measurement lidar devices according to the fifth and first embodiments and the second modification of the first embodiment. In FIG. 23, $\zeta_{4F}$ is indicated by a thick solid line, $\zeta_{4E}$ is indicated by a thin solid line, $\zeta_{40F}$ is indicated by a thick broken line, and $\zeta_{40}$ is indicated by a thin broken line. In the range of Tc = 0.6 to 1.2, $\zeta_{4F}$ is smaller than $\zeta_{4E}$ by about 0.009 to 0.012. $\zeta_{40F}$ is smaller than $\zeta_{40}$, and the difference is large when Tc is small. This is because the probability $\beta$ that the first integrated spectrum with complete blocking is generated is large when Tc is small, and the first improvement probability $\gamma_E$ is large. The first improvement probability $\gamma_E$ is a probability that the wind speed cannot be calculated from the first integrated spectrum without blocking in the wind measurement lidar device 1. In the wind measurement lidar device 0F, $\gamma_F$ is smaller than $\gamma_E$, and $\gamma_F$ is not changed much against a change in Tc.

Seventh Embodiment

A seventh embodiment is an embodiment in which the sixth embodiment is modified so that, in a distance range in which the SN ratio of the first integrated spectrum is not greater than or equal to the third threshold value, the first integrated spectrum is not integrated when the first integrated spectrum is integrated for that beam direction thereof. A third threshold value is determined in advance to be smaller than the second threshold value.

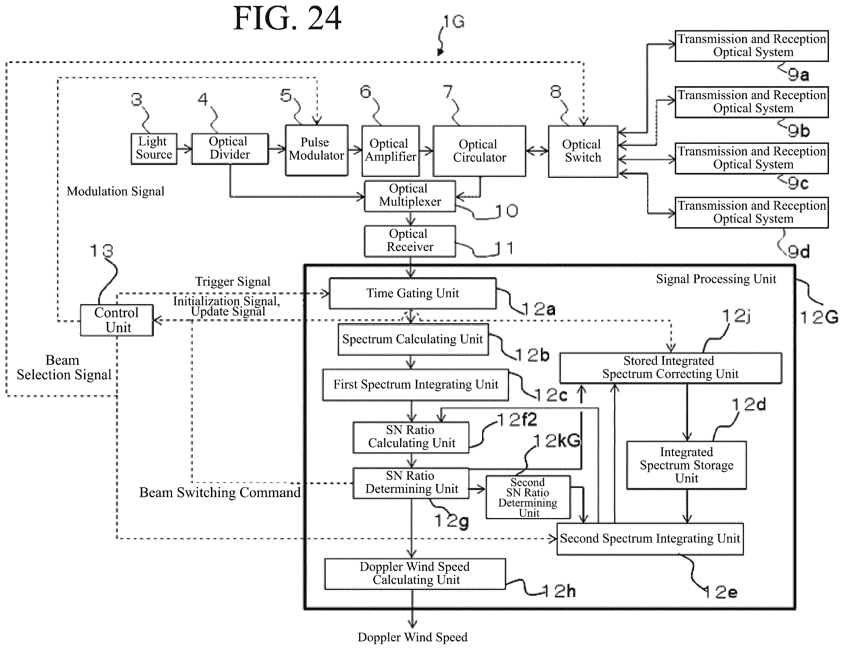

FIG. 24 is a schematic diagram illustrating the configuration of a wind measurement lidar device according to the seventh embodiment. In FIG. 24, points that are different from FIG. 17 of the sixth embodiment are described.

A wind measurement lidar device 1G includes a signal processing unit 12G. In the signal processing unit 12G, the second SN ratio determining unit 12k is modified to a second SN ratio determining unit 12kG. In addition to the checking similar to that of the second SN ratio determining unit 12k, the second SN ratio determining unit 12kG determines whether or not the SN ratio of the first integrated spectrum is greater than or equal to the third threshold value. The third threshold value is determined to be smaller than the second threshold value used by the SN ratio determining unit 12k. The third threshold value is determined to be, for example, a half of the second threshold value. The third threshold value is determined so as not to use, for integration, the first integrated spectrum which decreases certainly the SN ratio by integrating it.

The second SN ratio determining unit 12kG determines whether or not the number of distance ranges, which are included in the determination target wind speed measurement section and have an SN ratio greater than or equal to the second threshold value, is greater than or equal to a lower limit number. When the number of distance ranges, which are included in a determination target wind speed measurement section and have an SN ratio greater than or equal to the second threshold value, is greater than or equal to the lower limit number, the second SN ratio determining unit 12kG determines whether or not the SN ratio of the first integrated spectrum of each distance range is greater than or equal to the third threshold value.

When the number of distance ranges, which are included in the determination target wind speed measurement section and have the SN ratio greater than or equal to the second threshold value, is not greater than or equal to the lower limit number, the second integrated spectrum is not integrated for that beam direction. When the number of distance ranges, which are included in the determination target wind speed measurement section and have the SN ratio greater than or equal to the second threshold value, is greater than or equal to the lower limit number, in a distance range in which the second SN ratio determining unit 12kG determines that the SN ratio of the first integrated spectrum is greater than or equal to the third threshold value, the first integrated spectrum is integrated with the integrated spectrum stored in the integrated spectrum storage unit 12d. Otherwise, the second spectrum integrating unit 12e does not integrate the first integrated spectrum with an integrated spectrum stored in the integrated spectrum storage unit 12d. The integrated spectrum storage unit 12d stores the stored integrated spectrum that is stored before the first spectrum integrating unit 12c generating the first integrated spectrum.

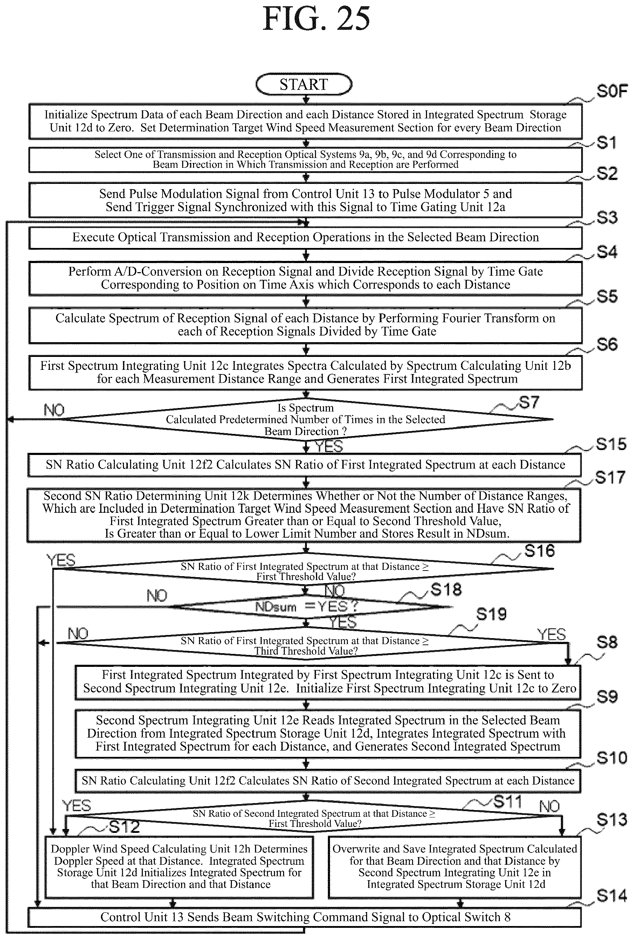

FIG. 25 is a flowchart illustrating the operation of the wind measurement lidar device according to the seventh embodiment. In FIG. 25, points that are different from FIG. 18 of the sixth embodiment are described. Step S19 is added after S18. In S19, it is checked whether or not the SN ratio of the first integrated spectrum of each distance range is greater than or equal to the third threshold value. When the SN ratio of the distance range is greater than or equal to the third threshold value (YES in S19), the process proceeds to S8. If the distance range is not greater than or equal to the third threshold value (YES in S19), the process proceeds to S14.

The wind measurement lidar device 1G operates similarly to the wind measurement lidar device 1F. The wind measurement lidar device 1G can measure the wind speed in each direction and at each distance with high accuracy. In addition, the measurement rate does not decrease in a distance range of a short distance. In addition, the number of times of generating the first integrated spectrum can be reduced.

In the seventh embodiment, when first integrated spectrum is used for integration of the second integrated spectrum in a beam direction, it is checked whether or not the SN ratio of the first integrated spectrum is greater than or equal to the third threshold value in each distance range, and thus the SN ratio of the integrated spectrum stored in the integrated spectrum storage unit 12d does not decrease due to integration of the first integrated spectrum in which the SN ratio is not greater than or equal to the third threshold value.

Eighth Embodiment

An eighth embodiment is an embodiment in which the first embodiment is modified such that the second integrated spectrum having the SN ratio greater than the SN ratio of an integrated spectrum stored in the integrated spectrum storage unit is stored in the integrated spectrum storage unit.

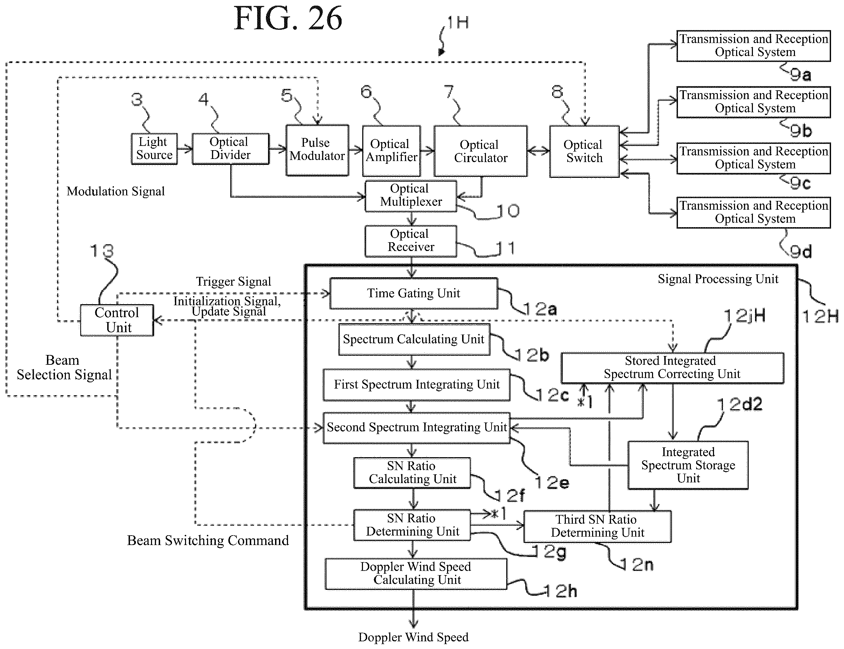

FIG. 26 is a schematic diagram illustrating the configuration of a wind measurement lidar device according to the eighth embodiment. In FIG. 26, points that are different from FIG. 1 of the first embodiment are described.

A wind measurement lidar device 1H includes a signal processing unit 12H. The signal processing unit 12H includes a third SN ratio determining unit 12n in addition to the SN ratio determining unit 12g. An integrated spectrum storage unit 12d2 and a stored integrated spectrum correcting unit 12jH are modified. The integrated spectrum storage unit 12d2 also stores the SN ratio of an integrated spectrum together with the integrated spectrum. When storing an integrated spectrum, the stored integrated spectrum correcting unit 12jH also stores the SN ratio of the integrated spectrum. The SN ratio may not be stored in the integrated spectrum storage unit, and the SN ratio may be determined by calculation from the integrated spectrum read from the integrated spectrum storage unit.

The third SN ratio determining unit 12n operates when the SN ratio determining unit 12g determines that the SN ratio of the second integrated spectrum is not greater than or equal to the first threshold value. The third SN ratio determining unit 12n determines whether or not the SN ratio of the second integrated spectrum is greater than the SN ratio (stored spectrum SN ratio) of the integrated spectrum stored in the integrated spectrum storage unit 12d2. When the SN ratio of the second integrated spectrum is greater than the stored spectrum SN ratio, the stored integrated spectrum correcting unit 12jH stores the second integrated spectrum and the SN ratio thereof into the integrated spectrum storage unit 12d2. When the SN ratio of the second integrated spectrum is not greater than the stored spectrum SN ratio, the stored integrated spectrum correcting unit 12jH does not store the second integrated spectrum into the integrated spectrum storage unit 12d2. The integrated spectrum storage unit 12d2 continues to store the integrated spectrum that is stored.

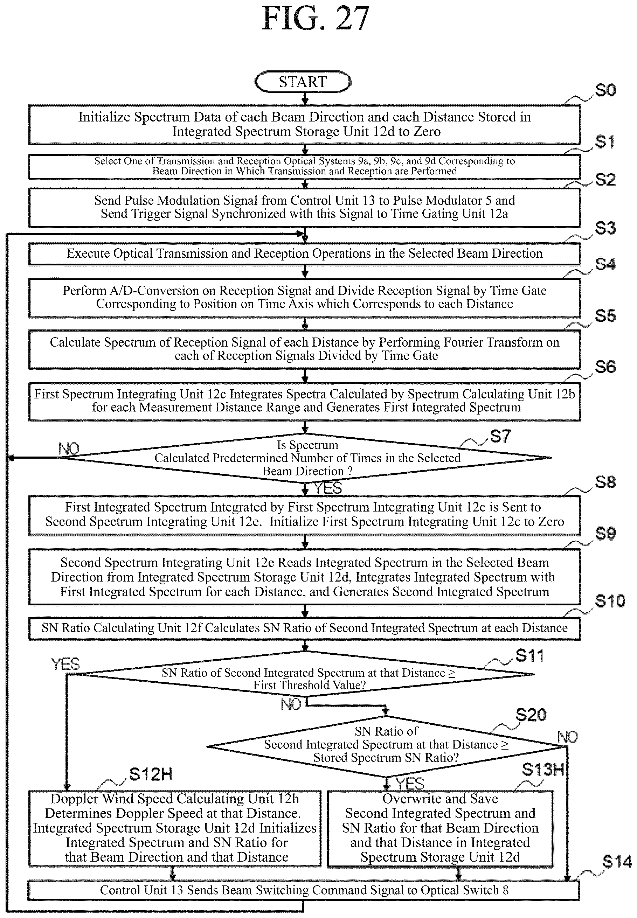

FIG. 27 is a flowchart illustrating the operation of the wind measurement lidar device according to the eighth embodiment. In FIG. 27, points that are different from FIG. 3 of the first embodiment are described. Steps S0H, Steps S12H and S13H are modified. Step S20 is added before S13H.

For the distance in which the SN ratio of the second integrated spectrum is greater than or equal to the first threshold value (YES in S11), the process proceeds to S12H. In S12H, the Doppler wind speed calculating unit 12h determines the Doppler frequency shift from the peak frequency of the second integrated spectrum and determines the Doppler wind speed (wind speed) corresponding to the Doppler frequency shift. Furthermore, the control unit 13 sends an initialization signal to the stored integrated spectrum correcting unit 12j, and the stored integrated spectrum correcting unit 12j initializes (resets to zero) the value of the spectrum data and the SN ratio thereof regarding the beam direction and the distance range (wind speed measurement section) for which the wind speed is calculated, the value of the spectrum data and the SN ratio thereof being stored in the integrated spectrum storage unit 12d2.

For the distance in which the SN ratio of the second integrated spectrum is not greater than or equal to the first threshold value (NO in S11), the process proceeds to S20. In S20, it is checked whether or not the SN ratio of the second integrated spectrum is greater than the stored spectrum SN ratio. If the SN ratio of the second integrated spectrum is greater than the stored spectrum SN ratio (YES in S20), in S13H, the integrated spectrum storage unit 12d2 is overwritten with the second integrated spectrum and the SN ratio thereof as the integrated spectrum of that beam direction and that distance. The SN ratio of the second integrated spectrum is also overwritten and stored. If the SN ratio of the second integrated spectrum is not greater than the stored spectrum SN ratio (NO in S20), the process proceeds to S14. When no integrated spectrum is stored in the integrated spectrum storage unit 12d2, it is judged to be YES in S20.

The wind measurement lidar device 1H operates similarly to the wind measurement lidar device 1. The wind measurement lidar device 1H can measure the wind speed in each direction and at each distance with high accuracy. In addition, the measurement rate does not decrease in a distance range of a short distance. In addition, the number of times of generating the first integrated spectrum can be reduced.

In the wind measurement lidar device 1H, the second integrated spectrum having the SN ratio greater than the SN ratio of the integrated spectrum stored in the integrated spectrum storage unit 12d2 is stored in the integrated spectrum storage unit 12d. Therefore, the wind measurement lidar device 1H does not lower the SN ratio of the integrated spectrum stored in the integrated spectrum storage unit 12d2. Therefore, the wind measurement lidar device 1H can make the SN ratio of the integrated spectrum, which is used when the wind speed is calculated, greater than that of the wind measurement lidar device 1 and can calculate the wind speed more accurately. Since it is possible to improve the SN ratio of the integrated spectrum stored in the integrated spectrum storage unit 12d2, the wind measurement lidar device 1H can reduce the number of times of generating the first integrated spectrum before calculation of the wind speed to less than that of the wind measurement lidar device 1.

Whether or not to update the integrated spectrum stored in the integrated spectrum storage unit 12d2 may be determined by comparing the second threshold value determined to be smaller than the first threshold value and the SN ratio of the first integrated spectrum. That is, in a case where a first integrated spectrum having an SN ratio lower than that of the second threshold value is generated, the integrated spectrum stored in the integrated spectrum storage unit 12d2 is not updated. This also applies to other embodiments.

Ninth Embodiment

A ninth embodiment is an embodiment in which the sixth embodiment is modified so that whether or not to further integrate first integrated spectrum is not determined for each beam direction but for each distance range.

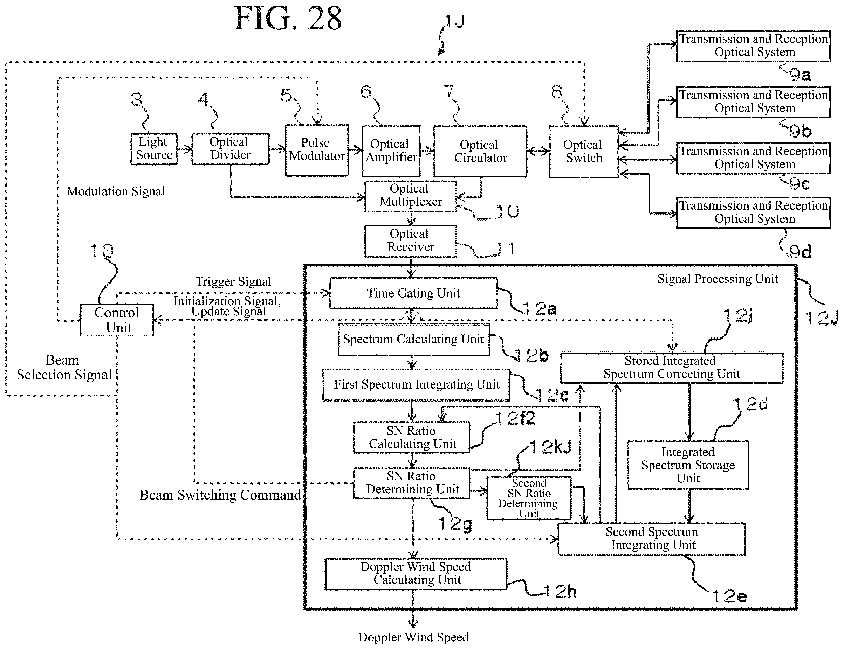

FIG. 28 is a schematic diagram illustrating the configuration of a wind measurement lidar device according to the ninth embodiment. In FIG. 28, points that are different from FIG. 17 of the sixth embodiment are described.

A wind measurement lidar device 1J includes a signal processing unit 12J. The signal processing unit 12J includes a second SN ratio determining unit 12kJ. The second SN ratio determining unit 12kJ determines whether or not the SN ratio of the first integrated spectrum is greater than or equal to the second threshold value individually in each beam direction and each distance range. The second threshold value is determined so as to be smaller than the first threshold value used by the SN ratio determining unit 12g. The second threshold value is determined in a similar manner to that in the sixth embodiment.

When the SN ratio of the first integrated spectrum is greater than or equal to the second threshold value, the second spectrum integrating unit 12e integrates the first integrated spectrum with an integrated spectrum stored in the integrated spectrum storage unit 12d to generate the second integrated spectrum. Otherwise, the second spectrum integrating unit 12e does not integrate the first integrated spectrum with an integrated spectrum stored in the integrated spectrum storage unit 12d. When the integration is not performed, the integrated spectrum stored in the integrated spectrum storage unit 12d is not changed. The integrated spectrum storage unit 12d stores the stored integrated spectrum that is stored before the first spectrum integrating unit 12c generating the first integrated spectrum.

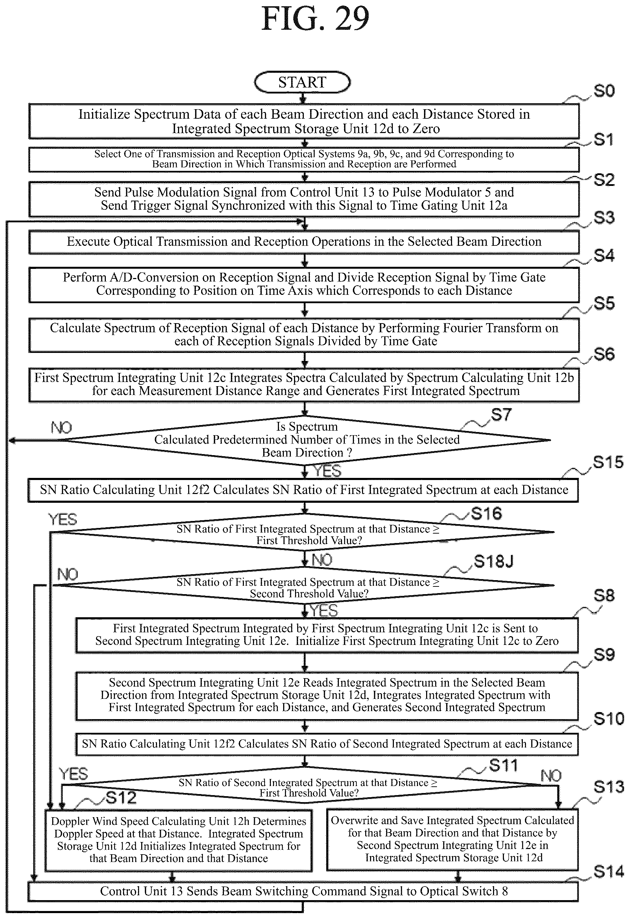

FIG. 29 is a flowchart illustrating the operation of the wind measurement lidar device according to the ninth embodiment. In FIG. 29, points that are different from FIG. 18 of the sixth embodiment are described. S0 is not modified. Between S16 and S8, step S18J is added instead of S18.

In S16, the process proceeds to S18J for a distance range in which no wind speed is calculated (NO in S16) since the SN ratio is smaller than the first threshold value. In S18J, it is checked whether or not the SN ratio of the first integrated spectrum is greater than or equal to the second threshold value. If the SN ratio of the first integrated spectrum is greater than or equal to the second threshold value (YES in S18J), the process proceeds to S8. In S8, the first integrated spectrum is sent to the second spectrum integrating unit 12e. If the SN ratio of the first integrated spectrum is not greater than or equal to the second threshold value (NO in S18J), the process proceeds to S14 in order to emit a beam of laser light in a next beam direction without using the first integrated spectrum for integration with the second integrated spectrum.

The wind measurement lidar device 1J operates similarly to the wind measurement lidar device 1F. The wind measurement lidar device 1H can measure the wind speed in each direction and at each distance with high accuracy. In addition, the measurement rate does not decrease in a distance range of a short distance.

Since the first integrated spectrum having a low SN ratio is not integrated into the second integrated spectrum, the SN ratio of the integrated spectrum stored in the integrated spectrum storage unit 12d does not decrease. Therefore, it is possible to reduce the number of times of generating the first integrated spectrum until the SN ratio of the second integrated spectrum becomes greater than or equal to the first threshold value.

Tenth Embodiment.

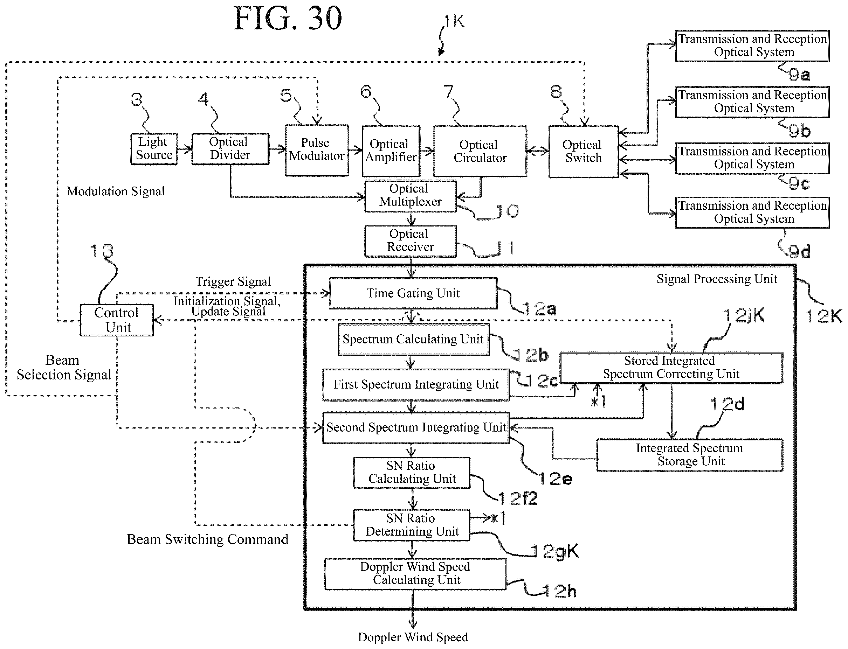

A tenth embodiment is an embodiment in which the first embodiment is modified so that it is determined whether or not the SN ratio of a higher SN ratio integrated spectrum, which is either one of the first integrated spectrum or the second integrated spectrum having a higher SN ratio, is greater than or equal to the first threshold value and that the wind speed is calculated from the higher SN ratio integrated spectrum having the SN ratio greater than or equal to the first threshold value. FIG. 30 is a schematic diagram illustrating a configuration of a wind measurement lidar device according to the tenth embodiment. In FIG. 30, points that are different from FIG. 1 of the first embodiment are described.

A wind measurement lidar device 1K includes a signal processing unit 12K. The signal processing unit 12K includes an SN ratio calculating unit 12f2, an SN ratio determining unit 12gK, and a stored integrated spectrum correcting unit 12jK. The SN ratio calculating unit 12f2 calculates the SN ratios of the first integrated spectrum integrated by the first spectrum integrating unit 12c and the second integrated spectrum integrated by the second spectrum integrating unit 12e. The SN ratio determining unit 12gK determines which of the first integrated spectrum and the second integrated spectrum is the higher SN ratio integrated spectrum and determines whether or not the SN ratio of the higher SN ratio integrated spectrum is greater than or equal to the first threshold value. The higher SN ratio integrated spectrum may be determined by a component other than the SN ratio determining unit 12gK.

When the SN ratio of the higher SN ratio integrated spectrum is greater than or equal to the first threshold value, the Doppler wind speed calculating unit 12h calculates the Doppler wind speed. When the SN ratio of the higher SN ratio integrated spectrum is not greater than or equal to the first threshold value, the stored integrated spectrum correcting unit 12jK stores the higher SN ratio integrated spectrum into the integrated spectrum storage unit 12d. That is, when the Doppler wind speed calculating unit 12h does not calculate the Doppler wind speed, the stored integrated spectrum correcting unit 12jK stores the higher SN ratio integrated spectrum into the integrated spectrum storage unit 12d.

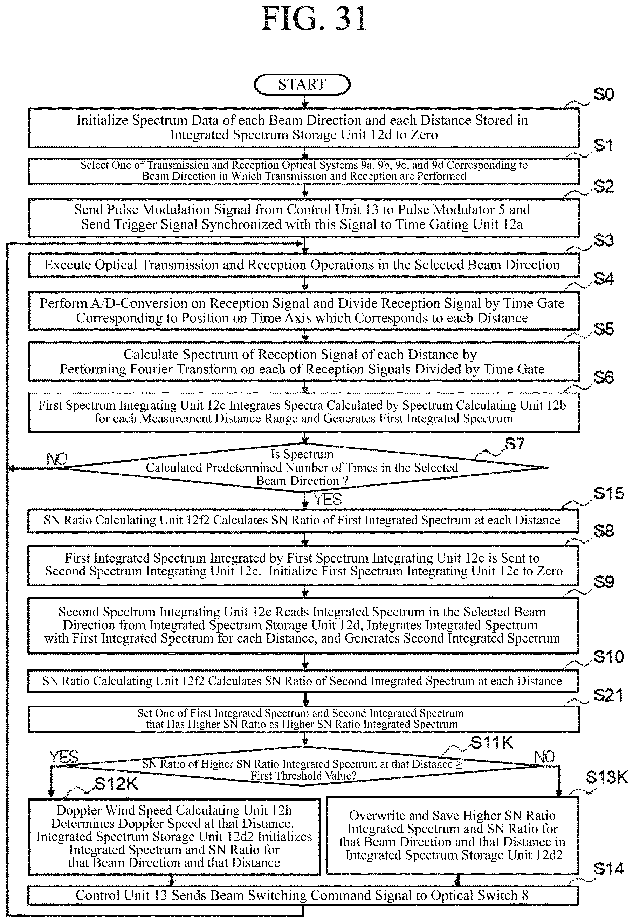

FIG. 31 is a flowchart illustrating the operation of the wind measurement lidar device according to the tenth embodiment. In FIG. 31, points that are different from FIG. 4 of the first embodiment are described. S15 is added between S7 and S8, and step S21 is added after S10. Furthermore, steps S11K, S12K, and S13K are modified.

If the spectrum is calculated the predetermined number of times (YES in S7), in S15, the SN ratio calculating unit 12f2 calculates the SN ratio of the first integrated spectrum at each distance integrated by the first spectrum integrating unit 12c.

In S10, the SN ratio calculating unit 12f2 calculates the SN ratio of the second integrated spectrum at each distance integrated by the second spectrum integrating unit 12e. In S21, either one of the first integrated spectrum or the second integrated spectrum having a higher SN ratio is determined to be the higher SN ratio integrated spectrum.

In S11K, it is checked whether or not the SN ratio of the higher SN ratio integrated spectrum is greater than or equal to the first threshold value for each distance. At a distance in which the SN ratio of the higher SN ratio integrated spectrum is greater than or equal to the first threshold value (YES in S11K), the process proceeds to S12K. In S12K, the Doppler wind speed calculating unit 12h determines the Doppler frequency shift from the peak frequency of the higher SN ratio integrated spectrum and determines the Doppler wind speed (wind speed) corresponding to the Doppler frequency shift. Furthermore, the control unit 13 sends an initialization signal to the stored integrated spectrum correcting unit 12j, and the stored integrated spectrum correcting unit 12j initializes (resets to zero) the value of the spectrum data regarding the beam direction and the distance range (wind speed measurement section) for which the wind speed is calculated, the value of the spectrum data and the SN ratio thereof being stored in the integrated spectrum storage unit 12d.

At a distance in which the SN ratio of the higher SN ratio integrated spectrum is not greater than or equal to the first threshold value (NO in S11K), the process proceeds to S13K. In S13K, the integrated spectrum storage unit 12d is overwritten with the higher SN ratio integrated spectrum and the SN ratio thereof as the integrated spectrum of that beam direction and that distance. That is, when the Doppler wind speed calculating unit 12h does not calculate the Doppler wind speed, the stored integrated spectrum correcting unit 12j stores the higher SN ratio integrated spectrum into the integrated spectrum storage unit 12d.

The wind measurement lidar device 1K operates similarly to the wind measurement lidar device 1. The wind measurement lidar device 1K can measure the wind speed in each direction and at each distance with high accuracy. In addition, the measurement rate does not decrease in a distance range of a short distance.

The maximum value of the SN ratios of the first integrated spectra is the first threshold value. The maximum value of the SN ratios of the second integrated spectra is larger than the first threshold value. The probability that the SN ratio of the second integrated spectrum is larger than the first threshold value and the SN ratio of the first integrated spectrum is examined. Here, the following variables are defined.

$\eta_n$: probability that the SN ratio of the second integrated spectrum generated at an n-th time is greater than the first threshold value. This variable is referred to as an SN ratio improvement probability.

$\eta$sum: probability of calculating the wind speed from the second integrated spectrum having an SN ratio larger than the first threshold value. This variable is referred to as the SN ratio improvement total probability.

$\eta$sum = $\Sigma \eta_n$, here, $\Sigma$ means to calculate a sum of pieces indicated by an integer being greater than or equal to 2.

Since the higher SN ratio integrated spectrum is stored in the integrated spectrum storage unit 12d, the probability distribution function of the non-blocking rate $x_n$ of the integrated spectrum stored in the integrated spectrum storage unit 12d is different from that described in the fifth embodiment. In order to simplify the analysis, examination is made on a case where the probability distribution function described in the fifth embodiment is used, and the first integrated spectrum with complete blocking is not used for integration of the second integrated spectrum as in the sixth embodiment.

In the first integration, since the second integrated spectrum is the same as the first integrated spectrum, the SN ratio improvement probability $\eta_1 = 0$. It can be considered that the probability that the SN ratio of the second integrated spectrum obtained by integrating two or more first integrated spectra with partial blocking is equal to the first threshold value is 0 (zero). Therefore, the second improvement probability $\varepsilon_{nF}$ is included in the SN ratio improvement probability $\eta_n$. The SN ratio improvement probability $\eta_n$ can be obtained by obtaining a probability when the SN ratio of the second integrated spectrum is larger than the first threshold value under a condition in which the first integrated spectrum without blocking is generated and adding the obtained probability to the second improvement probability $\varepsilon_{nF}$.

The SN ratio of the second integrated spectrum obtained by integrating the first integrated spectrum without blocking of the second time is larger than the first threshold value in the following one situation.

(N1) A situation where the first integrated spectrum with partial blocking in which $y > (\sqrt{2} - 1)$ is satisfied is generated at the first time.

Therefore, $\eta_2$ can be calculated by the following equations.

$$\eta_2 = \varepsilon_{2F} + \alpha * (1 - \alpha - \beta) * (1 - G_1(\sqrt{2} - 1))$$

$$= \varepsilon_{2F} + \alpha * (1 - \alpha - \beta) * (2 - \sqrt{2}) \qquad (72)$$

The SN ratio of the second integrated spectrum obtained by integrating the first integrated spectrum without blocking at the third time is larger than the first threshold value in the following two situations.

(P1) A situation where the first integrated spectrum with partial blocking in which $y > (\sqrt{2} - 1)$ is satisfied is generated at the first time, and the first integrated spectrum with complete blocking is generated at the second time.

(P2) A situation where the first integrated spectra with partial blocking are generated at the first time and the second time, and $(\sqrt{3} - 1) < x_2 < \sqrt{2}$ are satisfied.

Therefore, $\eta_3$ can be calculated by the following equations.

$$\eta_3 = \varepsilon_{3F}$$

$$+ \alpha * \beta * (1 - \alpha - \beta) * (1 - G_1(\sqrt{2}) - 1))$$

$$+ \alpha * (1 - \alpha - \beta)^2 * (G_2(\sqrt{2})) - G_2(\sqrt{3}) - 1)))$$

$$= \varepsilon_{3F}$$

$$+ \alpha * \beta * (1 - \alpha - \beta) * (2 - \sqrt{2})$$

$$+ \alpha * (1 - \alpha - \beta)^2 * (2 * \sqrt{2}) + \sqrt{3}) - 4) \tag{73}$$

The SN ratio of the second integrated spectrum obtained by integrating the first integrated spectrum without blocking of the fourth time is larger than the first threshold value in the following three situations.

(Q1) A situation where one first integrated spectrum with partial blocking in which $y > (\sqrt{2} - 1)$ is satisfied and two first integrated spectra with complete blocking are generated.
(Q2) A situation where one first integrated spectrum with complete blocking is generated, two first integrated spectra with partial blocking are generated, and $(\sqrt{3} - 1) < x_2 < \sqrt{2}$ is satisfied.
(Q3) A situation where the first integrated spectra with partial blocking in which $x_2 < \sqrt{2}$ is satisfied are generated at the first time and the second time, and the first integrated spectrum with partial blocking is generated at the third time, and $1 < x_3 < \sqrt{3}$ is satisfied.

Therefore, $\eta_3$ can be calculated by the following equations.

$$\eta_4 = \varepsilon_{4F}$$

$$+ 3 * \alpha * \beta^2 * (1 - \alpha - \beta) * (1 - G_1(\sqrt{2}) - 1))$$

$$+ 3 * \alpha * \beta * (1 - \alpha - \beta)^2 * (G_2(\sqrt{2})) - G_2(\sqrt{3}) - 1)))$$

$$+ \alpha * (1 - \alpha - \beta)^3 * (F_3(\sqrt{3})) - F_3(1)))$$

$$= \varepsilon_{4F}$$

$$+ 3 * \alpha * \beta^2 * (1 - \alpha - \beta) * (2 - \sqrt{2})$$

$$+ 3 * \alpha * \beta * (1 - \alpha - \beta)^2 * (2 * \sqrt{2}) + \sqrt{3}) - 4)))$$

$$+ \alpha * (1 - \alpha - \beta)^3 * (F_3(\sqrt{3})) - F_3(1))) \tag{74}$$

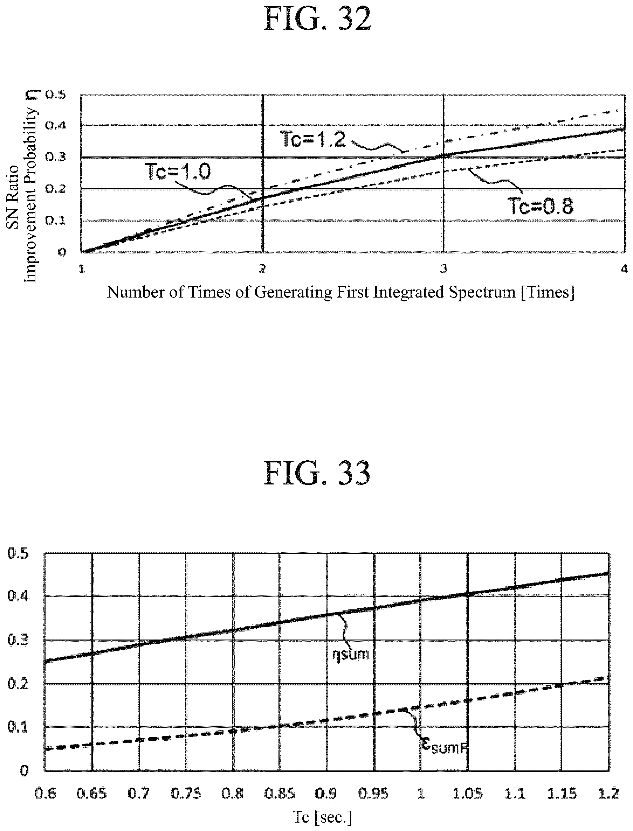

A graph showing changes in the SN ratio improvement probability $\eta_n$ against the number of times of generating the first integrated spectrum in the wind measurement lidar device 1K is illustrated in FIG. 32. FIG. 32 is a graph illustrating changes in the probability of improvement of the SN ratio of an integrated spectrum used for calculation of the wind speed and the probability related to the number of times of generating the first integrated spectrum against the number of times of generating the first integrated spectrum in the wind measurement lidar device according to the tenth embodiment. In FIG. 32, the case of Tc = 1.0 is indicated by a solid line, the case of Tc = 0.8 is indicated by a broken line, and the case of Tc = 1.2 is indicated by a one-dot chain line. For the SN ratio improvement probability $\eta_n$, a cumulative probability is indicated.

The SN ratio improvement probability $\eta_n$ are calculated as follows $\eta_2 = 0.173$, $\eta_2 + \eta_3 = 0.305$ ($\eta_3 = 0.132$), and $\eta_2 + \eta_3 + \eta_4 = 0.391$ $\gamma_{4E} = 0.086$) in the case of Tc = 1.0. As the number of times of generation n increases, $\eta_n$ decreases. Assuming that $\eta_n$ decreases in a geometrical progression, $\eta_{sum}$ is calculated to be about 0.55 in the case of Tc = 1.0. Similar trends are shown also for the cases of Tc = 0.8 and Tc = 1.2. In the case of Tc = 1.2, $\eta_{sum}$ is larger than that in the case of Tc = 1.0. In the case of Tc = 0.8, $\eta_{sum}$ is smaller than that in the case of Tc = 1.0.

A graph showing changes in the SN ratio improvement total probability $\eta_{sum}$ and the second improvement total probability $\varepsilon_{sumF}$ against the integration time Tc of the first integrated spectrum in the wind measurement lidar device 1K is illustrated in FIG. 33. FIG. 33 is a graph illustrating changes in the probability of improvement of the SN ratio of an integrated spectrum used for calculation of the wind speed and the probability related to the number of times of generating the first integrated spectrum against the integration time Tc of the first integrated spectrum in the wind measurement lidar device according to the tenth embodiment.

In the range of Tc = 0.6 to 1.2, $\eta_{sum}$ is twice as large as $\varepsilon_{sumF}$ or more. As for $\eta_{sum}$, similarly to $\varepsilon_{sumF}$, $\eta_{sum}$ increases as Tc increases. The reason why $\eta_{sum}$ increases as Tc increases is that $(1 - \alpha - \beta)$ increases as Tc increases. When $(1 - \alpha - \beta)$ is large, the probability of calculating the wind speed from the second integrated spectrum increases, and the SN ratio improvement probability $\eta$ also increases.

By calculating the wind speed from the higher SN ratio integrated spectrum, which is either one of the first integrated spectrum or the second integrated spectrum having a larger SN ratio, it becomes possible to calculate the wind speed from the integrated spectrum having a higher SN ratio as compared with the method of calculating the wind speed by using either the first integrated spectrum or the second integrated spectrum preferentially, and thus the accuracy of the wind speed that is calculated is improved.

Since the higher SN ratio integrated spectrum is stored in the integrated spectrum storage unit 12d, the SN ratio of the integrated spectrum stored in the integrated spectrum storage unit 12d for second and subsequent times is greater than that when the second integrated spectrum is always stored. Since the SN ratio of the integrated spectrum stored in the integrated spectrum storage unit 12d increases, the number of times of generating the first integrated spectrum, until the wind speed can be calculated, decreases.

Eleventh Embodiment

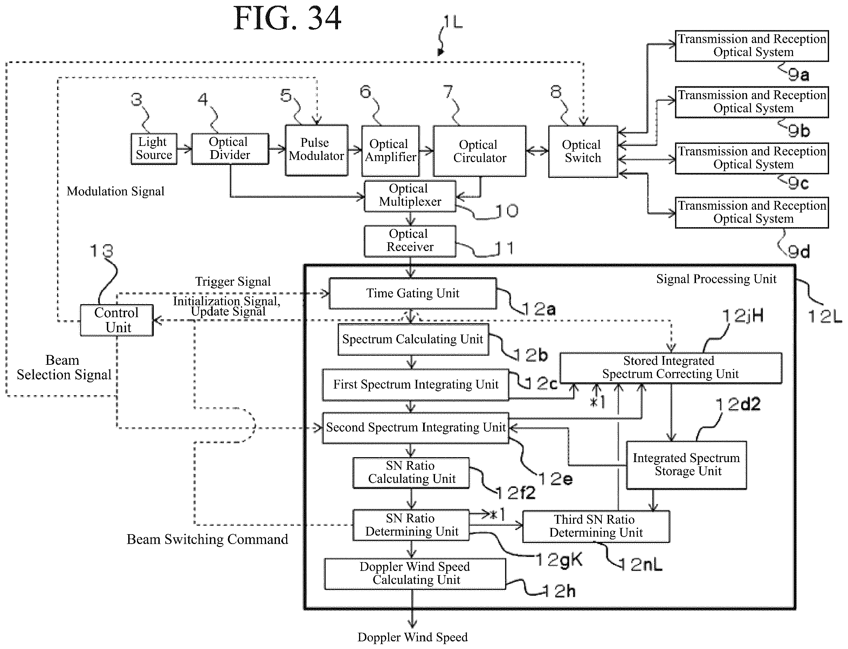

An eleventh embodiment is an embodiment in which the tenth embodiment is modified such that, when the SN ratio of the higher SN ratio integrated spectrum is greater than the SN ratio of a stored integrated spectrum stored in the integrated spectrum storage unit, the higher SN ratio integrated spectrum is stored in the integrated spectrum storage unit. FIG. 34 is a schematic diagram illustrating the configuration of a wind measurement lidar device according to the eleventh embodiment. In FIG. 34, points that are different from FIG. 30 of the tenth embodiment are described.

The wind measurement lidar device 1L includes a signal processing unit 12L. The signal processing unit 12L includes a third SN ratio determining unit 12nL in addition to the SN ratio determining unit 12gK. Similarly to the eighth embodiment, the integrated spectrum storage unit 12d2 and the stored integrated spectrum correcting unit 12jH are modified. The integrated spectrum storage unit 12d2 also stores the SN ratio of an integrated spectrum together with the integrated spectrum. The stored integrated spectrum correcting unit 12jH also stores the SN ratio when storing an integrated spectrum.

The third SN ratio determining unit 12nL operates when the SN ratio determining unit 12gK determines that the SN ratio of the higher SN ratio integrated spectrum is not greater than or equal to the first threshold value. That is, the third SN ratio determining unit 12nL operates when the Doppler wind speed calculating unit 12h does not calculate the Doppler wind speed. The third SN ratio determining unit 12nL determines whether or not the SN ratio of the higher SN ratio integrated spectrum is greater than the stored spectrum SN ratio. When the SN ratio of the higher SN ratio integrated spectrum is greater than the stored spectrum SN ratio, the stored integrated spectrum correcting unit 12jH stores the higher SN ratio integrated spectrum, together with the SN ratio thereof, into the integrated spectrum storage unit 12d2. That is, when the Doppler wind speed calculating unit 12h does not calculate the Doppler wind speed, and the SN ratio of the higher SN ratio integrated spectrum is greater than the SN ratio of the stored integrated spectrum, the stored integrated spectrum correcting unit 12j stores the higher SN ratio integrated spectrum into the integrated spectrum storage unit 12d2.

When the SN ratio of the higher SN ratio integrated spectrum is not greater than the stored spectrum SN ratio, the stored integrated spectrum correcting unit 12jH does not store the higher SN ratio integrated spectrum into the integrated spectrum storage unit 12d2. The integrated spectrum storage unit 12d2 continues to store the integrated spectrum that is stored. When the SN ratio of the higher SN ratio integrated spectrum is equal to the stored spectrum SN ratio, the stored integrated spectrum correcting unit 12j may store the higher SN ratio integrated spectrum into the integrated spectrum storage unit 12d2. When the Doppler wind speed calculating unit 12h does not calculate the Doppler wind speed, and the SN ratio of the higher SN ratio integrated spectrum is lower than the SN ratio of the stored integrated spectrum, the stored integrated spectrum correcting unit 12j may store the higher SN ratio integrated spectrum into the integrated spectrum storage unit 12d2.

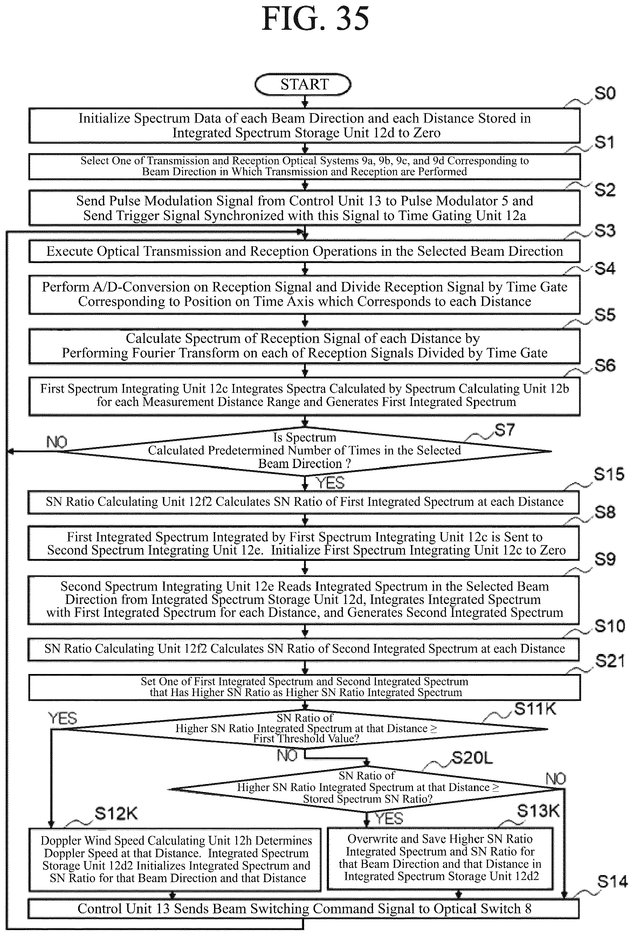

FIG. 35 is a flowchart illustrating the operation of the wind measurement lidar device according to the eleventh embodiment. In FIG. 35, points that are different from FIG. 31 of the tenth embodiment are described. Step S20L is added before S13K.

At a distance in which the SN ratio of the higher SN ratio integrated spectrum is not greater than or equal to the first threshold value (NO in S11K), the process proceeds to S20L. In S20L, it is checked whether or not the SN ratio of the higher SN ratio integrated spectrum is greater than the stored spectrum SN ratio. If the SN ratio of the higher SN ratio integrated spectrum is greater than the stored spectrum SN ratio (YES in S20L), in S13K, the integrated spectrum storage unit 12d2 is overwritten with the higher SN ratio integrated spectrum and the SN ratio as the integrated spectrum and the SN ratio of the beam direction and the distance. If the SN ratio of the higher SN ratio integrated spectrum is not greater than the stored spectrum SN ratio (NO in S20L), the process proceeds to S14. If no integrated spectrum is stored in the integrated spectrum storage unit 12d2, it is judged to be YES in S20L.

The wind measurement lidar device 1L operates similarly to the wind measurement lidar device 1K. The wind measurement lidar device 1L can measure the wind speed in each direction and at each distance with high accuracy. In addition, the measurement rate does not decrease in a distance range of a short distance. By calculating the wind speed from the higher SN ratio integrated spectrum, it becomes possible to calculate the wind speed from the integrated spectrum having a higher SN ratio as compared with either the method of calculating the wind speed only from the second integrated spectrum or the method of calculating the wind speed by using the first integrated spectrum preferentially, and thus the accuracy of the wind speed that is calculated is improved.

Since the higher SN ratio integrated spectrum is stored in the integrated spectrum storage unit 12d2 only when the SN ratio is greater than that of the integrated spectrum stored in the integrated spectrum storage unit 12d2, the SN ratio of the integrated spectrum stored in the integrated spectrum storage unit 12d2 does not decrease. Since the SN ratio of the integrated spectrum stored in the integrated spectrum storage unit 12d2 increases, the number of times of generating the first integrated spectrum, until the wind speed can be calculated, decreases.

A free combination of the embodiments, or a modification of the embodiments, or omission of the embodiments can be made.

REFERENCE SIGNS LIST

1, 1A, 1B, 1C, 1D, 1E, IF, 0F, 1G, 1H, 1J, 1K, 1L: wind measurement lidar device, 2: wind turbine, 3: light source, 4: optical divider, 5: pulse modulator, 6: optical amplifier, 7: optical circulator, 8: optical switch (beam switching unit), 9, 9a, 9b, 9c, 9d: transmission and reception optical system (beam switching unit), 10: optical multiplexer (reception detection unit), 11: optical receiver (reception detection unit), 12, 12D, 12E, 12F, 12G, 12H, 12J, 12K, 12L: signal processing unit, 12a: time gating unit (reception signal dividing unit), 12b: spectrum calculating unit, 12c: first spectrum integrating unit (spectrum integrating unit), 12d, 12d2: integrated spectrum storage unit, 12e: second spectrum integrating unit (spectrum integrating unit), 12f, 12f2: SN ratio calculating unit, 12g, 12gK: SN ratio determining unit, 12h: Doppler wind speed calculating unit (wind speed calculating unit), 12j, 12jD, 12jH, 12jK: stored integrated spectrum correcting unit, 12k, 12kG, 12kJ: second SN ratio determining unit, 12n, 12nL: third SN ratio determining unit, 13: control unit, 14: wavelength-switchable light source (light source, beam switching unit), 15: wavelength-division optical multiplexer (beam switching unit), 16, 16C: wind speed predicting unit, 16a: Doppler wind speed storage unit, 16b: incoming wind speed predicting unit, 16c: shear predicting unit, 16d: weighting coefficient storing unit, 16e: incoming wind speed storing unit, 16f: shear storing unit, 16g: weighting coefficient for incoming wind speed prediction, 16h: shear prediction weighting coefficient, 17: beam direction storing unit, 18: wind direction measuring unit

**Claims**

1. A wind measurement lidar device comprising:

   a light source to output laser light being a continuous wave;
   an optical divider to divide the laser light outputted from the light source into transmission light and local light;
   a pulse modulator to perform pulse-modulation on the transmission light;
   a transmission and reception optical system to transmit the transmission light being pulse-modulated into atmosphere in a plurality of beam directions and to receive reflection light from the plurality of beam directions, the reflection light being the transmission light reflected by particles moving together with the atmosphere, each of the plurality of beam directions being different from each other;
   a beam switching unit to switch to another one of the plurality of beam directions when beam selection time elapses in one of the plurality of beam directions, the beam selection time being time in which a plurality of pulses of greater than or equal to a predetermined minimum number of pulses are generated;
   a reception detection unit to detect the reflection light by combining the reflection light and the local light and to perform photoelectric conversion to generate a reception signal, the reflection light being obtained for each of the plurality of pulses;
   a reception signal dividing unit to divide the reception signal into a plurality of time intervals divided in accordance with a plurality of distances from the transmission and reception optical system to generate a plurality of divided reception signals;

a spectrum calculating unit to calculate a spectrum by performing a Fourier transform on each of the plurality of divided reception signals;

an integrated spectrum storage unit to store an integrated spectrum obtained by integrating the spectra of a plurality of divided reception signals for each of a plurality of wind speed measurement sections, each of the plurality of wind speed measurement sections being a combination of one of the plurality of beam directions and one of the time intervals;

a spectrum integrating unit to generate a first integrated spectrum and a second integrated spectrum or to generate the second integrated spectrum, the first integrated spectrum being the integrated spectrum obtained by integrating, for each of the plurality of wind speed measurement sections, a plurality of the spectra each calculated from a plurality of divided reception signals obtained by dividing each of a plurality of the reception signals obtained from the plurality of pulses transmitted in succession in one of the plurality of beam directions, the second integrated spectrum being the integrated spectrum obtained by integrating, for each of the plurality of wind speed measurement sections, a plurality of the spectra each calculated from a plurality of the divided reception signals obtained by dividing each of a plurality of the reception signals obtained from the plurality of pulses transmitted in succession in one of the plurality of beam directions and a stored integrated spectrum, the stored integrated spectrum being the integrated spectrum stored in the integrated spectrum storage unit;

a spectrum SN ratio calculating unit to calculate an SN ratio of the integrated spectrum for each of the plurality of wind speed measurement sections;

a wind speed calculating unit to calculate a wind speed in the wind speed measurement section from the integrated spectrum having an SN ratio greater than or equal to a first threshold value; and

a stored integrated spectrum correcting unit to initialize the integrated spectrum stored in the integrated spectrum storage unit for the wind speed measurement section for which the wind speed is calculated.

2. The wind measurement lidar device according to claim 1, wherein the spectrum integrating unit includes a first spectrum integrating unit to generate the first integrated spectrum and a second spectrum integrating unit to generate the second integrated spectrum by integrating the first integrated spectrum and the stored integrated spectrum.

3. The wind measurement lidar device according to claim 1 or 2,

wherein, in each of the plurality of wind speed measurement sections, the wind speed is calculated from the first integrated spectrum when an SN ratio of the first integrated spectrum is greater than or equal to the first threshold value, and

in each of the plurality of wind speed measurement sections, the wind speed is calculated from the second integrated spectrum when the SN ratio of the first integrated spectrum is not greater than or equal to the first threshold value, and an SN ratio of the second integrated spectrum is greater than or equal to the first threshold value.

4. The wind measurement lidar device according to claim 1 or 2, wherein, in each of the plurality of wind speed measurement sections, the wind speed is calculated from the second integrated spectrum when the SN ratio of the second integrated spectrum is greater than or equal to the first threshold value.

5. The wind measurement lidar device according to claim 1 or 2, wherein, in each of the plurality of wind speed measurement sections, the wind speed is calculated from a higher SN ratio integrated spectrum when an SN ratio of the higher SN ratio integrated spectrum is greater than or equal to the first threshold value, the higher SN ratio integrated spectrum being either one of the first integrated spectrum or the second integrated spectrum having a higher SN ratio.

6. The wind measurement lidar device according to any one of claims 1 to 5, wherein, in each of the plurality of wind speed measurement sections, the spectrum integrating unit generates the second integrated spectrum when an SN ratio of the first integrated spectrum is greater than or equal to a second threshold value being set to be smaller than the first threshold value, and the integrated spectrum storage unit stores the stored integrated spectrum being stored before the spectrum integrating unit generates the first integrated spectrum when the SN ratio of the first integrated spectrum is not greater than or equal to the second threshold value.

7. The wind measurement lidar device according to any one of claims 1 to 5,

wherein, when the number of the wind speed measurement sections, in each of the plurality of beam directions, being a determination target wind speed measurement section being predetermined one or more of the wind speed measurement sections in each of the plurality of beam directions and in which the SN ratio of the first integrated spectrum is greater than or equal to a second threshold value being determined to be smaller than the first threshold value, is greater than or equal to a predetermined lower limit number, the spectrum integrating unit generates the second integrated spectrum for each of the wind speed measurement sections in the beam direction, and

when the number of the wind speed measurement sections, in each of the plurality of beam directions, being the determination target wind speed measurement section and in which the SN ratio of the first integrated spectrum is greater than or equal to the second threshold value, is not greater than or equal to the lower limit number, the integrated spectrum storage unit stores the stored integrated spectrum being stored before the spectrum integrating unit generates the first integrated spectrum in each of the wind speed measurement sections in the beam direction.

8. The wind measurement lidar device according to any one of claims 1 to 5,

wherein, when the number of the wind speed measurement sections, in each of the plurality of beam directions, being a determination target wind speed measurement section being predetermined one or more of the wind speed measurement sections in each of the plurality of beam directions and in which the SN ratio of the first integrated spectrum is greater than or equal to a second threshold value being determined to be smaller than the first threshold value, is greater than or equal to a predetermined lower limit number, the spectrum integrating unit generates the second integrated spectrum for the wind speed measurement section being in the beam direction and in which the SN ratio of the first integrated spectrum is greater than or equal to a third threshold value being determined to be smaller than the second threshold value, and the integrated spectrum storage unit stores the stored integrated spectrum being stored before the spectrum integrating unit generates the first integrated spectrum in the wind speed measurement section being in the beam direction and in which the SN ratio of the first integrated spectrum is not greater than or equal to the third threshold value, and

when the number of the wind speed measurement sections, in each of the plurality of beam directions, being the determination target wind speed measurement section and in which the SN ratio of the first integrated spectrum is greater than or equal to the second threshold value, is not greater than or equal to the lower limit number, the integrated spectrum storage unit stores the stored integrated spectrum being stored before the spectrum integrating unit generates the first integrated spectrum in each of the wind speed measurement sections in the beam direction.

9. The wind measurement lidar device according to claim 3 or 4, wherein, in each of the plurality of wind speed measurement sections, the stored integrated spectrum correcting unit stores the second integrated spectrum into the integrated spectrum storage unit when the wind speed calculating unit does not calculate the wind speed.

10. The wind measurement lidar device according to claim 3 or 4, wherein, in each of the plurality of wind speed measurement sections, the stored integrated spectrum correcting unit stores the second integrated spectrum into the integrated spectrum storage unit when the wind speed calculating unit does not calculate the wind speed, and the SN ratio of the second integrated spectrum is higher than the SN ratio of the stored integrated spectrum.

11. The wind measurement lidar device according to claim 3, 4, or 10, wherein, in each of the plurality of wind speed measurement sections, the integrated spectrum storage unit stores the stored integrated spectrum being stored before the spectrum integrating unit generates the first integrated spectrum when the wind speed calculating unit does not calculate the wind speed, and the SN ratio of the second integrated spectrum is lower than the SN ratio of the stored integrated spectrum.

12. The wind measurement lidar device according to claim 5, wherein, in each of the plurality of wind speed measurement sections, the stored integrated spectrum correcting unit stores the higher SN ratio integrated spectrum into the integrated spectrum storage unit when the wind speed calculating unit does not calculate the wind speed.

13. The wind measurement lidar device according to claim 5, wherein, in each of the plurality of wind speed measurement sections, the stored integrated spectrum correcting unit stores the higher SN ratio integrated spectrum into the integrated spectrum storage unit when the wind speed calculating unit does not calculate the wind speed, and the SN ratio of the higher SN ratio integrated spectrum is higher than the SN ratio of the stored integrated spectrum.

**14.** The wind measurement lidar device according to claim 5 or 13, wherein, in each of the plurality of wind speed measurement sections, the integrated spectrum storage unit stores the stored integrated spectrum being stored before the spectrum integrating unit generates the first integrated spectrum when the wind speed calculating unit does not calculate the wind speed, and the SN ratio of the higher SN ratio integrated spectrum is lower than the SN ratio of the stored integrated spectrum.

**15.** The wind measurement lidar device according to any one of claims 1 to 14, wherein, when the SN ratio of the integrated spectrum satisfies a condition for calculating the wind speed in all of the plurality of wind speed measurement sections having a same distance and a same altitude, the wind speed calculating unit calculates the wind speed in all of the plurality of wind speed measurement sections having the same distance and the same altitude.

**16.** The wind measurement lidar device according to any one of claims 1 to 15, wherein the minimum number of pulses is determined such that there is a case where the SN ratio of the first integrated spectrum integrated at least for the wind speed measurement section corresponding to a shortest distance is greater than or equal to the first threshold value in all the plurality of beam directions.

**17.** The wind measurement lidar device according to any one of claims 1 to 16, wherein the beam switching unit switches the beam direction so that a length of the beam selection time is less than or equal to an upper limit value.

**18.** The wind measurement lidar device according to claim 17, wherein the upper limit value is determined to be less than or equal to a longest cycle for measuring the wind speed at a shortest distance.

**19.** The wind measurement lidar device according to any one of claims 1 to 18, wherein, for the wind speed measurement section in which the SN ratio of the integrated spectrum is less than the first threshold value, the stored integrated spectrum correcting unit stores the integrated spectrum generated by the spectrum integrating unit into the integrated spectrum storage unit when the number of times of successive integration, being the number of times of storing the integrated spectrum into the integrated spectrum storage unit after initialization of the integrated spectrum storage unit, is less than or equal to an upper limit number of times, and the stored integrated spectrum correcting unit initializes the integrated spectrum stored in the integrated spectrum storage unit when the number of times of successive integration exceeds the upper limit number of times.

**20.** The wind measurement lidar device according to any one of claims 1 to 19, wherein the spectrum integrating unit integrates collectively, for each of the plurality of beam directions, the spectra calculated from the divided reception signals in a plurality of the time intervals corresponding to a plurality of the distances that are classified as a long distance.

**21.** The wind measurement lidar device according to any one of claims 1 to 20, further comprising:

a plurality of the transmission and reception optical systems to perform transmission and reception in the plurality of beam directions that are different from each other,
wherein the beam switching unit comprises: an optical switch to transmit the transmission light by selecting any one of the plurality of the transmission and reception optical systems and to receive the reflection light; and a plurality of the transmission and reception optical systems.

**22.** The wind measurement lidar device according to any one of claims 1 to 20, further comprising:

the light source to output the laser light having each of a plurality of different wavelengths; and
a plurality of the transmission and reception optical systems to perform transmission and reception in the plurality of beam directions that are different from each other,
wherein the beam switching unit comprises: a wavelength-division optical multiplexer comprising a plurality of input and output ports, which laser light having each of the plurality of different wavelengths outputted from the laser light are inputted to and outputted from, the plurality of input and output ports being connected with any one of the plurality of transmission and reception optical systems; the plurality of transmission and reception optical systems; and the light source for switching and outputting the laser light having each of the plurality of different wavelengths.

**23.** The wind measurement lidar device according to any one of claims 1 to 22, wherein the wind measurement lidar device is mounted on a wind turbine and measures a wind speed at a front position of and in a front direction of the wind turbine.

# FIG. 1

# FIG. 2

Beam 1

Beam 2

θ2  θ1

Front Direction of Wind Turbine

θ3

Beam 3

θ4

Beam 4

Range 1

Range 2

Short Distance: d1

Long Distance: d2

EP 3 955 028 A1

# FIG. 3

START ~S0

Initialize Spectrum Data of each Beam Direction and each Distance Stored in Integrated Spectrum Storage Unit 12d to Zero ~S1

Select One of Transmission and Reception Optical Systems 9a, 9b, 9c, and 9d Corresponding to Beam Direction in Which Transmission and Reception are Performed ~S2

Send Pulse Modulation Signal from Control Unit 13 to Pulse Modulator 5 and Send Trigger Signal Synchronized with this Signal to Time Gating Unit 12a ~S3

Execute Optical Transmission and Reception Operations in the Selected Beam Direction ~S4

Perform A/D-Conversion on Reception Signal and Divide Reception Signal by Time Gate Corresponding to Position on Time Axis which Corresponds to each Distance ~S5

Calculate Spectrum of Reception Signal of each Distance by Performing Fourier Transform on each of Reception Signals Divided by Time Gate ~S6

First Spectrum Integrating Unit 12c Integrates Spectra Calculated by Spectrum Calculating Unit 12b for each Measurement Distance Range and Generates First Integrated Spectrum

Is Spectrum Calculated Predetermined Number of Times in the Selected Beam Direction ? ~S7
NO
YES ~S8

First Integrated Spectrum Integrated by First Spectrum Integrating Unit 12c is Sent to Second Spectrum Integrating Unit 12e. Initialize First Spectrum Integrating Unit 12c to Zero ~S9

Second Spectrum Integrating Unit 12e Reads Integrated Spectrum in the Selected Beam Direction from Integrated Spectrum Storage Unit 12d, Integrates Integrated Spectrum with First Integrated Spectrum for each Distance, and Generates Second Integrated Spectrum ~S10

SN Ratio Calculating Unit 12f Calculates SN Ratio of Second Integrated Spectrum at each Distance ~S11

SN Ratio of Second Integrated Spectrum at that Distance ≥ First Threshold Value?
YES
S12
NO ~S13

Doppler Wind Speed Calculating Unit 12h Determines Doppler Speed at that Distance. Integrated Spectrum Storage Unit 12d Initializes Integrated Spectrum for that Beam Direction and that Distance

Overwrite and Save Integrated Spectrum Calculated for that Beam Direction and that Distance by Second Spectrum Integrating Unit 12e in Integrated Spectrum Storage Unit 12d ~S14

Control Unit 13 Sends Beam Switching Command Signal to Optical Switch 8

# FIG. 4

START

Optical Divider 4 Divides into Local Light and Transmission Light, Sends Local Light to Optical Multiplexer 10, and Sends Transmission Light to Pulse Modulator 5 — S3A

Pulse Modulator 5 Pulse-Modulates and Applies Optical Frequency Shift to Transmission Light and Generates Laser Light Having Intermediate Frequency — S3B

Transmission Light Pulse-Modulated is Amplified by Optical Amplifier 6 — S3C

Transmission Light Amplified is Transmitted into Atmosphere from One Transmission and Reception Optical System 9 that is selected from among Transmission and Reception Optical Systems 9a, 9b, 9c, and 9d — S3D

Reflection Light Scattered by Aerosol at Each Distance in Atmosphere is Received by One Transmission and Reception Optical System 9 that is Selected from Among Transmission and Reception Optical Systems 9a, 9b, 9c, and 9d — S3E

Reception Light Received by Transmission and Reception Optical System 9 that is Selected is Sent to Optical Multiplexer 10 via Optical Switch 8 and Circulator 7 — S3F

In Optical Multiplexer 10, Local Light and Reception Light are Combined, which is Detected Coherently by Optical Receiver 11 — S3G

Reception Signal that is Electrical Signal Generated by Detection is Sent to Time Gating Unit 12a in Signal Processing Unit 12 — S3H

END

# FIG. 5

Modulation Signal 14

Wavelength-Switchable Light Source → Optical Divider (4) → Pulse Modulator (5) → Optical Amplifier (6) → Optical Circulator (7) → Wavelength-Division Optical Multiplexer (15)

1A

Transmission and Reception Optical System ~9a
Transmission and Reception Optical System ~9b
Transmission and Reception Optical System ~9c
Transmission and Reception Optical System ~9d

Optical Multiplexer ~10

Optical Receiver ~11

Control Unit 13A

Trigger Signal
Initialization Signal, Update Signal

Beam Selection Signal

Beam Switching Command

Signal Processing Unit 12

Time Gating Unit 12a

Spectrum Calculating Unit 12b

First Spectrum Integrating Unit 12c

Stored Integrated Spectrum Correcting Unit 12j

*1

Second Spectrum Integrating Unit 12d

Integrated Spectrum Storage Unit

SN Ratio Calculating Unit 12e

12f

SN Ratio Determining Unit →*1

12g

Doppler Wind Speed Calculating Unit 12h

Doppler Wind Speed

EP 3 955 028 A1

# FIG. 6

EP 3 955 028 A1

# FIG. 7

# FIG. 8

# FIG. 9

FIG. 10

# FIG. 11

START

Initialize Spectrum Data of each Beam Direction and each Distance Stored in
Integrated Spectrum Storage Unit 12d to Zero ~ S0

Select One of Transmission and Reception Optical Systems 9a, 9b, 9c, and 9d Corresponding to
Beam Direction in Which Transmission and Reception are Performed ~ S1

Send Pulse Modulation Signal from Control Unit 13 to Pulse Modulator 5 and
Send Trigger Signal Synchronized with this Signal to Time Gating Unit 12a ~ S2

Execute Optical Transmission and Reception Operations in the Selected Beam Direction ~ S3

Perform A/D-Conversion on Reception Signal and Divide Reception Signal by Time Gate
Corresponding to Position on Time Axis which Corresponds to each Distance ~ S4

Calculate Spectrum of Reception Signal of each Distance by
Performing Fourier Transform on each of Reception Signals Divided by Time Gate ~ S5

First Spectrum Integrating Unit 12c Integrates Spectra Calculated by Spectrum Calculating Unit 12b
for each Measurement Distance Range and Generates First Integrated Spectrum ~ S6

NO — Is Spectrum
Calculated Predetermined Number of Times in the Selected
Beam Direction ? ~ S7

YES

SN Ratio Calculating Unit 12f2 Calculates SN Ratio of First Integrated Spectrum at each Distance ~ S15

YES — SN Ratio of First Integrated Spectrum at that Distance ≥
First Threshold Value? ~ S16

NO

First Integrated Spectrum Integrated by First Spectrum Integrating Unit 12c is Sent to
Second Spectrum Integrating Unit 12e. Initialize First Spectrum Integrating Unit 12c to Zero ~ S8

Second Spectrum Integrating Unit 12e Reads Integrated Spectrum in the Selected Beam
Direction from Integrated Spectrum Storage Unit 12d, Integrates Integrated Spectrum
with First Integrated Spectrum for each Distance, and Generates Second Integrated Spectrum ~ S9

SN Ratio Calculating Unit 12f2 Calculates SN Ratio of Second Integrated Spectrum at each Distance ~ S10

YES — SN Ratio of Second Integrated Spectrum at that Distance ≥
First Threshold Value? ~ S11 — NO

S12

Doppler Wind Speed Calculating Unit 12h
Determines Doppler Speed at that Distance.
Integrated Spectrum Storage Unit 12d Initializes
Integrated Spectrum for that Beam Direction
and that Distance

Overwrite and Save Integrated Spectrum
Calculated for that Beam Direction and
that Distance by Second Spectrum
Integrating Unit 12e in Integrated
Spectrum Storage Unit 12d ~ S13

Control Unit 13 Sends Beam Switching Command Signal to Optical Switch 8 ~ S14

# FIG. 12

## FIG. 13A

## FIG. 13B

## FIG. 13C

## FIG. 13D

FIG. 14A

First Improvement Probability $\gamma_E$

Tc=0.8
Tc=1.0
Tc=1.2

Number of Times of Generating First Integrated Spectrum [Times]

FIG. 14B

Second Improvement Probability $\varepsilon_E$

Tc=1.2
Tc=1.0
Tc=0.8

Number of Times of Generating First Integrated Spectrum [Times]

FIG. 14C

Unfinished Calculation Probability $\zeta_E$

Tc=1.2
Tc=1.0
Tc=0.8

Number of Times of Generating First Integrated Spectrum [Times]

# FIG. 15

# FIG. 16

# FIG. 17

EP 3 955 028 A1

# FIG. 18

START

SOF

Initialize Spectrum Data of each Beam Direction and each Distance Stored in Integrated Spectrum Storage Unit 12d to Zero. Set Determination Target Wind Speed Measurement Section for every Beam Direction

S1

Select One of Transmission and Reception Optical Systems 9a, 9b, 9c, and 9d Corresponding to Beam Direction in Which Transmission and Reception are Performed

S2

Send Pulse Modulation Signal from Control Unit 13 to Pulse Modulator 5 and Send Trigger Signal Synchronized with this Signal to Time Gating Unit 12a

S3

Execute Optical Transmission and Reception Operations in the Selected Beam Direction

S4

Perform A/D-Conversion on Reception Signal and Divide Reception Signal by Time Gate Corresponding to Position on Time Axis which Corresponds to each Distance

S5

Calculate Spectrum of Reception Signal of each Distance by Performing Fourier Transform on each of Reception Signals Divided by Time Gate

S6

First Spectrum Integrating Unit 12c Integrates Spectra Calculated by Spectrum Calculating Unit 12b for each Measurement Distance Range and Generates First Integrated Spectrum

S7

NO — Is Spectrum Calculated Predetermined Number of Times in the Selected Beam Direction ? — YES

S15

SN Ratio Calculating Unit 12f2 Calculates SN Ratio of First Integrated Spectrum at each Distance

S17

Second SN Ratio Determining Unit 12k Determines Whether or Not the Number of Distance Ranges, Which are Included in Determination Target Wind Speed Measurement Section and Have SN Ratio of First Integrated Spectrum Greater than or Equal to Second Threshold Value, Is Greater than or Equal to Lower Limit Number and Stores Result in NDsum.

S16

YES — SN Ratio of First Integrated Spectrum at that Distance ≥ First Threshold Value? — NO

S18

NO — NDsum＝YES? — YES

S8

First Integrated Spectrum Integrated by First Spectrum Integrating Unit 12c is Sent to Second Spectrum Integrating Unit 12e. Initialize First Spectrum Integrating Unit 12c to Zero

S9

Second Spectrum Integrating Unit 12e Reads Integrated Spectrum in the Selected Beam Direction from Integrated Spectrum Storage Unit 12d, Integrates Integrated Spectrum with First Integrated Spectrum for each Distance, and Generates Second Integrated Spectrum

S10

SN Ratio Calculating Unit 12f2 Calculates SN Ratio of Second Integrated Spectrum at each Distance

S11

YES — SN Ratio of Second Integrated Spectrum at that Distance ≥ First Threshold Value? — NO

S12 / S13

Doppler Wind Speed Calculating Unit 12h Determines Doppler Speed at that Distance. Integrated Spectrum Storage Unit 12d Initializes Integrated Spectrum for that Beam Direction and that Distance

Overwrite and Save Integrated Spectrum Calculated for that Beam Direction and that Distance by Second Spectrum Integrating Unit 12e in Integrated Spectrum Storage Unit 12d

S14

Control Unit 13 Sends Beam Switching Command Signal to Optical Switch 8

## FIG. 19A

First Improvement Probability $\gamma_F$

Tc=0.8 Tc=1.0 Tc=1.2

Number of Times of Generating First Integrated Spectrum [Times]

## FIG. 19B

Second Improvement Probability $\varepsilon_F$

Tc=1.2 Tc=1.0 Tc=0.8

Number of Times of Generating First Integrated Spectrum [Times]

## FIG. 19C

Unfinished Calculation Probability $\zeta_F$

Tc=1.2 Tc=1.0 Tc=0.8

Number of Times of Generating First Integrated Spectrum [Times]

## FIG. 20

$\varepsilon_{sumF}$ $\gamma_{sumF}$ $\zeta_{4F}$

Tc [sec.]

# FIG. 21

# FIG. 22

Number of Times of Generating First Integrated Spectrum [Times]

# FIG. 23

# FIG. 24

# FIG. 25

```
                    ( START )                              SOF
```

**Initialize Spectrum Data of each Beam Direction and each Distance Stored in Integrated Spectrum Storage Unit 12d to Zero. Set Determination Target Wind Speed Measurement Section for every Beam Direction** — S1

**Select One of Transmission and Reception Optical Systems 9a, 9b, 9c, and 9d Corresponding to Beam Direction in Which Transmission and Reception are Performed** — S2

**Send Pulse Modulation Signal from Control Unit 13 to Pulse Modulator 5 and Send Trigger Signal Synchronized with this Signal to Time Gating Unit 12a** — S3

**Execute Optical Transmission and Reception Operations in the Selected Beam Direction** — S4

**Perform A/D-Conversion on Reception Signal and Divide Reception Signal by Time Gate Corresponding to Position on Time Axis which Corresponds to each Distance** — S5

**Calculate Spectrum of Reception Signal of each Distance by Performing Fourier Transform on each of Reception Signals Divided by Time Gate** — S6

**First Spectrum Integrating Unit 12c Integrates Spectra Calculated by Spectrum Calculating Unit 12b for each Measurement Distance Range and Generates First Integrated Spectrum**

NO — **Is Spectrum Calculated Predetermined Number of Times in the Selected Beam Direction ?** — S7
YES

**SN Ratio Calculating Unit 12f2 Calculates SN Ratio of First Integrated Spectrum at each Distance** — S15

**Second SN Ratio Determining Unit 12k Determines Whether or Not the Number of Distance Ranges, Which are Included in Determination Target Wind Speed Measurement Section and Have SN Ratio of First Integrated Spectrum Greater than or Equal to Second Threshold Value, Is Greater than or Equal to Lower Limit Number and Stores Result in NDsum.** — S17

YES — **SN Ratio of First Integrated Spectrum at that Distance ≥ First Threshold Value?** — S16
NO

NO — **NDsum = YES ?** — S18
YES

NO — **SN Ratio of First Integrated Spectrum at that Distance ≥ Third Threshold Value?** — S19
YES — S8

**First Integrated Spectrum Integrated by First Spectrum Integrating Unit 12c is Sent to Second Spectrum Integrating Unit 12e. Initialize First Spectrum Integrating Unit 12c to Zero** — S9

**Second Spectrum Integrating Unit 12e Reads Integrated Spectrum in the Selected Beam Direction from Integrated Spectrum Storage Unit 12d, Integrates Integrated Spectrum with First Integrated Spectrum for each Distance, and Generates Second Integrated Spectrum** — S10

**SN Ratio Calculating Unit 12f2 Calculates SN Ratio of Second Integrated Spectrum at each Distance** — S11

YES — **SN Ratio of Second Integrated Spectrum at that Distance ≥ First Threshold Value?** — NO — S13
S12

**Doppler Wind Speed Calculating Unit 12h Determines Doppler Speed at that Distance. Integrated Spectrum Storage Unit 12d Initializes Integrated Spectrum for that Beam Direction and that Distance**

**Overwrite and Save Integrated Spectrum Calculated for that Beam Direction and that Distance by Second Spectrum Integrating Unit 12e in Integrated Spectrum Storage Unit 12d** — S14

**Control Unit 13 Sends Beam Switching Command Signal to Optical Switch 8**

# FIG. 26

# FIG. 27

```
                        ( START )                                    S0

  ┌──────────────────────────────────────────────────────────────────┐
  │ Initialize Spectrum Data of each Beam Direction and each Distance │
  │ Stored in Integrated Spectrum Storage Unit 12d to Zero            │ S1
  └──────────────────────────────────────────────────────────────────┘
  ┌──────────────────────────────────────────────────────────────────┐
  │ Select One of Transmission and Reception Optical Systems 9a, 9b,  │
  │ 9c, and 9d Corresponding to Beam Direction in Which Transmission  │
  │ and Reception are Performed                                       │ S2
  └──────────────────────────────────────────────────────────────────┘
  ┌──────────────────────────────────────────────────────────────────┐
  │ Send Pulse Modulation Signal from Control Unit 13 to Pulse        │
  │ Modulator 5 and Send Trigger Signal Synchronized with this Signal │
  │ to Time Gating Unit 12a                                           │ S3
  └──────────────────────────────────────────────────────────────────┘
  ┌──────────────────────────────────────────────────────────────────┐
  │ Execute Optical Transmission and Reception Operations in the      │
  │ Selected Beam Direction                                           │ S4
  └──────────────────────────────────────────────────────────────────┘
  ┌──────────────────────────────────────────────────────────────────┐
  │ Perform A/D-Conversion on Reception Signal and Divide Reception   │
  │ Signal by Time Gate Corresponding to Position on Time Axis which  │
  │ Corresponds to each Distance                                      │ S5
  └──────────────────────────────────────────────────────────────────┘
  ┌──────────────────────────────────────────────────────────────────┐
  │ Calculate Spectrum of Reception Signal of each Distance by        │
  │ Performing Fourier Transform on each of Reception Signals Divided │
  │ by Time Gate                                                      │ S6
  └──────────────────────────────────────────────────────────────────┘
  ┌──────────────────────────────────────────────────────────────────┐
  │ First Spectrum Integrating Unit 12c Integrates Spectra Calculated │
  │ by Spectrum Calculating Unit 12b for each Measurement Distance    │
  │ Range and Generates First Integrated Spectrum                     │ S7
  └──────────────────────────────────────────────────────────────────┘
```

Is Spectrum Calculated Predetermined Number of Times in the Selected Beam Direction? — NO / YES  — S8

First Integrated Spectrum Integrated by First Spectrum Integrating Unit 12c is Sent to Second Spectrum Integrating Unit 12e. Initialize First Spectrum Integrating Unit 12c to Zero — S9

Second Spectrum Integrating Unit 12e Reads Integrated Spectrum in the Selected Beam Direction from Integrated Spectrum Storage Unit 12d, Integrates Integrated Spectrum with First Integrated Spectrum for each Distance, and Generates Second Integrated Spectrum — S10

SN Ratio Calculating Unit 12f Calculates SN Ratio of Second Integrated Spectrum at each Distance — S11

SN Ratio of Second Integrated Spectrum at that Distance ≥ First Threshold Value? — YES / NO — S20

SN Ratio of Second Integrated Spectrum at that Distance ≥ Stored Spectrum SN Ratio? — NO / YES

**S12H** Doppler Wind Speed Calculating Unit 12h Determines Doppler Speed at that Distance. Integrated Spectrum Storage Unit 12d Initializes Integrated Spectrum and SN Ratio for that Beam Direction and that Distance

**S13H** Overwrite and Save Second Integrated Spectrum and SN Ratio for that Beam Direction and that Distance in Integrated Spectrum Storage Unit 12d

S14 Control Unit 13 Sends Beam Switching Command Signal to Optical Switch 8

# FIG. 28

EP 3 955 028 A1

# FIG. 29

START — S0

Initialize Spectrum Data of each Beam Direction and each Distance Stored in Integrated Spectrum Storage Unit 12d to Zero — S1

Select One of Transmission and Reception Optical Systems 9a, 9b, 9c, and 9d Corresponding to Beam Direction in Which Transmission and Reception are Performed — S2

Send Pulse Modulation Signal from Control Unit 13 to Pulse Modulator 5 and Send Trigger Signal Synchronized with this Signal to Time Gating Unit 12a — S3

Execute Optical Transmission and Reception Operations in the Selected Beam Direction — S4

Perform A/D-Conversion on Reception Signal and Divide Reception Signal by Time Gate Corresponding to Position on Time Axis which Corresponds to each Distance — S5

Calculate Spectrum of Reception Signal of each Distance by Performing Fourier Transform on each of Reception Signals Divided by Time Gate — S6

First Spectrum Integrating Unit 12c Integrates Spectra Calculated by Spectrum Calculating Unit 12b for each Measurement Distance Range and Generates First Integrated Spectrum

NO ← Is Spectrum Calculated Predetermined Number of Times in the Selected Beam Direction ? — S7

YES

SN Ratio Calculating Unit 12f2 Calculates SN Ratio of First Integrated Spectrum at each Distance — S15

YES ← SN Ratio of First Integrated Spectrum at that Distance ≥ First Threshold Value? — S16

NO

NO ← SN Ratio of First Integrated Spectrum at that Distance ≥ Second Threshold Value? — S18J

YES

First Integrated Spectrum Integrated by First Spectrum Integrating Unit 12c is Sent to Second Spectrum Integrating Unit 12e. Initialize First Spectrum Integrating Unit 12c to Zero — S8

Second Spectrum Integrating Unit 12e Reads Integrated Spectrum in the Selected Beam Direction from Integrated Spectrum Storage Unit 12d, Integrates Integrated Spectrum with First Integrated Spectrum for each Distance, and Generates Second Integrated Spectrum — S9

SN Ratio Calculating Unit 12f2 Calculates SN Ratio of Second Integrated Spectrum at each Distance — S10

YES ← SN Ratio of Second Integrated Spectrum at that Distance ≥ First Threshold Value? → NO — S11 / S13

S12

Doppler Wind Speed Calculating Unit 12h Determines Doppler Speed at that Distance. Integrated Spectrum Storage Unit 12d Initializes Integrated Spectrum for that Beam Direction and that Distance

Overwrite and Save Integrated Spectrum Calculated for that Beam Direction and that Distance by Second Spectrum Integrating Unit 12e in Integrated Spectrum Storage Unit 12d

Control Unit 13 Sends Beam Switching Command Signal to Optical Switch 8 — S14

81

FIG. 30

# FIG. 31

```
                        ( START )                              S0

    Initialize Spectrum Data of each Beam Direction and each Distance Stored in
              Integrated Spectrum Storage Unit 12d to Zero                       S1

      Select One of Transmission and Reception Optical Systems 9a, 9b, 9c, and 9d Corresponding to
                Beam Direction in Which Transmission and Reception are Performed              S2

      Send Pulse Modulation Signal from Control Unit 13 to Pulse Modulator 5 and
      Send Trigger Signal Synchronized with this Signal to Time Gating Unit 12a     S3

     Execute Optical Transmission and Reception Operations in the Selected Beam Direction    S4

    Perform A/D-Conversion on Reception Signal and Divide Reception Signal by Time Gate
      Corresponding to Position on Time Axis which Corresponds to each Distance        S5

                 Calculate Spectrum of Reception Signal of each Distance by
      Performing Fourier Transform on each of Reception Signals Divided by Time Gate     S6

    First Spectrum Integrating Unit 12c Integrates Spectra Calculated by Spectrum Calculating Unit 12b
           for each Measurement Distance Range and Generates First Integrated Spectrum
```

```
                                        Is Spectrum              S7
    NO              Calculate Predetermined Number of Times in the Selected
                                      Beam Direction ?
                                          YES                     S15

    SN Ratio Calculating Unit 12f2 Calculates SN Ratio of First Integrated Spectrum at each Distance    S8

           First Integrated Spectrum Integrated by First Spectrum Integrating Unit 12c is Sent to
    Second Spectrum Integrating Unit 12e. Initialize First Spectrum Integrating Unit 12c to Zero    S9

         Second Spectrum Integrating Unit 12e Reads Integrated Spectrum in the Selected Beam
           Direction from Integrated Spectrum Storage Unit 12d, Integrates Integrated Spectrum
    with First Integrated Spectrum for each Distance, and Generates Second Integrated Spectrum    S10

    SN Ratio Calculating Unit 12f2 Calculates SN Ratio of Second Integrated Spectrum at each Distance    S21

             Set One of First Integrated Spectrum and Second Integrated Spectrum
               that Has Higher SN Ratio as Higher SN Ratio Integrated Spectrum
```

```
                                                                S11K
    YES         SN Ratio of Higher SN Ratio Integrated Spectrum at that Distance ≥    NO
                             First Threshold Value?
         S12K                                                      S13K

      Doppler Wind Speed Calculating Unit 12h         Overwrite and Save Higher SN Ratio
      Determines Doppler Speed at that Distance.      Integrated Spectrum and SN Ratio for
    Integrated Spectrum Storage Unit 12d2 Initializes   that Beam Direction and that Distance in
       Integrated Spectrum and SN Ratio for         Integrated Spectrum Storage Unit 12d2
       that Beam Direction and that Distance                              S14

       Control Unit 13 Sends Beam Switching Command Signal to Optical Switch 8
```

# FIG. 32

# FIG. 33

# FIG. 34

Light Source 3 → Optical Divider 4 → Pulse Modulator 5 → Optical Amplifier 6 → Optical Circulator 7 → Optical Switch 8

Modulation Signal

Optical Multiplexer 10

Optical Receiver 11

Transmission and Reception Optical System 9a

Transmission and Reception Optical System 9b

Transmission and Reception Optical System 9c

Transmission and Reception Optical System 9d

Signal Processing Unit 12L

Trigger Signal
Initialization Signal, Update Signal

Control Unit 13

Beam Selection Signal

Time Gating Unit 12a

Spectrum Calculating Unit 12b

First Spectrum Integrating Unit 12c

Stored Integrated Spectrum Correcting Unit 12jH

Second Spectrum Integrating Unit

*1

SN Ratio Calculating Unit 12f2

Integrated Spectrum Storage Unit 12d2

SN Ratio Determining Unit 12e

Beam Switching Command

*1

Third SN Ratio Determining Unit 12nL

Doppler Wind Speed Calculating Unit 12gK

12h

Doppler Wind Speed

EP 3 955 028 A1

# FIG. 35

```
                    ( START )                                    S0
┌──────────────────────────────────────────────────────────────┐
│  Initialize Spectrum Data of each Beam Direction and each      │
│  Distance Stored in Integrated Spectrum Storage Unit 12d to Zero│  S1
└──────────────────────────────────────────────────────────────┘
┌──────────────────────────────────────────────────────────────┐
│ Select One of Transmission and Reception Optical Systems 9a,    │
│ 9b, 9c, and 9d Corresponding to Beam Direction in Which         │
│ Transmission and Reception are Performed                        │  S2
└──────────────────────────────────────────────────────────────┘
┌──────────────────────────────────────────────────────────────┐
│  Send Pulse Modulation Signal from Control Unit 13 to Pulse     │
│  Modulator 5 and Send Trigger Signal Synchronized with this     │
│  Signal to Time Gating Unit 12a                                 │  S3
└──────────────────────────────────────────────────────────────┘
┌──────────────────────────────────────────────────────────────┐
│  Execute Optical Transmission and Reception Operations in the   │
│  Selected Beam Direction                                        │  S4
└──────────────────────────────────────────────────────────────┘
┌──────────────────────────────────────────────────────────────┐
│  Perform A/D-Conversion on Reception Signal and Divide          │
│  Reception Signal by Time Gate Corresponding to Position on     │
│  Time Axis which Corresponds to each Distance                   │  S5
└──────────────────────────────────────────────────────────────┘
┌──────────────────────────────────────────────────────────────┐
│  Calculate Spectrum of Reception Signal of each Distance by     │
│  Performing Fourier Transform on each of Reception Signals      │
│  Divided by Time Gate                                           │  S6
└──────────────────────────────────────────────────────────────┘
┌──────────────────────────────────────────────────────────────┐
│  First Spectrum Integrating Unit 12c Integrates Spectra         │
│  Calculated by Spectrum Calculating Unit 12b for each           │
│  Measurement Distance Range and Generates First Integrated      │
│  Spectrum                                                       │
└──────────────────────────────────────────────────────────────┘
```

Is Spectrum Calculated Predetermined Number of Times in the Selected Beam Direction ?  —  S7
NO / YES

S15 — SN Ratio Calculating Unit 12f2 Calculates SN Ratio of First Integrated Spectrum at each Distance

S8 — First Integrated Spectrum Integrated by First Spectrum Integrating Unit 12c is Sent to Second Spectrum Integrating Unit 12e. Initialize First Spectrum Integrating Unit 12c to Zero

S9 — Second Spectrum Integrating Unit 12e Reads Integrated Spectrum in the Selected Beam Direction from Integrated Spectrum Storage Unit 12d, Integrates Integrated Spectrum with First Integrated Spectrum for each Distance, and Generates Second Integrated Spectrum

S10 — SN Ratio Calculating Unit 12f2 Calculates SN Ratio of Second Integrated Spectrum at each Distance

S21 — Set One of First Integrated Spectrum and Second Integrated Spectrum that Has Higher SN Ratio as Higher SN Ratio Integrated Spectrum

S11K — SN Ratio of Higher SN Ratio Integrated Spectrum at that Distance ≥ First Threshold Value?
YES / NO

S20L — SN Ratio of Higher SN Ratio Integrated Spectrum at that Distance ≥ Stored Spectrum SN Ratio?
YES / NO

S12K — Doppler Wind Speed Calculating Unit 12h Determines Doppler Speed at that Distance. Integrated Spectrum Storage Unit 12d2 Initializes Integrated Spectrum and SN Ratio for that Beam Direction and that Distance

S13K — Overwrite and Save Higher SN Ratio Integrated Spectrum and SN Ratio for that Beam Direction and that Distance in Integrated Spectrum Storage Unit 12d2

S14 — Control Unit 13 Sends Beam Switching Command Signal to Optical Switch 8

## INTERNATIONAL SEARCH REPORT

International application No.

PCT/JP2020/002798

### A. CLASSIFICATION OF SUBJECT MATTER
Int.Cl. G01S17/95(2006.01)i
FI: G01S17/95

According to International Patent Classification (IPC) or to both national classification and IPC

### B. FIELDS SEARCHED

Minimum documentation searched (classification system followed by classification symbols)
Int.Cl. G01S7/48-7/51, 17/00-17/95

Documentation searched other than minimum documentation to the extent that such documents are included in the fields searched
Published examined utility model applications of Japan        1922-1996
Published unexamined utility model applications of Japan      1971-2020
Registered utility model specifications of Japan              1996-2020
Published registered utility model applications of Japan      1994-2020

Electronic data base consulted during the international search (name of data base and, where practicable, search terms used)
Google Scholar

### C. DOCUMENTS CONSIDERED TO BE RELEVANT

| Category* | Citation of document, with indication, where appropriate, of the relevant passages | Relevant to claim No. |
|---|---|---|
| A | WO 2017/130315 A1 (MITSUBISHI ELECTRIC CORPORATION) 03.08.2017 (2017-08-03), entire text | 1-23 |
| A | WO 2014/041852 A1 (MITSUBISHI ELECTRIC CORPORATION) 20.03.2014 (2014-03-20), paragraphs [0076]-[0087], fig. 12, 13 | 1-23 |
| A | WO 2014/024508 A1 (MITSUBISHI ELECTRIC CORPORATION) 13.02.2014 (2014-02-13), entire text | 1-23 |
| A | JP 2012-63236 A (RICOH CO., LTD.) 29.03.2012 (2012-03-29), entire text | 1-23 |
| A | JP 2006-284260 A (MITSUBISHI ELECTRIC CORPORATION) 19.10.2006 (2006-10-19), entire text | 1-23 |

☒ Further documents are listed in the continuation of Box C.   ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03.04.2020 | 14.04.2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2020/002798

C (Continuation).   DOCUMENTS CONSIDERED TO BE RELEVANT

| Category* | Citation of document, with indication, where appropriate, of the relevant passages | Relevant to claim No. |
|---|---|---|
| A | 梶山裕，藤井康宏，酒巻洋，小竹諭季，「風況観測用ライダ "DIABREZZA"」，三菱電機技報，2015.03，vol. 89, no. 3, pp. 32(182)-36(186), entire text, (KAJIYAMA, Yutaka, KOTAKE, Nobuki, Mitsubishi Denki Giho), non-official translation (FUJII, Yasuhiro, SAKAMAKI, Hiroshi, Lidar "DIABREZZA" for wind observation) | 1-23 |
| A | 高林幹夫，梶山裕，崎村武司，小竹諭季，柳澤隆行，「風力発電向けナセル搭載ドップラーライダ試作機」，三菱電機技報，2019.02, vol. 93, no. 2, pp. 11(113)-14(116), entire text, (TAKABAYASHI, Mikio, KAJIYAMA, Yutaka, SAKIMURA, Takeshi, KOTAKE, Nobuki, YANAGISAWA, Takayuki, Nacelle mounted doppler lidar prototype for wind energy, Mitsubishi Denki Giho) | 1-23 |
| A | KAMEYAMA, S., ANDO, T., ASAKA, K., HIRANO, Y., WADAKA, S., "Compact all-fiber pulsed coherent Doppler lidar system for wind sensing", Applied Optics, 2007.04.10, vol. 46, no. 11, pp. 1953-1962, DOI:10.1364/AO.46.001953, entire text | 1-23 |
| A | KOTAKE, Nobuki, WATANABE, Yojiro, HARAGUCHI, Eisuke, KAMEYAMA, Shumpei, ANDO, Toshiyuki, YANAGISAWA, Takayuki, "Coherent Doppler LIDAR system switching the LOS direction by wavelength of laser", [online], 19th Coherent Laser Radar Conference, 2018.06.18, [retrieved on 2020.04.03], Internet <URL:https://clrccires.colorado.edu/data/paper/P15.pdf>, entire text | 1-23 |
| P, A | WO 2019/130472 A1 (MITSUBISHI ELECTRIC CORPORATION) 04.07.2019 (2019-07-04), paragraphs [0073]-[0104], [0107], fig. 12-16 | 1-23 |

Form PCT/ISA/210 (second sheet) (January 2015)

INTERNATIONAL SEARCH REPORT
Information on patent family members

| | International application No. |
| --- | --- |
| | PCT/JP2020/002798 |

```
WO 2017/130315 A1  03.08.2017    US 2019/0018144 A1
                                 EP 3410155 A1
                                 CN 109073755 A
                                 JP 6301040 B2

WO 2014/041852 A1  20.03.2014    US 2015/0185328 A1
                                 paragraphs [0185]-[0211], fig. 12, 13
                                 EP 2896972 A1
                                 CN 104603636 A
                                 JP 5984944 B2

WO 2014/024508 A1  13.02.2014    US 2015/0146191 A1
                                 EP 2884306 A1
                                 CN 104541181 A

JP 2012-63236 A    29.03.2012    (Family: none)

JP 2006-284260 A   19.10.2006    (Family: none)

WO 2019/130472 A1  04.07.2019    (Family: none)
```

Form PCT/ISA/210 (patent family annex) (January 2015)

**EP 3 955 028 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2884306 B1
- EP 1589678 B1
- WO 2017130315 A

### Non-patent literature cited in the description

- **T. ANDO et al.** All-fiber coherent Doppler technologies at Mitsubishi Electric Corporation. *IOP Conference Series: Earth and Environmental Science,* 2008, vol. 1
- **D. SCHLIPF et al.** Field Testing of Feedforward Collective Pitch Control on the CART2 Using a Nacelle-Based Lidar Scanner. *Journal of Physics Science Series,* 2014, vol. 555, 012090
- IEC 61400-12-1. 2017